# EUROPEAN PATENT APPLICATION

(11) **EP 4 726 520 A1**
(43) Date of publication of application: **15.04.2026**
(21) Application number: 24861660.9
(22) Date of filing: 09.07.2024
(51) Int. Cl.: G06F 3/04845

(54) **WALLPAPER PROCESSING METHOD AND ELECTRONIC DEVICE**

(30) Priority: 08.09.2023 CN 202311164416
(71) Applicant: Huawei Technologies Co., Ltd., Shenzhen, Guangdong 518129 (CN)
(72) Inventor: ZHANG, Leshao, Shenzhen, Guangdong 518129 (CN); BIAN, Sucheng, Shenzhen, Guangdong 518129 (CN); DING, Ning, Shenzhen, Guangdong 518129 (CN)
(74) Representative: Gill Jennings & Every LLP
(86) International application number: PCT/CN2024/104445
(87) International publication number: WO 2025/050815

(57) **Abstract**

Embodiments of this application provide a wallpaper processing method and an electronic device, and relate to the field of terminal device technologies. The method includes: when a UI control is displayed on a lock screen interface, moving down at least a subject element in a wallpaper image on the lock screen interface, to ensure that the subject element displayed on the lock screen interface is not blocked by the UI control, to improve display effect of the subject element in the wallpaper image.

## Description

This application claims priority to Chinese Patent Application No. 202311164416.2, filed with the China National Intellectual Property Administration on September 8, 2023 and entitled "WALLPAPER PROCESSING METHOD AND ELECTRONIC DEVICE", which is incorporated herein by reference in its entirety.

### TECHNICAL FIELD

Embodiments of this application relate to the field of terminal device technologies, and in particular, to a wallpaper processing method and an electronic device.

### BACKGROUND

Currently, an electronic device supports setting a wallpaper on a lock screen interface. A user usually sets an image with a subject element (for example, a person, an animal, or a building) as a wallpaper image (also expressed as a lock screen wallpaper) on the lock screen interface, to expect to display the subject element on the lock screen interface in a highlighted manner.

However, the electronic device may display a user interface (User Interface, UI) control, for example, a notification message or a live video window, on the lock screen interface in a pop-up manner. The notification message is used as an example. The notification message displayed by the electronic device on the lock screen interface in the pop-up manner is usually displayed at a location that is on the lock screen interface and that is close to a center region, and the subject element in the lock screen wallpaper displayed on the lock screen interface is usually also at a location that is on the lock screen interface and that is close to the center region. Consequently, the pop-up notification message blocks a picture of the subject element in the lock screen wallpaper.

Therefore, in the conventional technology, a problem that a UI control (for example, a notification message or a live video window) dynamically popping up on a lock screen interface blocks a subject element in a lock screen wallpaper is common, affecting displaying of the subject element in the lock screen wallpaper.

### SUMMARY

To resolve the foregoing technical problem, this application provides a wallpaper processing method and an electronic device. In the method, when a UI control is displayed on a lock screen interface in a pop-up manner, at least a subject element in a wallpaper image on the lock screen interface may be moved down, to ensure that the subject element displayed on the lock screen interface is not blocked by the UI control, to improve display effect of the subject element in the wallpaper image.

According to a first aspect, an embodiment of this application provides a wallpaper processing method. The method includes: displaying a lock screen interface, where a wallpaper image is displayed on the lock screen interface, and the wallpaper image includes a subject element; and when a UI control is displayed on the lock screen interface, adjusting a target element in the wallpaper image, and displaying an adjusted wallpaper image on the lock screen interface, where the target element includes the subject element, and the subject element undergoes move-down adjustment in a height direction of the lock screen interface, to prevent the subject element in the adjusted wallpaper image from being blocked by the UI control.

The wallpaper image is also expressed as a lock screen wallpaper.

The subject element is an image element in the lock screen wallpaper, and the subject element is an image element that is in the lock screen wallpaper displayed on the lock screen interface and that is close to a center region of the lock screen interface.

In some embodiments, a location of the subject element in the lock screen wallpaper may not be a location closest to a center region of an entire image of the lock screen wallpaper. However, after the entire image is set as the lock screen wallpaper, the subject element is usually displayed in the center region of the lock screen interface.

In some embodiments, an electronic device may recognize the subject element through a neural network based on factors such as display locations and display areas of various image elements in the lock screen wallpaper.

In the solution of the first aspect, after the lock screen interface is displayed, all UI controls that the electronic device needs to display on the lock screen interface are UI controls (also expressed as dynamic UI controls in embodiments) that are limited in this application and that need to not block the subject element, for example, a message control, a live video window, or a service card.

In the solution of the first aspect, when the electronic device needs to display a dynamic UI control in this application on the lock screen interface, to prevent the dynamic UI control displayed on the lock screen interface from blocking the subject element in the lock screen wallpaper displayed on the lock screen interface, in this application, move-down adjustment may be performed on the subject element in the lock screen wallpaper in the height direction of the lock screen interface. In this way, a display location, on the lock screen interface, of the subject element that has undergone the move-down adjustment does not overlap a display location of the dynamic UI control on the lock screen interface, to avoid a problem that the dynamic UI control displayed in a pop-up manner blocks the subject element in the lock screen wallpaper.

Certainly, when the electronic device adjusts the target element in the lock screen wallpaper, the target element may not only include the subject element, but also include a background element, to similarly achieve effect that the subject element in the adjusted lock screen wallpaper is not blocked by the dynamic UI control displayed on the lock screen interface.

In some embodiments, for example, the target element may include a background element. In this case, a manner of adjusting the background element in the lock screen wallpaper by the electronic device may be at least one of the following: move-up adjustment or move-down adjustment in the height direction of the lock screen interface; move-left adjustment or move-right adjustment in a width direction of the lock screen interface; an adjustment manner of performing image extension on the background element in any direction, to fill a layer at which the background element of the lock screen wallpaper is located with more background elements; scaling adjustment on the background element; and the like. This is not limited herein.

In addition, quantities of subject elements and background elements in the lock screen wallpaper are not limited in this application either.

For example, the lock screen wallpaper may include a plurality of person elements. In this case, the plurality of person elements may serve as a whole subject element or a plurality of subject elements. In addition, the lock screen wallpaper may also include a plurality of background elements, for example, a sky background element and a mountain background element. This is not limited herein.

In addition, in this embodiment of this application, an adjustment policy used by the electronic device to adjust the target element in the lock screen wallpaper may be related to an attribute and a quantity of the UI control displayed on the lock screen interface; or may be a fixed adjustment policy, and is irrelevant to the UI control. This is not limited in this application.

For example, the electronic device may determine the adjustment policy for the target element based on at least one of the following parameters: a quantity of UI controls that currently need to be displayed on the lock screen interface, a control type of the UI control, a control height of the UI control, and the like. The adjustment policy may include at least one of the following: an adjustment object, to be specific, a specific image element that serves as a target element to be adjusted this time; an adjustment manner (for example, scaling or moving) for each adjustment object, and an adjustment amount (for example, a scaling multiple or a moving height) of the adjustment manner; and the like.

For another example, the electronic device may adjust the target element by using a fixed adjustment policy. For example, the fixed adjustment policy is moving down the subject element by a specified height in the height direction of the lock screen interface.

In addition, in the embodiment of the first aspect, during an adjustment process of the lock screen wallpaper, the subject element in the lock screen wallpaper undergoes move-down adjustment in the height direction of the lock screen interface. In this case, a moving direction of the move-down adjustment may be a direction parallel to the height direction, or may be a moving direction having an included angle (usually less than 45 degrees) with the height direction. This is not limited in this application, provided that it is ensured that the subject element undergoes move-down adjustment in a direction from the top (for example, a location close to a front-facing camera) of a display of the electronic device to the bottom (for example, a location close to a speaker) of the display.

In this embodiment of this application, when the electronic device displays the lock screen interface and the electronic device needs to further display the UI control on the lock screen interface, the electronic device in this application may adjust the target element in the wallpaper image, to prevent the UI control displayed on the lock screen interface from blocking the subject element in the wallpaper image displayed on the lock screen interface. The adjustment includes at least performing move-down adjustment on the subject element in the wallpaper image in the height direction of the lock screen interface. Therefore, when displayed on the lock screen interface, the subject element that has undergone the move-down adjustment may not be blocked by the UI control displayed on the lock screen interface in the pop-up manner. In this way, when the UI control is displayed on the lock screen interface in the pop-up manner, displaying of the subject element in the wallpaper image on the lock screen interface may not be affected, to ensure that the subject element in the wallpaper image on the lock screen interface is displayed in a highlighted manner.

According to the first aspect, the method may further include: displaying an adjustment process of the wallpaper image on the lock screen interface.

In this embodiment, the electronic device may not only display the adjusted wallpaper image, but also display the adjustment process of the wallpaper image on the lock screen interface. For example, the electronic device may play the adjustment process of the wallpaper image on the lock screen interface for specific duration through motion effect.

For example, an adjustment policy for the wallpaper image is: moving down the subject element from an original location by a height of five units in the height direction of the lock screen interface. For example, a height of each unit is two pixels. The original location is a location of the subject element on the lock screen interface during adjustment of the lock screen wallpaper this time.

In this case, when adjusting the subject element in the wallpaper image, the electronic device may move down a subject image that is in the wallpaper image and that includes the subject element from the original location at a specific speed, to complete move-down adjustment by a height of five units within first duration.

For example, if duration of displaying the adjustment process by the electronic device is 5 seconds (s), the electronic device may play a move-down process of the subject element on the lock screen interface. Duration of the move-down process is 5s, and a speed is moving down by a height of one unit per second. In this way, the electronic device may display, on the lock screen interface through motion effect, a process of moving down the subject element in the wallpaper image, to present effect of moving down the subject element at a uniform speed. Certainly, a move-down speed is not limited to the uniform speed.

Herein, adjusting the subject element is only used as an example to describe an implementation of displaying, by the electronic device, the adjustment process of the wallpaper image on the lock screen interface. When the target element further includes another image element, a principle of an implementation is the same.

For example, the adjustment policy for the target element this time is: scaling up the subject element to five times an original size, scaling down the background element to 1/5 of an original size, and moving down the entire wallpaper image from an original location by a height of five units.

In this case, in this embodiment, the electronic device may display an adjustment process of the target element on the lock screen interface, so that a dynamic adjustment process of gradually scaling up the subject element until the subject element is scaled up to five times the original size, gradually scaling down the background element until the background element is scaled down to 1/5 of the original size, and gradually moving down the lock screen wallpaper from the original location until the lock screen wallpaper is moved down by the height of five units may be displayed on the lock screen interface.

The "original size" herein is a size that a corresponding object in the lock screen wallpaper displayed on the lock screen interface has before the lock screen wallpaper is adjusted this time, that is, a size that the corresponding object has before the adjustment this time.

In this embodiment of this application, the electronic device may display the adjustment process of the wallpaper image on the lock screen interface, so that the adjustment process of the target element in the wallpaper image can be dynamically played on the lock screen interface.

According to any one of the first aspect or the foregoing implementations of the first aspect, the adjustment policy for the wallpaper image is related to at least one of the following: a control type of the UI control, a quantity of UI controls, and a control height of the UI control.

Both the quantity of UI controls and the control height of the UI control are positively correlated with an adjustment amount of the target element.

For example, a larger quantity of UI controls to be displayed on the lock screen interface this time indicates a larger adjustment amount (for example, a higher moving height or a larger scaling multiple) of the target element.

In addition, when the quantity of UI controls is the same and for example, a card height of the service card is greater than a control height of the message control, in comparison with a scenario in which one message control is displayed on the lock screen interface, when one service card is displayed on the lock screen interface, an adjustment amount of the subject element in the lock screen wallpaper is larger. That is, a larger control height indicates a larger adjustment amount of the target element.

In addition, the control type may be related to at least one of the following: an adjustment object (a specific image element that serves as the target element) in the adjustment policy, an adjustment manner for the adjustment object, and the like.

For example, when the UI control is the message control, the adjustment policy is: moving down the entire wallpaper image, and during the move-down, performing image extension and filling upward and outward in a height direction of the wallpaper image. In this way, when the moved-down wallpaper image is displayed on the lock screen interface, no blank region exists at a location that is on the wallpaper image and that is close to the top of a screen.

For another example, when the UI control is the live video window, the adjustment policy is: scaling up the subject, scaling down the background, and moving down the entire wallpaper by a same height.

In this way, when different types of UI controls are displayed on the lock screen interface, the lock screen wallpaper may be adjusted according to different adjustment policies, to present different adjustment effect of the lock screen wallpaper. The adjustment policy can match the control type of the UI control displayed on the lock screen interface this time.

In this embodiment of this application, the electronic device may determine the adjustment policy for the lock screen wallpaper based on at least one of the control type, the control quantity, and the control height of the UI control to be displayed on the lock screen interface this time, to flexibly determine a specific image element that is in the lock screen wallpaper and that is to be adjusted as the target element this time, an adjustment manner and an adjustment amount of each image element, and the like. In this way, adjustment of the lock screen wallpaper can flexibly match the UI control to be currently displayed on the lock screen interface, to ensure that the UI control does not block the subject element in the adjusted lock screen wallpaper when displayed on the lock screen interface, and avoid a problem that the subject element is partially blocked when a specific type of UI control is displayed or a large quantity of UI controls are displayed during adjustment according to a unified wallpaper adjustment policy.

According to any one of the first aspect or the foregoing implementations of the first aspect, adjusting the target element in the wallpaper image includes: scaling the subject element in the wallpaper image.

For example, the electronic device performs an operation of scaling up and moving down the subject element. In this way, by scaling up and moving down the subject element, the electronic device can ensure that the scaled-up subject element is not blocked by the UI control displayed on the lock screen interface this time. In addition, in this implementation, the quantity of UI controls displayed on the lock screen interface may be further presented. For example, a larger quantity of notification messages indicates a larger subject element in the lock screen wallpaper, to present visual effect that the subject element is closer to a user.

Alternatively, the electronic device performs an operation of scaling down and moving down the subject element. With displaying of the UI control on the lock screen interface and processing of scaling down the subject element and moving down the subject element, the scale-down and the move-down of the subject element may present visual effect that the subject element moves away from a user. Because the subject element is scaled down and moved down, a processed subject element is not blocked by the displayed UI control when displayed on the lock screen interface.

According to any one of the first aspect or the foregoing implementations of the first aspect, the wallpaper image further includes a first background element, the target element includes the first background element, and adjustment policies for the subject element and the first background element are different.

For example, the subject element and the first background element may differ in at least one of an adjustment manner and an adjustment amount.

The first background element may be all background elements or a part of background elements in the wallpaper image. This is not limited herein.

In this embodiment of this application, the subject element and the first background element are adjusted according to different adjustment policies. For example, when the electronic device may display the adjustment process of the wallpaper image, a change in the subject element may differ from a change in the first background element during the adjustment process, to enable the user to more easily recognize the change in the subject element on the lock screen interface, and improve diversity of changes in the lock screen wallpaper.

In addition, in some embodiments, respective adjustment policies for different subject elements may alternatively be the same or different, and respective adjustment policies for different background elements may alternatively be the same or different.

According to any one of the first aspect or the foregoing implementations of the first aspect, adjusting the target element in the wallpaper image further includes: scaling the first background element in the wallpaper image; and/or performing move-down adjustment on the first background element in the wallpaper image in the height direction of the lock screen interface.

For example, when the electronic device displays the UI control on the lock screen interface, the first background element (for example, all the background elements) in the lock screen wallpaper may be gradually scaled down to a corresponding multiple, to present visual effect that the background element gradually moves away from the user.

For another example, when the electronic device displays the UI control on the lock screen interface, the first background element (for example, all the background elements) in the lock screen wallpaper may be gradually scaled up to a corresponding multiple, to present visual effect that the background element gradually approaches the user.

For still another example, when the electronic device displays the UI control on the lock screen interface, both the first background element and the subject element in the lock screen wallpaper are gradually moved down, to present effect that the UI control displayed on the lock screen interface pushes down the first background element and the subject element in the lock screen wallpaper.

In an example, adjusting, by the electronic device, the target element in the wallpaper image may include an operation of scaling up the subject element, scaling down all the background elements, and moving down both the subject element and the background element. In this way, when the electronic device displays the UI control on the lock screen interface, the lock screen wallpaper may present visual effect of Hitchcock zooming: The subject element is gradually scaled up, the background element is gradually scaled down, and both the subject element and the background element are moved down.

In another example, adjusting, by the electronic device, the target element in the wallpaper image may include an operation of scaling down the subject element, scaling up all the background elements, and moving down both the subject element and the background element. In this way, when the electronic device displays the UI control on the lock screen interface, the lock screen wallpaper may present visual effect of Hitchcock reverse zooming: The subject element is gradually scaled down to a corresponding multiple, the background element is gradually scaled up to a corresponding multiple, and both the subject element and the background element are moved down.

In this embodiment of this application, when the UI control is displayed on the lock screen interface, the electronic device may not only perform move-down processing on the subject element in the lock screen wallpaper, but also optionally perform scaling processing on the subject element. In addition, the electronic device may further perform move-down processing and/or scaling processing on the background element in the lock screen wallpaper, to improve diversity of changes in the lock screen wallpaper while ensuring that the UI control does not block the subject element.

According to any one of the first aspect or the foregoing implementations of the first aspect, a first move-down height for performing move-down adjustment on the subject element is the same as a second move-down height for performing move-down adjustment on the first background element.

In this embodiment, the subject element and the first background element may be moved down by a same height, for example, the entire lock screen wallpaper is moved down, to present effect of Hitchcock zooming during adjustment of the lock screen wallpaper.

According to any one of the first aspect or the foregoing implementations of the first aspect, a first move-down height for performing move-down adjustment on the subject element is different from a second move-down height for performing move-down adjustment on the first background element.

In this way, the electronic device moves down the subject element and the first background element by different heights, to implement movement of the subject element and the background element at different layers. When the electronic device displays the adjustment process, the lock screen wallpaper may produce effect similar to a three-dimensional animation.

According to any one of the first aspect or the foregoing implementations of the first aspect, a height difference between the first move-down height and the second move-down height is positively correlated with a difference between depth information that is in the wallpaper image and that corresponds to the subject element and depth information that is in the wallpaper image and that corresponds to the first background element.

For example, a larger depth-of-field difference between the subject element and the first background element indicates a larger height difference between the two elements during the move-down. For example, the background element is a sky element, and the sky is infinitely away from the subject element (for example, a person). In this case, the electronic device may control the subject element to move down by a specific height, and the background element is not moved down, in other words, a move-down height is 0.

Similarly, a smaller depth-of-field difference indicates a smaller height difference. For example, if a picture of the lock screen wallpaper is a picture in which a person stands against a wall, the subject element in the lock screen wallpaper is the person, and the background element is the wall. Because the person stands against the wall, a depth-of-field difference between the person and the wall is quite small. In this way, a mobile phone may control a subject image including the person and a background image including the wall to move down by similar heights, so that a height difference between the person and the wall is quite small.

In this way, in this embodiment of this application, move-down adjustment of different heights may be performed on the subject element and the background element based on the depth-of-field difference between the two elements, so that the height difference between the two elements during the move-down can match the depth-of-field difference.

According to any one of the first aspect or the foregoing implementations of the first aspect, the wallpaper image further includes a second background element of a preset type, the second background element is pre-extended in the wallpaper image to a background element that is able to fill a size of the lock screen interface, and the target element is different from the second background element.

For example, the second background element of the preset type may be background elements whose colors are close and whose distribution in the wallpaper image has specific extensibility (for example, extending from a region near an image center to an image edge), for example, any one of a sky element, a grassland element, a sea element, and a desert element.

In this embodiment, during adjustment of the lock screen wallpaper, the target element to be adjusted does not include the second background element. To be specific, the second background element is not adjusted, and only the target element (for example, the subject element, or the subject element and the first background element) is adjusted. In this case, to avoid a blank region (including any image pixel) between an adjusted target element and the second background element, the second background element may undergo image extension in advance. For example, the second background element is the sky element. In this way, the extended sky element can fill the size of the lock screen interface (for example, a size of the display). When filling effect is that only an image including the sky element is displayed on the lock screen interface, the sky element is displayed on the lock screen interface in full screen.

During adjustment of the lock screen wallpaper, the sky element remains unchanged, and the first background element and the subject element are adjusted. Therefore, if the sky element is not extended, no image element exists, in other words, a blank region (indicating that no image element belonging to the wallpaper image exists) exists, between the sky element and another element (for example, the first background element and the subject element) after the lock screen wallpaper is adjusted. In this way, the second background element undergoes image extension in advance when set as the lock screen wallpaper. After the wallpaper is adjusted, a problem that no image exists between image elements does not exist in the displayed wallpaper, and continuity of an image picture of the lock screen wallpaper can be ensured.

According to any one of the first aspect or the foregoing implementations of the first aspect, the wallpaper image further includes a second background element of a preset type, and the target element further includes the second background element. Adjusting the target element in the wallpaper image further includes: performing image extension on the second background element in the wallpaper image. In the adjusted wallpaper image displayed on the lock screen interface, no blank location exists between the second background element and an adjacent image element.

A difference from the foregoing implementation lies in: In this embodiment, when at least one of scaling adjustment, move-down adjustment, and the like is performed on the lock screen wallpaper, the foregoing adjustment is still not performed on the second background element. In this case, to ensure continuity between the second background element and another image element (for example, the first background element or the target element) in the adjusted lock screen wallpaper, image extension may be performed on the second background element during adjustment of the lock screen wallpaper. In this way, image extension effect of the second background element better matches a current wallpaper adjustment policy, and picture continuity between elements in the lock screen wallpaper is better.

According to any one of the first aspect or the foregoing implementations of the first aspect, when the adjustment process of the wallpaper image is displayed on the lock screen interface, the UI control blocks at least a part of the second background element, and the first background element blocks a partial region of the UI control.

For example, the second background element is the sky element, the first background element is a mountain element, and the subject element is a person element. A picture of the wallpaper image is as follows: The person stands in front of the mountain, and a background is the sky.

The adjustment policy for adjusting the lock screen wallpaper this time is as follows: The sky element remains unchanged, the mountain element is scaled down by a corresponding multiple and is moved down by a corresponding height, and the person element is scaled up by a corresponding multiple and is moved down by the height. In this case, a layer at which the UI control is located on the lock screen interface may be a layer between a layer at which the mountain element in the lock screen wallpaper is located and a layer at which the person element is located.

When the electronic device displays the UI element on the lock screen interface, the electronic device may adjust the lock screen wallpaper according to the foregoing adjustment policy. During the adjustment process, because the mountain element is gradually scaled down and moved down and the subject element is gradually scaled up and moved down, effect that the UI control is gradually exposed between the mountain element and the subject element may be presented.

During the adjustment process of the lock screen wallpaper, the lock screen interface may include a picture in which a partial region of the UI control displayed this time is blocked by the mountain element. However, in the adjusted lock screen wallpaper, the UI control is not blocked by the subject element or the background element.

According to any one of the first aspect or the foregoing implementations of the first aspect, a plurality of UI controls in a collapsed state are displayed on the lock screen interface, and displaying the UI control on the lock screen interface includes: in response to a received first user operation, displaying the plurality of UI controls on the lock screen interface in an expanded manner. The first user operation indicates to unlock a screen on which the lock screen interface is displayed, and indicates to display the plurality of UI controls in the expanded manner.

When the UI controls in the collapsed state are displayed on the lock screen interface, the wallpaper image may also be adjusted through the second step in the first aspect, so that the UI controls displayed on the lock screen interface in the collapsed state do not block the subject element either.

In addition, the second step in the first aspect may also be a process of responding to the received first user operation herein.

In addition, the plurality of UI controls may be displayed on the lock screen interface in the expanded manner one by one, or may be simultaneously expanded on the lock screen interface. This is not limited herein.

In this embodiment, in a scenario in which the user requests, through an operation, to expand the plurality of UI controls displayed on the lock screen interface in the collapsed state, the electronic device in this application may also adjust the target element in the wallpaper image when displaying the plurality of UI controls on the lock screen interface, and display an adjusted wallpaper image on the lock screen interface, so that the subject element in the adjusted wallpaper image is not blocked by the plurality of UI controls displayed in the expanded manner.

According to any one of the first aspect or the foregoing implementations of the first aspect, displaying the UI control on the lock screen interface includes: in response to a received notification message, displaying, on the lock screen interface, a UI control related to the notification message.

In this embodiment, in a scenario in which the UI control needs to be displayed on the lock screen interface, the electronic device may receive the notification message when the electronic device displays the lock screen interface. When displaying, on the lock screen interface, the UI control related to the notification message, the electronic device may adjust the lock screen wallpaper, so that the notification message displayed on the lock screen interface in a pop-up manner does not block the subject element in the adjusted lock screen wallpaper. The UI control related to the notification message may be a live video window or a message control. This is not limited herein.

According to any one of the first aspect or the foregoing implementations of the first aspect, there are a plurality of UI controls, and duration of the adjustment process is the same as duration of completely displaying the plurality of UI controls on the lock screen interface.

In any one of the foregoing embodiments, when the electronic device displays the UI control on the lock screen interface, there may be a plurality of UI controls. In this case, duration in which the electronic device displays the adjustment process of the lock screen wallpaper may be the same as duration of displaying all of the plurality of UI controls on the lock screen interface.

In this way, the electronic device can synchronously adjust the lock screen wallpaper during a process of displaying the plurality of UI controls (for example, notification messages) one by one. At a moment at which the adjustment of the lock screen wallpaper is completed and the adjusted lock screen wallpaper is displayed, all of the plurality of UI controls are also displayed on the lock screen interface. In this way, duration of motion effect of the wallpaper adjustment process can be the same as duration of motion effect of displaying the plurality of UI controls on the lock screen interface, to synchronously display the plurality of UI controls and adjust the lock screen wallpaper, to ensure that the subject element is not blocked by the plurality of displayed UI controls.

According to any one of the first aspect or the foregoing implementations of the first aspect, after displaying the adjusted wallpaper image on the lock screen interface, the method further includes: in response to a received second user operation for the UI control, restoring the wallpaper image displayed on the lock screen interface to an original display state, where the second user operation indicates to cancel displaying the UI control on the lock screen interface. The original display state is a display state of the wallpaper image on the lock screen interface before the UI control is displayed on the lock screen interface.

For example, the user indicates, through an operation, to delete a notification message (one or more) displayed on the lock screen interface. In this case, in response to the operation, the electronic device may not only no longer display the notification message on the lock screen interface, but also restore the target element in the lock screen wallpaper when deleting the notification message on the lock screen interface, to restore the target element to a display state that exists before the notification message is displayed on the lock screen interface.

A principle of this embodiment is the same as a principle of the process of displaying the UI control to adjust the lock screen wallpaper in the first aspect and related implementations. A difference lies in that an adjustment operation for the lock screen wallpaper herein is an operation opposite to the foregoing adjustment operation. For example, when the notification message is displayed, the subject element undergoes scale-up adjustment; and when the notification message is deleted, the subject element undergoes scale-down adjustment, with a same adjustment amount.

In this embodiment, when displaying of the UI control displayed on the lock screen interface is canceled, the electronic device may adjust the target element in the lock screen wallpaper to restore the target element to a display state that exists before the UI control is displayed. In this way, display effect of the lock screen wallpaper is restored to a state that exists before the UI control is displayed on the lock screen interface, to ensure consistency of a display state of the lock screen wallpaper.

According to any one of the first aspect or the foregoing implementations of the first aspect, the control type of the UI control includes at least one of the following: a message control, a live video window, and a service card.

In this embodiment of this application, when any one of UI controls, that is, the message control, the live video window, and the service card, is displayed on the lock screen interface, the target element in the lock screen wallpaper may be adjusted, so that the UI control displayed on the lock screen interface does not block the target element. Therefore, the adjustment scenario for the lock screen wallpaper in this application is widely applied.

In the foregoing implementations, when adjusting the target element, the electronic device may adjust an image that is in the lock screen wallpaper and that includes the target element.

For example, the target element includes the subject element, the first background element, and the second background element. In this case, the lock screen wallpaper may include a subject image to which the subject element belongs, a first background image to which the first background element belongs, and a second background image to which the second background element belongs. The three images are three images at layers from top to bottom on the lock screen interface, to serve as the lock screen wallpaper. The subject image is an image that is obtained from the wallpaper image through segmentation and that includes only the subject element (a region other than the subject element is a transparent region). The first background image is an image that is obtained from the wallpaper image through segmentation and that includes only the first background element. The second background image is an image that is obtained from the wallpaper image through segmentation and that includes only the second background element. Sizes of the three images are the same as a size of the lock screen wallpaper.

In embodiments of this application, during adjustment of a corresponding target element in the lock screen wallpaper, where the target element includes, for example, the subject element, the first background element, and the second background element, the subject image, the first background image, and the second background image may be adjusted, to implement adjustment of the foregoing three image elements.

According to a second aspect, an embodiment of this application provides an electronic device. The electronic device includes: a first display module, configured to display a lock screen interface, where a wallpaper image is displayed on the lock screen interface, and the wallpaper image includes a subject element; a second display module, configured to display a user interface UI control on the lock screen interface; an adjustment module, configured to adjust a target element in the wallpaper image when the second display module displays the UI control on the lock screen interface; and a third display module, configured to display an adjusted wallpaper image on the lock screen interface, where the target element includes the subject element, and the subject element undergoes move-down adjustment in a height direction of the lock screen interface, to prevent the subject element in the adjusted wallpaper image from being blocked by the UI control.

According to the second aspect, the electronic device further includes: a fourth display module, configured to display an adjustment process of the wallpaper image on the lock screen interface.

According to any one of the second aspect or the foregoing implementations of the second aspect, the adjustment policy for the wallpaper image is related to at least one of the following: a control type of the UI control, a quantity of UI controls, and a control height of the UI control.

According to any one of the second aspect or the foregoing implementations of the second aspect, the adjustment module is specifically configured to scale the subject element in the wallpaper image.

According to any one of the second aspect or the foregoing implementations of the second aspect, the wallpaper image further includes a first background element, the target element includes the first background element, and adjustment policies for the subject element and the first background element are different.

According to any one of the second aspect or the foregoing implementations of the second aspect, the adjustment module is specifically configured to: scale the first background element in the wallpaper image; and/or perform move-down adjustment on the first background element in the wallpaper image in the height direction of the lock screen interface.

According to any one of the second aspect or the foregoing implementations of the second aspect, a first move-down height for performing move-down adjustment on the subject element is the same as a second move-down height for performing move-down adjustment on the first background element.

According to any one of the second aspect or the foregoing implementations of the second aspect, a first move-down height for performing move-down adjustment on the subject element is different from a second move-down height for performing move-down adjustment on the first background element.

According to any one of the second aspect or the foregoing implementations of the second aspect, a height difference between the first move-down height and the second move-down height is positively correlated with a difference between depth information that is in the wallpaper image and that corresponds to the subject element and depth information that is in the wallpaper image and that corresponds to the first background element.

According to any one of the second aspect or the foregoing implementations of the second aspect, the wallpaper image further includes a second background element of a preset type, the second background element is pre-extended in the wallpaper image to a background element that is able to fill a size of the lock screen interface, and the target element is different from the second background element.

According to any one of the second aspect or the foregoing implementations of the second aspect, the wallpaper image further includes a second background element of a preset type, and the target element further includes the second background element. The adjustment module is specifically configured to perform image extension on the second background element in the wallpaper image. In the adjusted wallpaper image displayed on the lock screen interface, no blank location exists between the second background element and an adjacent image element.

According to any one of the second aspect or the foregoing implementations of the second aspect, when the fourth display module displays the adjustment process of the wallpaper image on the lock screen interface, the UI control blocks at least a part of the second background element, and the first background element blocks a partial region of the UI control.

According to any one of the second aspect or the foregoing implementations of the second aspect, a plurality of UI controls in a collapsed state are displayed on the lock screen interface, and the second display module is specifically configured to: in response to a received first user operation, display the plurality of UI controls on the lock screen interface in an expanded manner. The first user operation indicates to unlock a screen on which the lock screen interface is displayed, and indicates to display the plurality of UI controls in the expanded manner.

According to any one of the second aspect or the foregoing implementations of the second aspect, the second display module is specifically configured to: in response to a received notification message, display, on the lock screen interface, a UI control related to the notification message.

According to any one of the second aspect or the foregoing implementations of the second aspect, there are a plurality of UI controls, and duration of the adjustment process is the same as duration of completely displaying the plurality of UI controls on the lock screen interface.

According to any one of the second aspect or the foregoing implementations of the second aspect, the electronic device further includes: a restoration module, configured to: after the third display module displays the adjusted wallpaper image on the lock screen interface, in response to a received second user operation for the UI control, restore the wallpaper image displayed on the lock screen interface to an original display state, where the second user operation indicates to cancel displaying the UI control on the lock screen interface. The original display state is a display state of the wallpaper image on the lock screen interface before the UI control is displayed on the lock screen interface.

According to any one of the second aspect or the foregoing implementations of the second aspect, the control type of the UI control includes at least one of the following: a message control, a live video window, and a service card.

Any one of the second aspect or the implementations of the second aspect corresponds to any one of the first aspect or the implementations of the first aspect. For technical effects corresponding to any one of the second aspect or the implementations of the second aspect, refer to technical effects corresponding to any one of the first aspect or the implementations of the first aspect. Details are not described herein again.

According to a third aspect, an embodiment of this application provides an electronic device. The electronic device includes a memory and a processor. The memory is coupled to the processor. The memory stores program instructions. When the program instructions are executed by the processor, the electronic device is enabled to perform the method according to any one of the first aspect or the implementations of the first aspect.

For technical effects corresponding to the third aspect, refer to technical effects corresponding to any one of the first aspect or the implementations of the first aspect. Details are not described herein again.

According to a fourth aspect, an embodiment of this application provides a computer-readable medium. The computer-readable medium is configured to store a computer program. When the computer program is run on an electronic device, the electronic device is enabled to perform the method according to any one of the first aspect or the implementations of the first aspect.

For technical effects corresponding to the fourth aspect, refer to technical effects corresponding to any one of the first aspect or the implementations of the first aspect. Details are not described herein again.

According to a fifth aspect, an embodiment of this application provides a computer program product including instructions. When the computer program product runs on a computer, the computer is enabled to perform the method according to any one of the first aspect or the implementations of the first aspect.

For technical effects corresponding to the fifth aspect, refer to technical effects corresponding to any one of the first aspect or the implementations of the first aspect. Details are not described herein again.

According to a sixth aspect, an embodiment of this application provides a chip. The chip includes one or more interface circuits and one or more processors. The interface circuit is configured to receive a signal from a memory of a first electronic device, and send the signal to the processor. The signal includes computer instructions stored in the memory. When the processor executes the computer instructions, the first electronic device is enabled to perform the method according to any one of the first aspect or the implementations of the first aspect.

For technical effects corresponding to the sixth aspect, refer to technical effects corresponding to any one of the first aspect or the implementations of the first aspect. Details are not described herein again.

### BRIEF DESCRIPTION OF DRAWINGS

FIG. 1 is a first diagram of an example structure of an electronic device;
FIG. 2 is a diagram of an example software structure of an electronic device;
FIG. 3 is a diagram of an example mobile phone in the conventional technology;
FIG. 4a is a diagram of an example lock screen wallpaper setting process;
FIG. 4b is a diagram of an example lock screen wallpaper adjustment process;
FIG. 4c is a diagram of an example lock screen wallpaper adjustment process;
FIG. 5a(1) to FIG. 5a(6) are a diagram of an example application scenario;
FIG. 5b is a diagram of an example application scenario;
FIG. 5c(1) to FIG. 5c(3) are a diagram of an example application scenario;
FIG. 5d is a diagram of an example application scenario;
FIG. 5e is a diagram of an example application scenario;
FIG. 5f is a diagram of an example application scenario;
FIG. 5g is a diagram of an example application scenario;
FIG. 5h is a diagram of an example application scenario;
FIG. 6a(1) to FIG. 6a(3) are a diagram of an example application scenario;
FIG. 6b(1) and FIG. 6b(2) are a diagram of an example application scenario;
FIG. 6c(1) to FIG. 6c(4) are a diagram of an example application scenario;
FIG. 6d(1) to FIG. 6d(3) are a diagram of an example application scenario;
FIG. 6e(1) to FIG. 6e(6) are a diagram of an example application scenario;
FIG. 7a(1) to FIG. 7a(7) are a diagram of an example application scenario;
FIG. 7b(1) to FIG. 7b(5) are a diagram of an example application scenario;
FIG. 7c is a diagram of an example application scenario;
FIG. 8a(1) to FIG. 8a(3) are a diagram of an example application scenario;
FIG. 8b(1) to FIG. 8b(4) are a diagram of an example application scenario;
FIG. 8c(1) to FIG. 8c(3) are a diagram of an example application scenario;
FIG. 9(1) and FIG. 9(2) are a diagram of an example application scenario;
FIG. 10(1) to FIG. 10(3) are a diagram of an example application scenario; and
FIG. 11 is a diagram of a structure of an apparatus according to an embodiment of this application.

### DESCRIPTION OF EMBODIMENTS

The following clearly and completely describes the technical solutions in embodiments of this application with reference to the accompanying drawings in embodiments of this application. Clearly, the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship between associated objects, and indicates that three relationships may exist. For example, A and/or B may indicate the following three cases: Only A exists, both A and B exist, and only B exists.

In this specification and the claims of embodiments of this application, the terms "first", "second", and the like are intended to distinguish between different objects, but not to indicate a specific order of the objects. For example, a first target object and a second target object are intended to distinguish between different target objects, but not to indicate a specific order of the target objects.

In embodiments of this application, the term "in an example", "for example", or the like is used to give an example, an illustration, or a description. Any embodiment or design scheme described with "in an example" or "for example" in embodiments of this application should not be construed as being more preferred or advantageous than another embodiment or design scheme. To be precise, the term "in an example", "for example", or the like is intended to present a related concept in a specific manner.

In descriptions of embodiments of this application, "a plurality of" means two or more, unless otherwise specified. For example, a plurality of processing units are two or more processing units, and a plurality of systems are two or more systems.

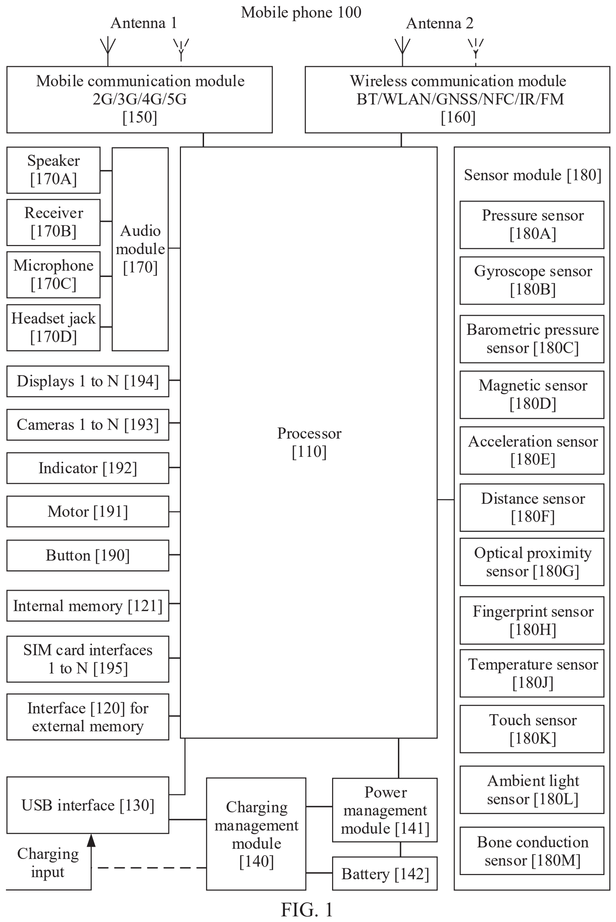

FIG. 1 is a diagram of a structure of an electronic device 100. It should be understood that the electronic device 100 shown in FIG. 1 is merely an example of an electronic device. Optionally, the electronic device 100 may be a terminal, which may also be referred to as a terminal device. The terminal may be a device with a display, for example, a cellular phone (cellular phone), a tablet computer (pad), a wearable device, an internet of things device, or a vehicle-mounted display. This is not limited in this application. It should be noted that the electronic device 100 may include more or fewer components than those shown in the figure, two or more components may be combined, or there may be different component configurations. Components shown in FIG. 1 may be implemented in hardware that includes one or more signal processing circuits and/or application-specific integrated circuits, software, or a combination of hardware and software.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a timing signal, to control instruction fetching and instruction execution.

A memory may be further disposed in the processor 110 to store instructions and data. In some embodiments, the memory in the processor 110 is a cache. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and therefore improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a mini USB interface, a micro USB interface, a USB Type-C interface, or the like. The USB interface 130 may be used for connecting a charger to charge the electronic device 100, or may be configured to transmit data between the electronic device 100 and a peripheral device, or may be used for connecting a headset for playing audio through the headset. The interface may alternatively be configured to connect to another electronic device, for example, an AR device.

It can be understood that an interface connection relationship between the modules shown in this embodiment of this application is merely an example for description, and does not constitute a limitation on the structure of the electronic device 100. In some other embodiments of this application, the electronic device 100 may alternatively use an interface connection mode different from that in the foregoing embodiment, or use a combination of a plurality of interface connection modes.

The charging management module 140 is configured to receive a charging input from a charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the electronic device 100. While charging the battery 142, the charging management module 140 may further supply power to the electronic device through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused to improve antenna utilization. For example, an antenna 1 may be reused as a diversity antenna of a wireless local area network. In some other embodiments, the antenna may be used in combination with a tuning switch.

The mobile communication module 150 may provide a solution applied to the electronic device 100 for wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor, and then a processed signal is transmitted to the application processor. The application processor outputs a sound signal through an audio device (not limited to the speaker 170A, the receiver 170B, and the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a solution applied to the electronic device 100 for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. The wireless communication module 160 may be one or more components integrating at least one communications processor module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology.

The electronic device 100 implements a display function through the GPU, the display 194, the application processor, and the like. The GPU is a microprocessor for image processing, and is connected to the display 194 and the application processor. The GPU is configured to perform mathematical and geometric computation for graphics rendering. The processor 110 may include one or more GPUs that execute program instructions to generate or change displayed information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The camera 193 is configured to capture a static image or a video. An optical image of an object is generated through the lens, and is projected onto the photosensitive element.

The interface 120 for external memory may be used for connecting an external memory card, for example, a microSD card, to extend a storage capability of the electronic device 100. The external memory card communicates with the processor 110 through the interface 120 for external memory, to implement a data storage function. For example, files such as music and videos are stored in the external memory card.

The internal memory 121 may be configured to store computer-executable program code, and the executable program code includes instructions. The processor 110 runs the instructions stored in the internal memory 121, to enable the electronic device 100 to perform the method in embodiments of this application. The internal memory 121 may include a program storage region and a data storage region. The program storage region may store an operating system, an application for at least one function (for example, a sound play function or an image play function), and the like. The data storage region may store data (for example, audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing or recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The button 190 includes a power button, a volume button, and the like. The button 190 may be a mechanical button or a touch button. The electronic device 100 may receive an input on the button, and generate a button signal input related to a user setting and function control of the electronic device 100.

The motor 191 may generate a vibration prompt. The motor 191 may be configured to produce an incoming call vibration prompt or a touch vibration feedback. For example, touch operations performed on different applications (for example, photographing and audio playing) may correspond to different vibration feedback effects. The motor 191 may also correspond to different vibration feedback effects for touch operations performed on different regions of the display 194. Different application scenarios (for example, a time reminder, information reception, an alarm clock, and a game) may also correspond to different vibration feedback effects. Touch vibration feedback effect may be further customized.

The indicator 192 may be an indicator light, and may be configured to indicate a charging status and a battery level change, or may be configured to indicate a message, a missed call, a notification, and the like.

The SIM card interface 195 is used for connecting a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted in a same SIM card interface 195 at the same time. The plurality of cards may be of a same type or different types. The SIM card interface 195 may also be compatible with different types of SIM cards. The SIM card interface 195 may also be compatible with an external memory card. The electronic device 100 interacts with a network through the SIM card, to implement functions such as calling and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a hierarchical architecture, an event-driven architecture, a microkernel architecture, a microservice architecture, or a cloud architecture. In embodiments of this application, an Android system with a hierarchical architecture is used as an example to describe a software structure of the electronic device 100.

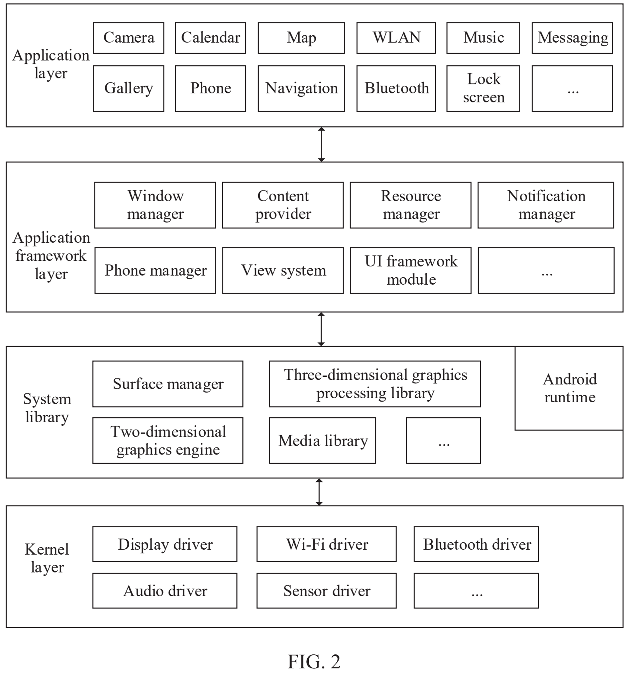

FIG. 2 is a block diagram of the software structure of the electronic device 100 according to an embodiment of this application.

In the hierarchical architecture of the electronic device 100, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as Camera, Gallery, Calendar, Phone, Map, Navigation, WLAN, Bluetooth, Music, Video, Messaging, and Lock screen.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, a user interface (User Interface, UI) frame module, and the like.

The window manager is configured to manage a window program. The window manager may obtain a size of a display, determine whether there is a status bar, perform screen locking, take a screenshot, or the like.

The content provider is configured to store and obtain data, and enable the data to be accessed by an application. The data may include a video, an image, audio, calls that are made and answered, a browsing history, a bookmark, an address book, and the like.

The view system includes a visual control, for example, a control for displaying text or a control for displaying a picture. The view system may be configured to construct an application. A display interface may include one or more views. For example, a display interface including an SMS message notification icon may include a text display view and a picture display view.

The phone manager is configured to provide a communication function for the electronic device 100, for example, management of a call status (including answering, hanging up, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without user interaction. For example, the notification manager is configured to indicate download completion or provide a message notification. The notification manager may alternatively be a notification that appears in a top status bar of the system in a form of a graph or scroll bar text, for example, a notification for an application running in the background, or may be a notification that appears on a screen in a form of a dialog window. For example, text information is displayed in the status bar, an alert tone is played, the electronic device vibrates, or an indicator blinks.

The lock screen application may invoke the UI framework module, to prevent a subject element in a wallpaper on a lock screen interface from being blocked by a UI control, and highlight the subject element in the lock screen wallpaper. A specific processing process is described in detail in the following embodiments.

A system library and runtime layer includes the system library and the Android runtime (Android runtime). The system library may include a plurality of functional modules, for example, a surface manager (surface manager), a media library (Media Library), a three-dimensional graphics processing library (for example, OpenGL ES), and a 2D graphics engine (for example, SGL). The 3D graphics library is configured to implement three-dimensional graphics drawing, image rendering, composition, layer processing, and the like. The Android runtime includes a core library and a virtual machine. The Android runtime is responsible for scheduling and management of the Android system. The core library includes two parts: a function that needs to be invoked in Java language and a core library of Android. The application layer and the application framework layer run in the virtual machine. The virtual machine executes Java files at the application layer and the application framework layer as binary files. The virtual machine is configured to perform functions of object lifecycle management, stack management, thread management, security and exception management, garbage collection, and the like.

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It can be understood that the components included in the system framework layer and the system library and runtime layer that are shown in FIG. 2 do not constitute a specific limitation on the electronic device 100. In some other embodiments of this application, the electronic device 100 may include more or fewer components than those shown in the figure, or some components may be combined, or some components may be split, or the components may be arranged differently.

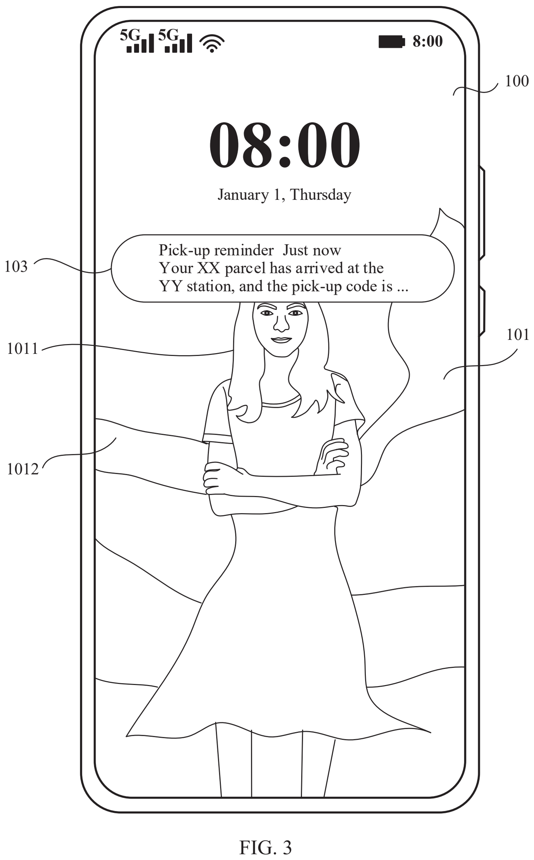

Currently, an electronic device supports setting a wallpaper on a lock screen interface. For example, the electronic device is a mobile phone. FIG. 3 shows a lock screen interface 100 of the mobile phone. The lock screen interface not only displays UI controls that are fixedly displayed, such as a network icon, a battery level icon, and a time and date icon, but also displays a lock screen wallpaper 101. As shown in FIG. 3, the lock screen wallpaper 101 may include a subject element 1011 (for example, a person) and a background element 1012. In addition, when the mobile phone pops up a notification message 103 on the lock screen interface 100, a display location of the notification message 103 overlaps the subject element 1011. Consequently, the subject element 1011 is blocked by the pop-up notification message 103. Similarly, another UI control that dynamically pops up on the lock screen interface, for example, a live video window, is also likely to block the subject element displayed in the lock screen wallpaper.

Therefore, in the conventional technology, a problem that a UI control (for example, a notification message or a live video window) dynamically popping up blocks a subject element in a lock screen wallpaper is common, affecting displaying of the subject element in the lock screen wallpaper.

For ease of description, the following names are defined:
Static UI control: a UI control that is fixedly displayed at a fixed location on a lock screen interface, for example, a network icon, a battery level icon, a time and date icon, a photographing icon, or a flashlight icon.
Dynamic UI control: a UI control that may be displayed on a lock screen interface in a pop-up manner after the lock screen interface is displayed, for example, a message control, a live video window, or a service card.

In view of this, this application provides a wallpaper processing method that may be applied to an electronic device. The electronic device may invoke a UI framework module through a lock screen application, to adjust a lock screen wallpaper when a dynamic UI control is displayed on a lock screen interface, to prevent a subject element in the lock screen wallpaper from being blocked by the displayed dynamic UI control.

In some embodiments, the method in this application may include a lock screen wallpaper setting process and a lock screen wallpaper adjustment process.

With reference to specific examples, the following describes the method in this application by using an example in which the electronic device is a mobile phone. In another embodiment, the electronic device may alternatively be a tablet computer, a wearable device, or the like. A principle of an implementation process is the same. Details are not described herein again.

### Example 1: Lock screen wallpaper setting process

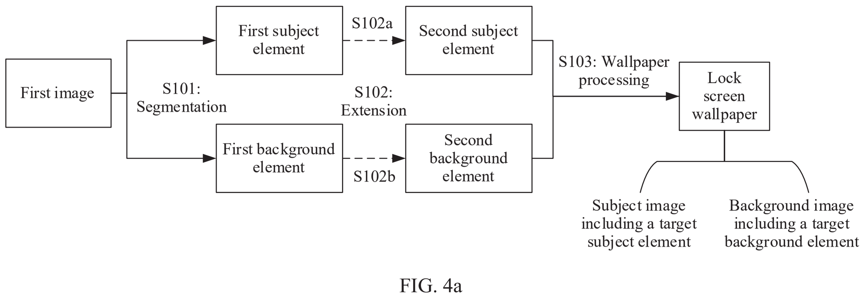

FIG. 4a is a diagram of an example lock screen wallpaper setting process.

As shown in FIG. 4a, a lock screen application of a mobile phone may invoke a UI framework to perform the following process. The process may include the following steps.

S101: The mobile phone segments a first image to generate a subject image including a first subject element and a background image including a first background element.

The first image is an image to be set as a lock screen wallpaper. The first image may be an image captured by the mobile phone, an image selected from an album, a frame of image in a video, or the like. A source of the first image is not limited in this application.

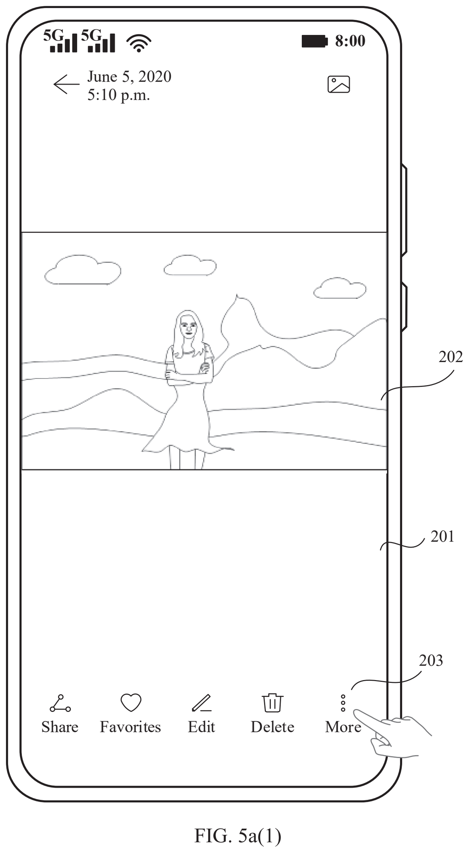

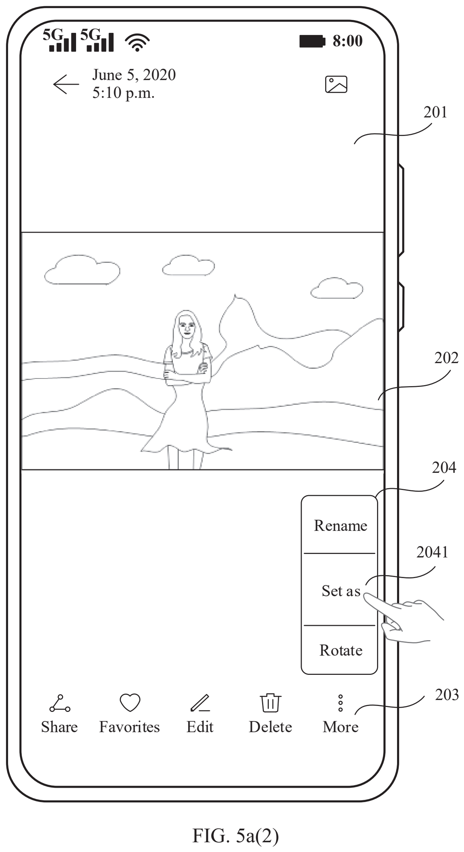

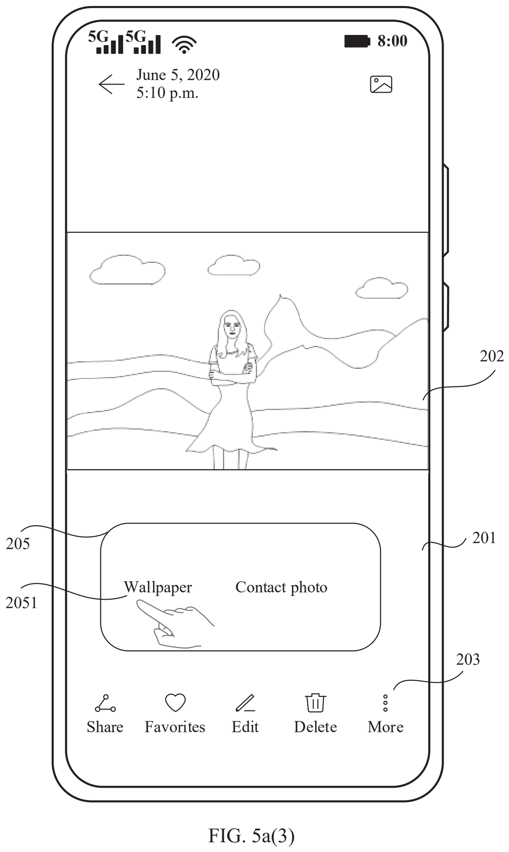

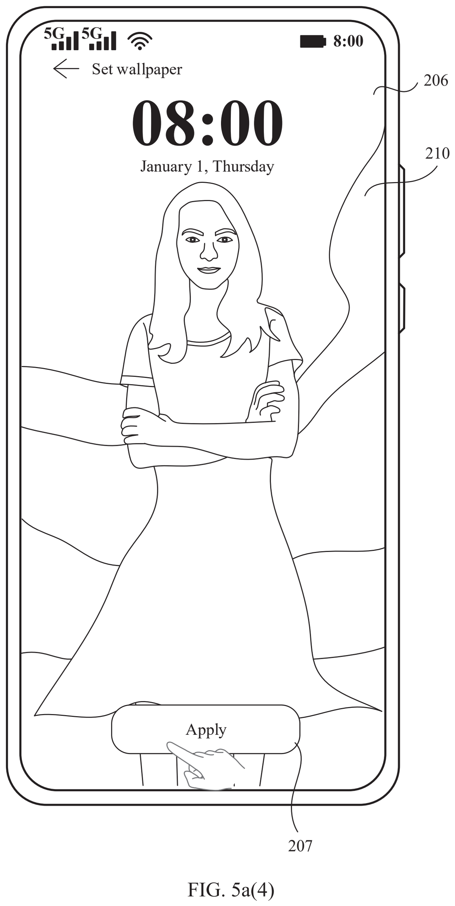

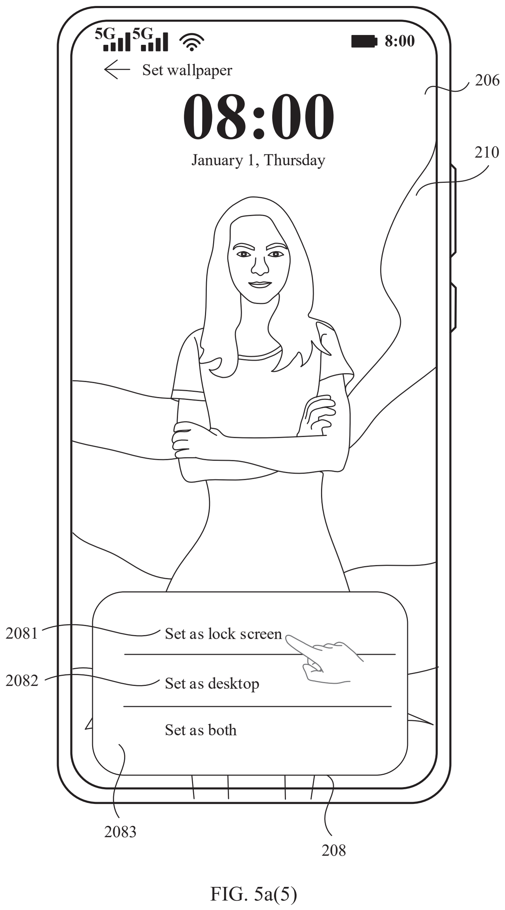

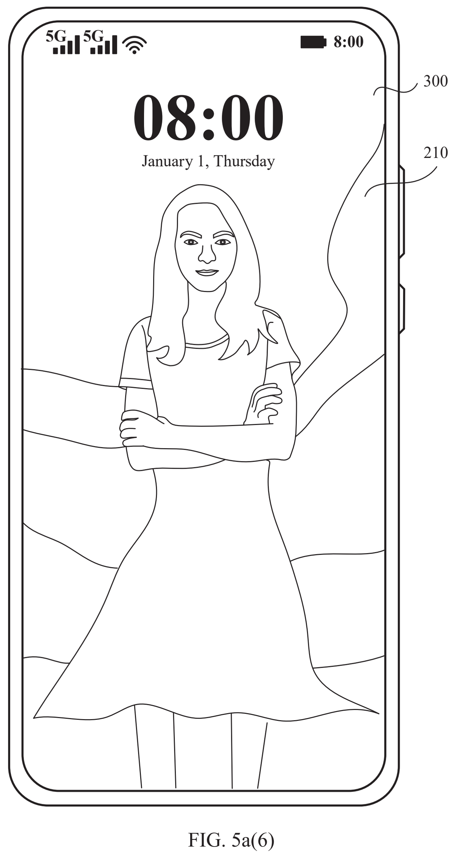

FIG. 5a(1) to FIG. 5a(6) are a diagram of an example application scenario.

As shown in FIG. 5a(1), a display interface 201 of the mobile phone is an application interface of a gallery application, and the display interface 201 may include a photo 202, a control 203, and the like. A user taps the control 203, and the mobile phone may display a control 204 on the display interface 201 in response to the user operation, as shown in FIG. 5a(2). The control 204 may include a Rename option, a Rotate option, and a Set as option 2041. The Rename option and the Rotate option are respectively used to perform a renaming operation and a rotation operation on the photo 202.

As shown in FIG. 5a(2), the user taps the option 2041, and the mobile phone may display a control 205 on the display interface 201 in response to the user operation, as shown in FIG. 5a(3). The control 205 may include but is not limited to a Wallpaper option 2051 and a Contact photo option. The Contact photo option is used to set the photo 202 as a profile picture of a mobile phone contact. The user taps the Wallpaper option 2051, and in response to the user operation, the mobile phone may switch the display interface to a display interface 206 shown in FIG. 5a(4). A lock screen wallpaper 210 used for preview is displayed on the display interface 206. The lock screen wallpaper 210 is a wallpaper obtained by the mobile phone by processing the photo 202.

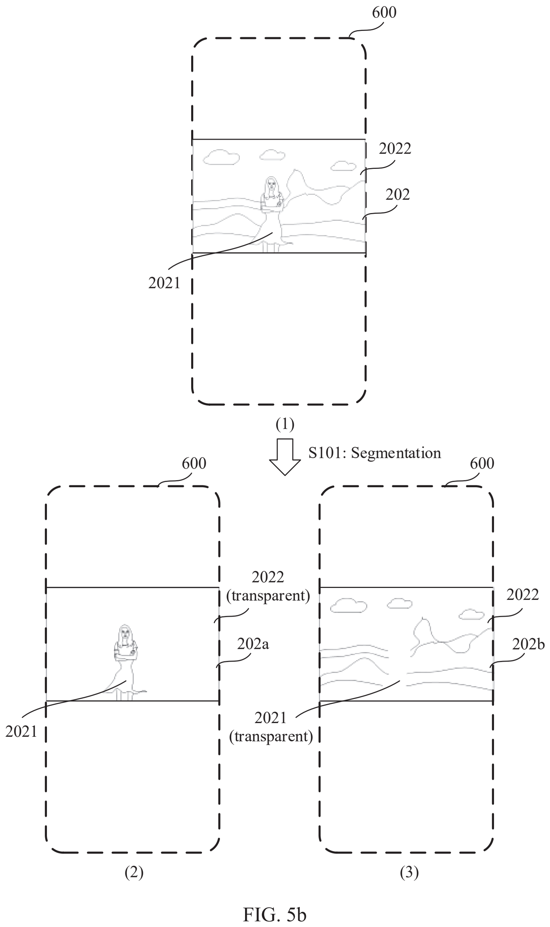

The following describes an implementation process of obtaining the lock screen wallpaper 210 with reference to FIG. 5b to FIG. 5d.

First, in the scenario shown in FIG. 5a, in response to the operation of tapping, by the user, the Wallpaper option 2051 shown in FIG. 5a(3), the mobile phone may use the photo 202 as the first image to perform S101.

FIG. 5b shows a process of performing the segmentation operation in S101 on the photo 202 in FIG. 5a(1) to FIG. 5a(6) to obtain the subject image including the first subject element and the background image including the first background element.

In S101, the mobile phone may perform semantic segmentation and in-depth analysis on the photo 202 shown in FIG. 5b(1) to obtain a plurality of layers, where elements included in the plurality of layers are different. For example, the plurality of layers are a layer including a person element, a layer including a blue sky and white cloud element, and a layer including a mountain element. A region of each layer other than an element included in the layer is a transparent region, and a size of each layer is the same as a size of the photo 202.

In S101, the mobile phone may determine a background layer from the plurality of layers based on an obtained element at each of the plurality of layers and/or semantics of the layer, to obtain the background image including the first background element.

In the scenario shown in FIG. 5b, the mobile phone may determine that both the layer including the blue sky and white cloud element and the layer including the mountain element are background layers, and may synthesize the two background layers to obtain the background image including the first background element, as shown in FIG. 5b(3), where the background image herein is an image 202b. The image 202b includes a first background element (the blue sky and white cloud and the mountain) 2022. A region (for example, a region in which a first subject element 2021 is located) in the image 202b other than the first background element 2022 is a transparent region.

In S101, the mobile phone may further recognize, by using a pre-trained neural network, subject elements at the plurality of layers obtained by performing semantic segmentation and in-depth analysis on the photo 202, to determine a subject layer (a layer including a subject element), and synthesize the subject layer into the subject image including the first subject element. For example, the neural network may recognize a subject layer (or a subject element) based on factors such as a display location and a display area of an element at a layer, to synthesize at least one subject layer into the subject image including the first subject element. The subject layer is usually a layer including an element that is in a subject element and that is close to a center region of an entire image.

In the scenario shown in FIG. 5b, the mobile phone may recognize the subject elements at the plurality of layers to determine that the layer including the person element is a subject layer, to obtain the subject image of the first subject element, as shown in FIG. 5b(2), where the subject image herein is an image 202a. The image 202a includes the first subject element (the person element) 2021. A region (for example, a region in which the first background element 2022 is located) in the image 202a other than the first subject element 2021 is a transparent region.

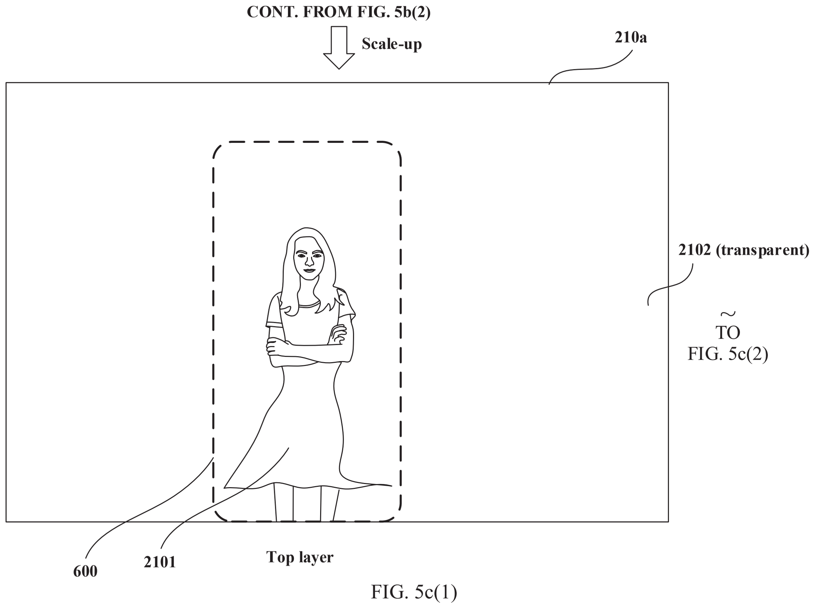

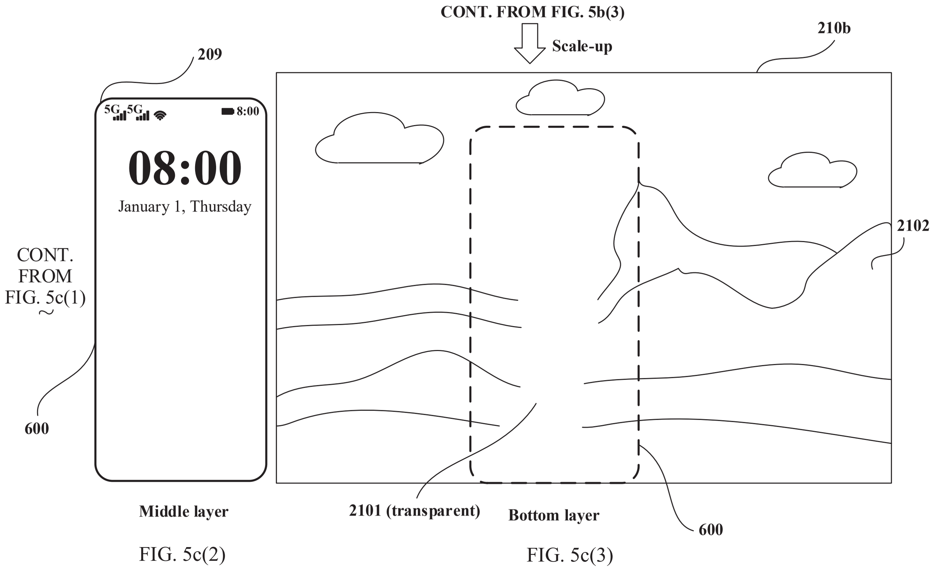

In the scenario shown in FIG. 5b, a dashed-line box 600 represents a display of the mobile phone shown in FIG. 5a(1) to FIG. 5a(6), to indicate a display ratio of an original image of the segmented photo 202 on the display of the mobile phone. When the mobile phone segments the photo 202 shown in FIG. 5b, no related operation is performed on the display shown in the dashed-line box 600. Therefore, the dashed-line box is used herein to represent the display. A purpose of showing the dashed-line box 600 herein lies in: In a subsequent application scenario in FIG. 5c(1) to FIG. 5c(3), the display of the mobile phone that is indicated by the dashed-line box 600 with an unchanged size is used to illustrate that an image 210a shown in FIG. 5c(1) is an image obtained by scaling up the image 202a shown in FIG. 5b(2) and that an image 210b shown in FIG. 5c(3) is an image obtained by scaling up the image 202b shown in FIG. 5b(3).

In this way, the mobile phone may invoke the UI framework module through the lock screen application, to segment the photo 202 into the image 202a including the first subject element and the image 202b including the first background element.

S103: The mobile phone performs wallpaper processing on an image including a subject element and an image including a background element that are obtained through segmentation, to obtain the lock screen wallpaper.

Optionally, after S101 and before S103, the mobile phone may further perform S102.

S102: The mobile phone may extend at least one of the subject image including the first subject element and the background image including the first background element.

In S103, an object for wallpaper processing includes the image of the subject element and the image of the background element.

The image of the subject element may be the subject image that includes the first subject element and that is obtained in S101, or a subject image that includes a second subject element and that is obtained through extension in S102a.

The image of the background element may be the background image that includes the first background element and that is obtained in S101, or a background image that includes a second background element and that is obtained through extension in S102b.

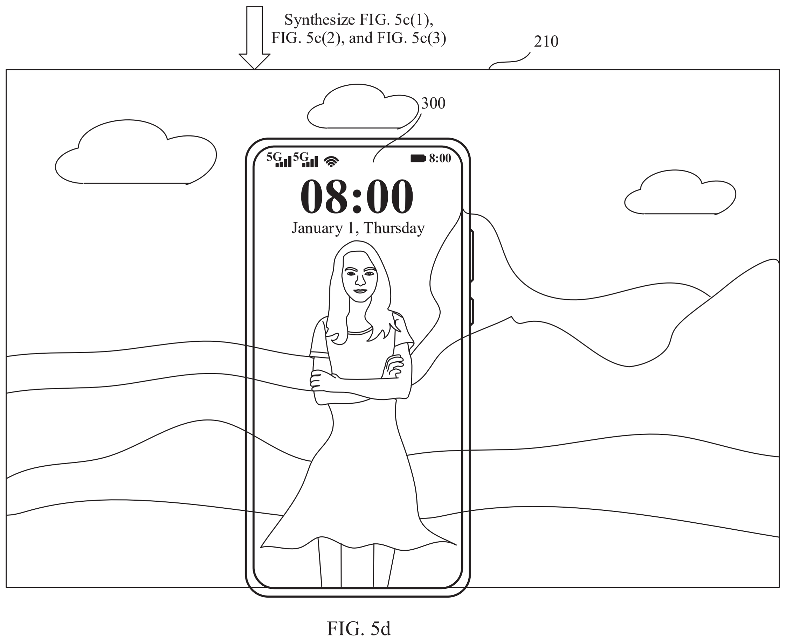

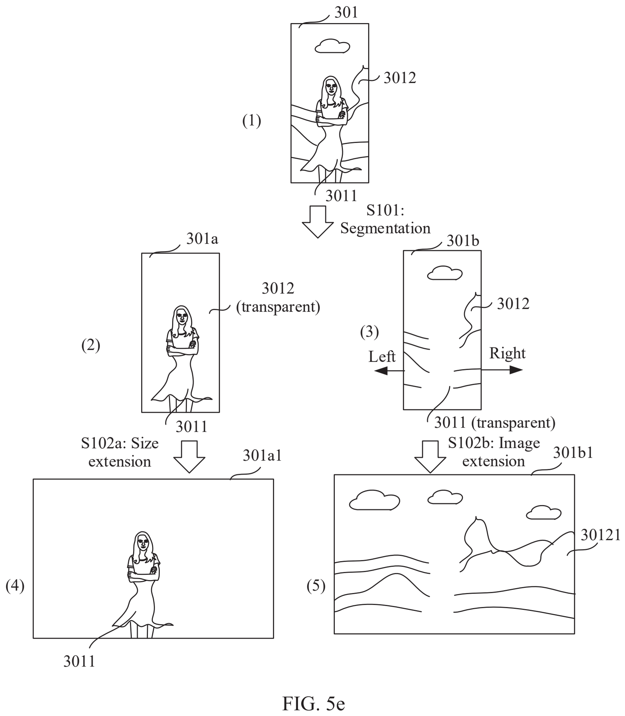

In the application scenarios in FIG. 5a(1) to FIG. 5d, no image extension is performed on a corresponding element in the photo 202, that is, S102 is not performed. Instead, wallpaper processing is performed on the image 202a including the first subject element and the image 202b including the first background element in S103, to obtain the lock screen wallpaper 210. Therefore, S102 is not described in detail herein. S102 is described below with reference to FIG. 5e to FIG. 5g.

In the application scenarios in FIG. 5a(1) to FIG. 5d, after the segmentation process shown in FIG. 5b, refer to FIG. 5c(1) to FIG. 5c(3). As shown in FIG. 5c(1), the mobile phone may perform scale-up processing (an example of wallpaper processing) on the image 202a that includes the first subject element and that is obtained through segmentation, as shown in FIG. 5b(2), to obtain the image 210a shown in FIG. 5c(1). The first subject element 2021 in the image 202a shown in FIG. 5b(2) is scaled up to a target subject element 2101 in the image 210a shown in FIG. 5c(1). In addition, as shown in FIG. 5c(3), the mobile phone may perform scale-up processing (an example of wallpaper processing) on the image 202b that includes the first background element and that is obtained through segmentation, as shown in FIG. 5b(3). Optionally, the mobile phone may further perform blurring processing to obtain the image 210b shown in FIG. 5c(3). The first background element 2022 in the image 202b shown in FIG. 5b(3) is scaled up to a target background element 2102 in the image 210b shown in FIG. 5c(3). In FIG. 5c(1) and FIG. 5c(2), a dashed-line box 600 indicating the display of the mobile phone is shown in the image 210a and the image 210b that are obtained through scale-up. The dashed-line box 600 shown in FIG. 5b and the dashed-line box 600 shown in FIG. 5c(1) to FIG. 5c(3) indicate a same display, with a same size, of the mobile phone. Therefore, it can be clearly seen that a size of the image 210a obtained through scale-up is greater than a size of the display indicated by the dashed-line box 600, and a size of the image 202a that exists before the scale-up is less than the size of the display indicated by the dashed-line box 600. Similarly, a size of the image 210b obtained through scale-up is greater than the size of the display indicated by the dashed-line box 600, and a size of the image 202b that exists before the scale-up is less than the size of the display indicated by the dashed-line box 600. For example, the size of the photo 202 is 800×600, and the mobile phone may scale up, by 2 times, the image 202a and the image 202b that are obtained by segmenting the photo 202, to obtain the image 210a and the image 210b whose sizes are both 1600×1200.

It should be understood that the dashed-line box 600 shown in FIG. 5c(1) to FIG. 5c(3) is merely used to describe scale-up effect of an image, and the dashed-line box 600 is not displayed in the image 210a or the image 210b.

In addition, as shown in FIG. 5c(2), a lock screen interface may not only display the lock screen wallpaper 210 obtained based on the photo 202, but also display a static UI control. The mobile phone may generate a middle layer 209 shown in FIG. 5c(2). The middle layer 209 may include but is not limited to static UI controls such as a network icon, a battery level icon, a clock icon, and a date icon. Similarly, a size of the middle layer 209 is also the same as the size of the display indicated by the dashed-line box 600. Because an edge line of the middle layer 209 is a solid line, a dashed line of the dashed-line box 600 is covered.

As shown in FIG. 5c(1) to FIG. 5c(3) and FIG. 5d, when the image 210a, the image 210b, and the middle layer 209 are synthesized to obtain a lock screen interface 300, the image 210a may serve as a top layer of the three layers, the middle-layer image 209 is located at a middle layer, and the image 210b is located at a bottom layer, to obtain the lock screen interface 300 shown in FIG. 5d. The image 210a and the image 210b that are synthesized form the lock screen wallpaper 210. A size of the lock screen wallpaper 210 is greater than a size of a screen of the mobile phone, so that the lock screen wallpaper 210 can be subsequently scaled down for display. Because the image 210a including the first subject element 2021 is placed at an upper layer of the middle-layer image 209, a static UI control, for example, a time icon or the date icon, does not block the first subject element 2021 in the lock screen wallpaper 210 on the lock screen interface, and the static UI control, for example, the time icon or the date icon, may block the first background element 2022 in the lock screen wallpaper 210.

In the scenarios in FIG. 5a(1) to FIG. 5d, the wallpaper processing in S103 may include scale-up processing and synthesis processing. The wallpaper processing is mainly processing performed on an image, and may further include, for example, but is not limited to, the following types of processing: blurring processing, hue adjustment processing, transparency processing, and the like. This is not limited herein.

In addition, an execution sequence of processing operations included in the wallpaper processing is not limited in this application, and may be flexibly set according to a requirement.

Still refer to FIG. 5a(1) to FIG. 5a(6). The lock screen application of the mobile phone may invoke the UI framework in response to the user operation of tapping, by the user, the Wallpaper option 2051 shown in FIG. 5a(3), to perform S101 and S103, and display, for preview on the display interface 206 shown in FIG. 5a(4), the generated lock screen wallpaper 210 shown in FIG. 5d. It should be understood that, as shown in FIG. 5d, the size of the lock screen wallpaper 210 is greater than a size of the display interface 206 (in other words, the screen of the mobile phone). Therefore, the lock screen wallpaper 210 shown in FIG. 5a(4) is a partial lock screen wallpaper displayed on the screen, and a partial wallpaper that exceeds the screen is not displayed.

Then the user taps an Apply control 207 shown in FIG. 5a(4), and the mobile phone may display a control 208 on the display interface 206 in response to the user operation, as shown in FIG. 5a(5). The control 208 may include a Set as lock screen option 2081, a Set as desktop option 2082, and a Set as both option 2083, to respectively indicate to set the lock screen wallpaper 210 as a wallpaper of the lock screen interface, set the lock screen wallpaper 210 as a wallpaper of a desktop interface, and set the lock screen wallpaper 210 as both a wallpaper of the lock screen interface and a wallpaper of a desktop interface.

Then the user taps the Set as lock screen option 2081 shown in FIG. 5a(5), and the mobile phone may set the lock screen wallpaper 210 as a wallpaper of the lock screen interface 300 in response to the user operation through the process shown in FIG. 5b to FIG. 5d. When the user locks the screen of the mobile phone, as shown in FIG. 5a(6), the lock screen wallpaper 210 may be displayed on the lock screen interface 300. It should be understood that, as shown in FIG. 5d, the size of the lock screen wallpaper 210 is greater than a size of the lock screen interface 300 (in other words, the screen of the mobile phone). Therefore, the lock screen wallpaper 210 shown in FIG. 5a(6) is a partial lock screen wallpaper displayed on the screen, and a partial wallpaper that exceeds the screen is not displayed.

In this way, the lock screen wallpaper obtained through the process shown in FIG. 4a may include two images: a subject image including a target subject element and a background image including a target background element. In the application scenarios in FIG. 5a(1) to FIG. 5d, two types of images in the lock screen wallpaper 210 are the image 210a (also expressed as a subject image) including the target subject element 2101 and the image 210b (also expressed as a background image) including the target background element 2102.

In this way, in this application, when the user sets a picture as a lock screen wallpaper, the picture may be segmented to obtain a subject image including a subject element and a background image including a background element; image processing, for example, scaling or blurring, is performed on the subject image and the background image; and then a processed subject image and a processed background image are synthesized into the lock screen wallpaper in an order in which a subject layer is at an upper layer and the background image is at a lower layer.

The following describes optional S102 shown in FIG. 4a in Example 1.

Optionally, in S102, the mobile phone may extend at least one of the subject image including the first subject element and the background image including the first background element. An image style of an extended image is consistent with an image style of an image that exists before the extension, and a newly added extension part is continuous with the original first image without a blank region.

For example, when performing S102, the mobile phone optionally extends, through S102a, the subject image including the first subject element to obtain the subject image including the second subject element, and optionally extends, through S102b, the background image including the first background element to obtain the background image including the second background element.

For example, when performing S103, the mobile phone may perform wallpaper processing on the subject image including the second subject element and the background image including the second background element to obtain the lock screen wallpaper. A principle is similar. Details are not described herein again.

In some embodiments, when the first image to be set as the lock screen wallpaper is not a large banner image, the mobile phone may extend the first image (for example, perform extension in a width direction, and may extend a background element and/or a subject element). For example, if an aspect ratio of an image is less than a first threshold, the image is not a large banner image. For example, the preset threshold may be 4:1 or 3:1. This is not specifically limited, and may be flexibly configured according to a requirement.

In some embodiments, after the mobile phone sets the first image as the lock screen wallpaper, during a wallpaper adjustment process (to ensure that a dynamic UI control does not block a subject element) in this application, scale-down processing may be performed on a part of elements (for example, a background element) in the lock screen wallpaper. In this case, if the first image is not a large banner image, a blank region exists in a displayed lock screen wallpaper that is obtained through scale-down processing. Consequently, a picture of the lock screen wallpaper is incomplete. Therefore, the first image may be extended in the width direction.

In some embodiments, when a ratio of a height of the first subject element in the first image to a height of the first image is less than a second threshold, the mobile phone may extend the first subject element. For example, the second threshold is 1:2. Specifically, this may be flexibly configured according to a requirement.

In some embodiments, after the mobile phone sets the first image as the lock screen wallpaper, during a lock screen wallpaper adjustment process in this application (to ensure that a dynamic UI control does not block a subject element), the mobile phone may perform move-down processing on a subject element in the lock screen wallpaper, to reduce an area in which a dynamic UI control displayed on a lock screen interface blocks the subject element. In this case, if a ratio of a height of the subject element in the first image to a height of the entire wallpaper is excessively small (for example, a height of a person is excessively small), a display height of the moved-down subject element in the entire wallpaper is further reduced, affecting appearance of the subject element in the lock screen wallpaper.

It should be understood that a condition for extending at least one of the subject element and/or the background element in the first image is not limited to the condition limitations on the large banner image and the height of the subject element in the foregoing embodiments, and may alternatively be another condition. Specifically, whether extension is needed and an extension manner may be flexibly determined according to a requirement, to ensure that image elements in a lock screen wallpaper displayed on the screen after a subsequent wallpaper adjustment process are still continuous without a blank region.

In the scenarios in FIG. 5a(1) to FIG. 5a(6) and FIG. 5b, the photo 202 is a large banner image, and a height of the first subject element 2021 is greater than half of a height of the entire photo 202. The photo 202 is not extended herein.

With reference to an application scenario 1 to an application scenario 4, the following describes a process of extending the first image in S102 in this application.

In the application scenario 1, refer to FIG. 5e. As shown in FIG. 5e(1), the first image that the user requests, through an operation, to set as the lock screen wallpaper is an image 301. The mobile phone may segment the image 301 through S101 to obtain an image 301a including a first subject element 3011, as shown in FIG. 5e(2), where a region (for example, a region in which a first background element 3012 is located) in the image 301a other than the first subject element 3011 is a transparent region, and obtain an image 301b including the first background element 3012, as shown in FIG. 5e(3), where a region (for example, a region in which the first subject element 3011 is located) in the image 301b other than the first background element 3012 is a transparent region.

In this application scenario, the mobile phone may determine that an aspect ratio of the image 301 serving as the first image is less than the first threshold, and therefore determine that the image 301 is not a large banner image. In this case, after the image 301 with a small width is set as the lock screen wallpaper, the mobile phone may perform scale-down processing on a part of elements (for example, a background element) in the lock screen wallpaper during a subsequent wallpaper adjustment process (to ensure that a dynamic UI control does not block a subject element). In this case, if the first image is not a large banner image, blank regions exist on two sides of a displayed lock screen wallpaper that is obtained through scale-down processing. Consequently, a picture of the lock screen wallpaper is incomplete. Therefore, in this embodiment, image extension needs to be performed on the image 301.

As shown in FIG. 5e(3), the lock screen application of the mobile phone may invoke the UI framework, and perform S102b to perform, in a width direction, leftward and rightward image extension on the image 301b shown in FIG. 5e(3) to obtain an extended image 301b1 shown in FIG. 5e(5).

Specifically, the UI framework may extend a background element in the image 301b through an artificial intelligence generated content (AIGC, Artificial Intelligence Generated Content) technology, so that a style of a second background element 30121 in the extended image 301b1 is consistent with a style of the first background element 3012 in the image 301b that exists before the extension. In addition, through comparison between FIG. 5e(3) and FIG. 5e(5), it can be learned that a background element obtained by the mobile phone by extending the first background element 3012 leftward and rightward is continuous with the first background element 3012 without a blank region.

In AIGC, content related to an input condition or guidance (for example, the first background element 3012 shown in FIG. 5e(3)) may be generated based on the input condition or guidance. In another embodiment, an extended image whose style is consistent with a style used before the extension and whose image picture is continuous may alternatively be obtained through another image extension technology. This is not limited herein.

As shown in FIG. 5e(4), the lock screen application of the mobile phone may invoke the UI framework, and perform S102a to perform, in a width direction, leftward and rightward size extension on the image 301a shown in FIG. 5e(2) to obtain an extended image 301a1 shown in FIG. 5e(4). Through comparison between the image 301a that exists before the extension and the extended image 301a1, a subject element between the image 301a and the image 301a1 remains unchanged and is the first subject element 3011, and only a size of a transparent region other than the first subject element 3011 is extended, so that a size of the extended image 301a1 is the same as a size of the extended image 301b1 shown in FIG. 5e(5). In this way, the lock screen application can process the image 301a1 and the image 301b1 into the lock screen wallpaper in S103. Both an aspect ratio of the extended image 301a1 and an aspect ratio of the extended image 301b1 are greater than or equal to the first threshold, so that an image obtained by synthesizing the image 301a1 and the image 301b1 (that is, an image obtained by extending the image 301 shown in FIG. 5e(1)) is a large banner image.

In this way, in this embodiment of this application, when the first image to be set as the lock screen wallpaper is not a large banner image, the lock screen application of the mobile phone may invoke the UI framework to perform image extension on a background element in the first image. Optionally, when a subject element in the first image is incomplete (for example, the subject element is a cat that does not include a cat tail), image extension may also be performed on the subject element (for example, the cat tail is obtained through extension in a width direction of the image). In this way, an image obtained by synthesizing two images obtained separately extending the subject element and the background element is a large banner image. This facilitates adjustment (for example, scale-down processing) of a lock screen wallpaper obtained based on the large banner image, to ensure that a dynamic UI control does not block the subject element in the lock screen wallpaper.

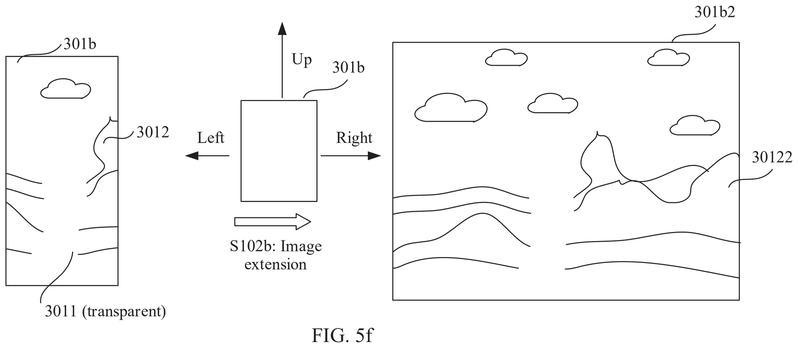

In the application scenario 2, FIG. 5f is a diagram of a process of extending the first image by the mobile phone.

Between FIG. 5f and FIG. 5e, a process of image segmentation and extending a subject image and a background image that are obtained through segmentation is mostly the same. A difference lies in: In the application scenario 2, the lock screen application of the mobile phone may further invoke the UI framework to perform S102b, to extend the background image obtained through segmentation, for example, the image 301b shown in FIG. 5e(3), in a height direction of the image.

With reference to FIG. 5f, the following describes a difference between the application scenario 2 and the application scenario 1 shown in FIG. 5e. Other processes are the same, and details are not described herein again.

As shown in FIG. 5f, an image 301b is the image 301b shown in FIG. 5e(3), to be specific, a background image obtained by segmenting the image 301. The mobile phone may extend the image 301b shown in FIG. 5f leftward and rightward in a width direction, and extend the image 301b upward in a height direction, to obtain an extended image 301b2 shown in FIG. 5f.

Specifically, the lock screen application of the mobile phone may invoke the UI framework to extend, through the AIGC technology, a background element in the image 301b shown in FIG. 5f in three directions, that is, upward, leftward, and rightward, so that a style of a second background element 30122 in the extended image 301b2 is consistent with a style of the first background element 3012 in the image 301b that exists before the extension. In addition, through comparison between the image 301b that exists before the extension and the extended image 301b2 that are shown in FIG. 5f, a background element obtained by the mobile phone by extending the first background element 3012 leftward, rightward, and upward is continuous with the first background element 3012 without a blank gap. In this way, the blue sky and white cloud in the image 301b are extended in the width direction and upward in the height direction, and the mountain is extended in the width direction. An aspect ratio of the extended image 301b2 is greater than the first threshold, to implement extension of the background element in the image 301b, to obtain a large banner image as the lock screen wallpaper. A principle of size extension of the image 301a is similar to a principle of a size extension process in S102a shown in FIG. 5e, except that a size obtained by extending the image 301a herein is the same as a size of the extended image 301b2 shown in FIG. 5f.

In this way, in this embodiment, the mobile phone extends, upward in a height direction and leftward and rightward in a width direction, a background element in the first image to be set as the lock screen wallpaper, so that an extended first image is a large banner image. In this case, after the mobile phone obtains the lock screen wallpaper based on the extended first image, when move-down adjustment is performed on the lock screen wallpaper to prevent a dynamic UI control from blocking a subject element in the lock screen wallpaper, it can be ensured that a background element obtained through extension in the height direction can be displayed on the lock screen interface after the lock screen wallpaper is moved down, to avoid a case that a blank region appears at the top of the screen due to the move-down of the wallpaper.

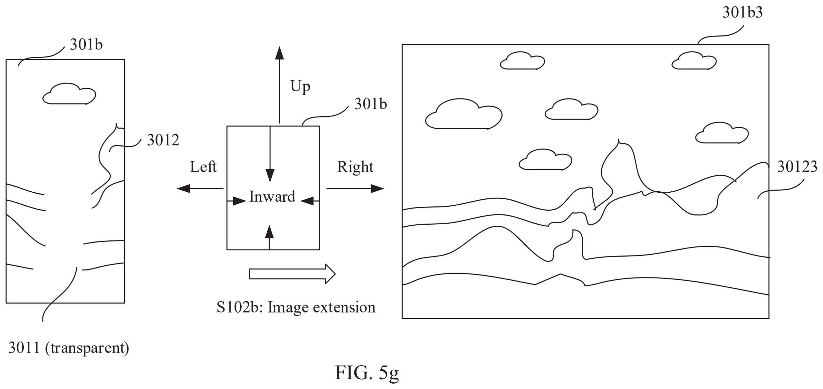

In the application scenario 3, FIG. 5g is a diagram of a process of extending, by the mobile phone, a background image obtained by segmenting the first image.

Between FIG. 5g and FIG. 5f, a background element extension process is mostly the same. A difference lies in: In the application scenario 3, the lock screen application of the mobile phone may further invoke the UI framework to perform S102b, to extend, inward, a background element in the image 301b that is shown in FIG. 5e(3) and that is obtained through segmentation.

With reference to FIG. 5g, the following describes a difference between the application scenario 3 and the application scenario 2 shown in FIG. 5e. Other processes are the same, and details are not described herein again.

As shown in FIG. 5g, an image 301b is the image 301b shown in FIG. 5e(3), to be specific, a background image obtained by segmenting the image 301. In a process that is the same as the process in FIG. 5f, the mobile phone may extend the image 301b shown in FIG. 5g leftward and rightward in a width direction, and extend the image 301b upward in a height direction. In addition, in FIG. 5g, the mobile phone may further extend the image 301b inward. In this way, a transparent region, in the image 301b, that corresponds to the first subject element 3011 can be filled with a background element through the inward extension, for example, filled with the blue sky and white cloud background element and the mountain background element, to obtain an extended image 301b3 shown in FIG. 5g.

Specifically, the lock screen application of the mobile phone may invoke the UI framework to extend, through the AIGC technology, a background element in the image 301b shown in FIG. 5g in three directions, that is, upward, leftward, and rightward, and perform inward extension, to be specific, extend a background element in the transparent region corresponding to the first subject element 3011, so that a style of a second background element 30123 in the extended image 301b3 is consistent with a style of the first background element 3012 in the image 301b that exists before the extension. In addition, through comparison between the image 301b that exists before the extension and the extended image 301b3 that are shown in FIG. 5g, a background element obtained by the mobile phone by extending the first background element 3012 leftward, rightward, upward, and inward is continuous with the first background element 3012 without a blank gap. In this way, the blue sky and white cloud in the image 301b are extended in the width direction and the height direction, and the mountain is extended in the width direction. An aspect ratio of the extended image 301b3 is greater than the first threshold, to implement extension of the background element in the image 301b, to obtain a large banner image as the lock screen wallpaper. A principle of size extension of the image 301a is similar to a principle of a size extension process in S102a shown in FIG. 5g, except that a size obtained by extending the image 301a herein is the same as a size of the extended image 301b3 shown in FIG. 5g.

In this way, in this embodiment, for the first image to be set as the lock screen wallpaper, the mobile phone extends a background element outside the first image upward in the height direction and leftward and rightward in the width direction, so that an extended first image is a large banner image. In addition, the mobile phone may further extend a background element inward in an internal region of the first image. In this way, a background element can also be obtained through extension in a blank region that is in a background element in the extended first image and that is occupied by a subject element, so that background elements in a background image in the lock screen wallpaper are internally continuous. In this case, after the mobile phone obtains the lock screen wallpaper based on the extended first image, when move-down adjustment is performed on a subject element in the lock screen wallpaper to prevent a dynamic UI control from blocking the subject element in the lock screen wallpaper, a background element in the lock screen wallpaper may be displayed after the subject element is moved down, to avoid a case that a blank region is displayed in the background image in the lock screen wallpaper after the subject element is moved down.

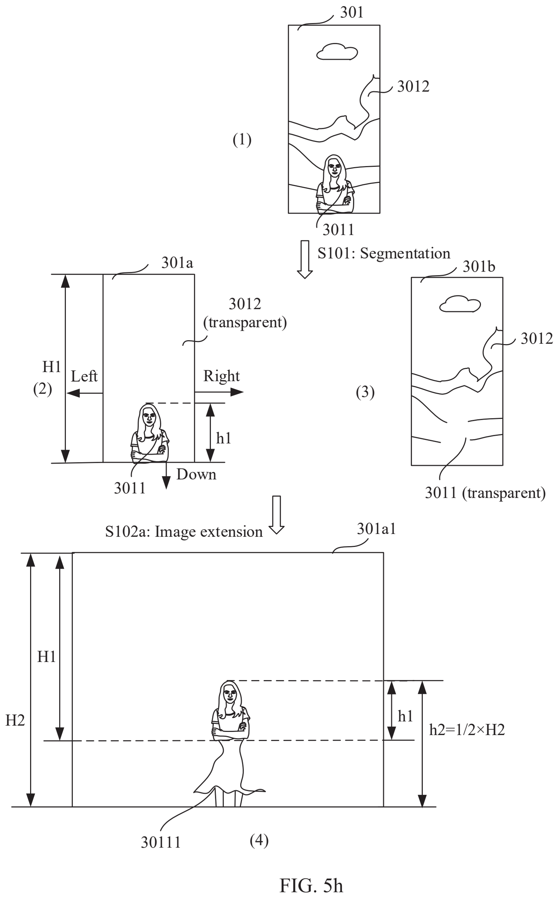

In the application scenario 4, FIG. 5h is a diagram of a process of segmenting, by the mobile phone, the first image and performing image extension on a subject image obtained through segmentation.

Between FIG. 5h and FIG. 5e, a process of image segmentation is the same. Details are not described herein again.

In addition, in the application scenario 4, for a process of performing, by the mobile phone, image extension on a background image, refer to the application scenario 1 to the application scenario 3 that correspond to FIG. 5e to FIG. 5g. Details are not described herein again.

A difference between FIG. 5h and FIG. 5e lies in: In the application scenario 4 shown in FIG. 5h, the first image to be set as the lock screen wallpaper is not a large banner image, and a ratio of a height of a subject element in the first image to a height of the first image is less than the second threshold (for example, 1:2).

With reference to FIG. 5h, the following describes a difference between the application scenario 4 and the application scenario 1 shown in FIG. 5e. Other processes are the same, and details are not described herein again.

As shown in FIG. 5h(1), the first image that the user requests, through an operation, to set as the lock screen wallpaper is an image 301. The mobile phone may segment the image 301 through S101 to obtain an image 301a (also referred to as a subject image) including a first subject element 3011, as shown in FIG. 5h(2), where a region (for example, a region in which a first background element 3012 is located) in the image 301a other than the first subject element 3011 is a transparent region, and obtain an image 301b (also referred to as a background image) including the first background element 3012, as shown in FIG. 5h(3), where a region (for example, a region in which the first subject element 3011 is located) in the image 301b other than the first background element 3012 is a transparent region.

In the application scenario 5, the mobile phone may determine that an aspect ratio of the image 301 serving as the first image is less than the first threshold, to determine that the image 301 shown in FIG. 5h(1) is not a large banner image. Therefore, in this embodiment, a background element needs to be extended in the background image obtained by segmenting the image 301, for example, the image 301b shown in FIG. 5h(3). For a principle of a specific extension process, refer to related descriptions in FIG. 5e to FIG. 5g. Details are not described herein again.

In addition, in the application scenario 5, the mobile phone may further determine that a ratio of a height h1 of the first subject element 3011 in the image 301a that is shown in FIG. 5h(2) and that is obtained through segmentation to a height H1 of the image 301a is less than the second threshold (for example, 1:2). To be specific, a height of a person serving as a subject element in the image 301a does not reach half of the height of the image 301a. Therefore, in this embodiment, the mobile phone may further extend the subject element in the image 301a through the AIGC technology, so that a ratio of a height of an extended subject element in the subject image to a height of the subject image reaches 1:2 or is more than 1:2.

As shown in FIG. 5h(2), the lock screen application of the mobile phone may invoke the UI framework, and perform S102a to perform downward extension, in a height direction as indicated by an arrow, on the first subject element 3011 in the image 301a shown in FIG. 5h(2). As shown in FIG. 5h(3), compared with the first subject element 3011 that exists before the extension, an extended subject element (also referred to as a second subject element) 30111 includes a lower body of the person through extension, a height h2 of the second subject element 30111 obtained through extension is half of a height H2 of the extended image 301a1.

As shown in FIG. 5h(2), the lock screen application of the mobile phone may further invoke the UI framework, and perform S102a to perform, in a width direction, leftward and rightward size extension on the image 301a shown in FIG. 5h(2) (a principle is the same as a principle of the size extension in S102a shown in FIG. 5e), so that an aspect ratio of a size of the extended image 301a1 shown in FIG. 5h is greater than the first threshold, and the image 301a1 is a large banner image.

It should be understood that FIG. 5e to FIG. 5h show merely examples of segmenting the first image into a subject element and a background element and extending the background element and the subject element in the four application scenarios. In this application, an extension direction and manner of the background element and the subject element in the first image are not limited to the foregoing examples. During specific application, a background element and/or a subject element may be flexibly extended in the first image in any direction according to an actual requirement, provided that the following is ensured: After an extended first image is used as the lock screen wallpaper, when a dynamic UI control is displayed on the lock screen interface of the mobile phone, by adjusting at least one of the subject element and the background element in the lock screen wallpaper, it can be ensured that the subject element is not blocked by the displayed dynamic UI control, and it can also be ensured that no blank region appears when an adjusted lock screen wallpaper is displayed on the screen of the mobile phone.

In this embodiment, before setting the lock screen wallpaper based on the first image, the mobile phone may extend the subject element and/or the background element in the first image, and then set the lock screen wallpaper based on the extended first image. This ensures that the subject element in the lock screen wallpaper is not blocked by the dynamic UI control displayed on the lock screen interface. During a subsequent wallpaper adjustment process, processing, such as scaling or moving, needs to be performed only on an element in the lock screen wallpaper, without extending the subject element and/or the background element in the lock screen wallpaper in real time, to reduce a delay and frame freezing during the lock screen wallpaper adjustment process.

### Example 2: Process of displaying a dynamic UI control and adjusting a lock screen wallpaper

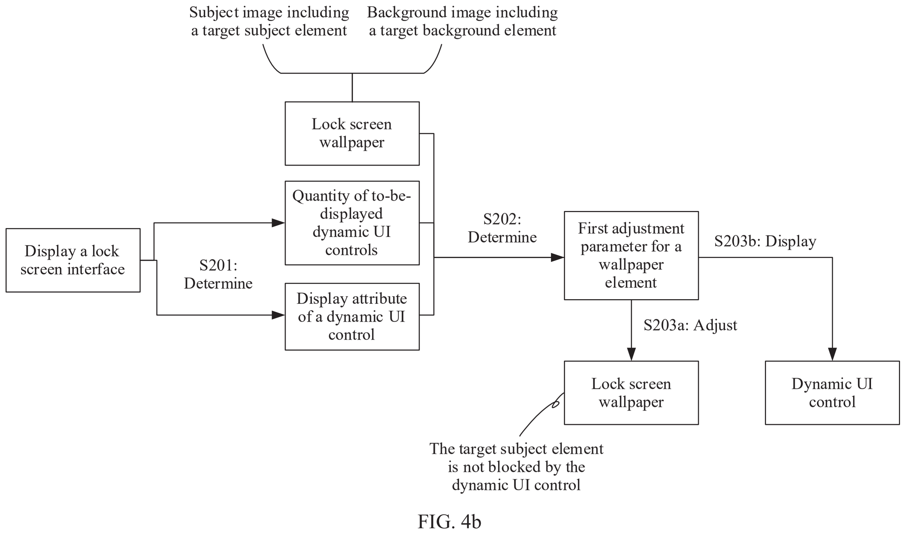

FIG. 4b is a diagram of an example lock screen wallpaper adjustment process.

As shown in FIG. 4b, a lock screen application of a mobile phone may invoke a UI framework to perform the following process. The process may include the following steps.

S201: When the mobile phone displays a lock screen interface, the mobile phone may determine a quantity of dynamic UI controls to be displayed on the lock screen interface and a display attribute of the dynamic UI control.

The dynamic UI control may include but is not limited to a message control related to a notification message, a live video window, a service card, and the like.

In some embodiments, a control type of the dynamic UI control to be displayed on the lock screen interface may be one control type, for example, a message control, a live video window, or a service card.

In some embodiments, a control type of the dynamic UI control to be displayed on the lock screen interface may be a plurality of control types, for example, a to-be-displayed message control and a live video window.

Each to-be-displayed dynamic UI control has a display attribute. The display attribute may include a control height, and optionally include a control width, a control display location, and the like.

Display sizes of dynamic UI controls of a same type may be the same or different. This is not limited herein.

For example, display sizes of a plurality of message controls are usually the same. Therefore, in some embodiments, the mobile phone may also determine a control height of a control of a corresponding type based on the control type of the dynamic UI control. Display sizes of different service cards may be the same or different.

S202: The mobile phone determines a first adjustment parameter for a wallpaper element in a lock screen wallpaper based on the quantity of to-be-displayed dynamic UI controls and the display attribute of the dynamic UI control.

As described in Example 1, the lock screen wallpaper may include a subject image including a target subject element and a background image including a target background element.

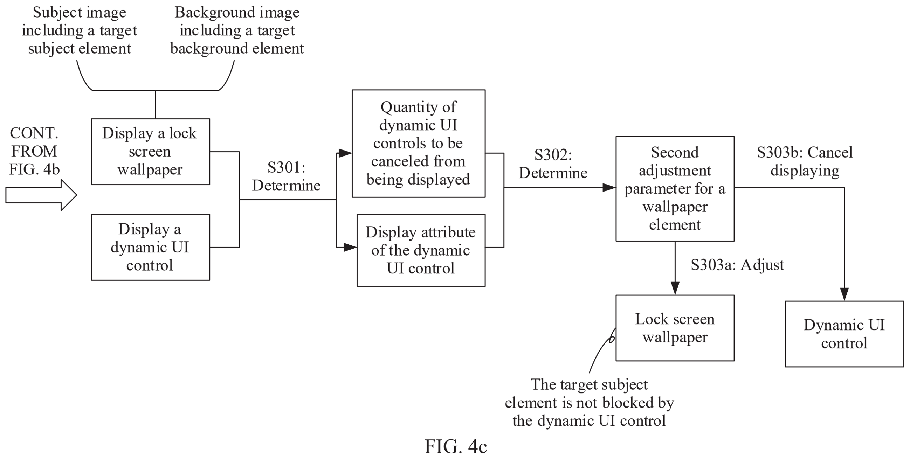

It should be understood that, although the lock screen wallpaper is segmented into only one subject image and one background image in the application scenarios in FIG. 5a(1) to FIG. 5d related to Example 1, in some embodiments, there may be a plurality of image objects corresponding to the target subject element. In this case, there may also be a plurality of subject images obtained through segmentation. For example, each subject image includes one subject element, and other regions are transparent. Similarly, the lock screen wallpaper may also be segmented into a plurality of background images. For example, each background image includes one background element, and other regions are transparent. Different background images may include different background elements. For example, in the scenarios in FIG. 5a(1) to FIG. 5d, the mobile phone may perform segmentation on an image including a sky element to obtain a background image, with other regions being transparent; and the mobile phone may perform segmentation on an image including a mountain element to obtain a background image, with other regions being transparent. If a photo includes a plurality of persons, at least one person may form a subject image, and a region in the subject image other than the at least one person is a transparent region. This solution is also applicable to an embodiment in FIG. 4c.

In some embodiments, the to-be-adjusted wallpaper element may be a part or all of target subject elements in the lock screen wallpaper. In other words, the mobile phone may adjust at least one of the foregoing subject images that forms the lock screen wallpaper.

In some embodiments, the to-be-adjusted wallpaper element may be a part or all of target background elements in the lock screen wallpaper. In other words, the mobile phone may adjust at least one of the foregoing background images that forms the lock screen wallpaper.

In some embodiments, the to-be-adjusted wallpaper element may include a part or all of target subject elements in the lock screen wallpaper and a part or all of target background elements in the lock screen wallpaper. In other words, the mobile phone may adjust both at least one of the foregoing subject images and at least one of the foregoing background images that form the lock screen wallpaper.

During specific application, one or more elements specifically included in the wallpaper element adjusted by the mobile phone may be flexibly determined based on the quantity of to-be-displayed dynamic UI controls and the display attribute of the dynamic UI control, and optionally, based on a control type, a wallpaper adjustment policy, and the like. This is not limited herein.

In addition, the first adjustment parameter determined by the mobile phone for the wallpaper element may be related to at least one of the quantity of to-be-displayed dynamic UI controls, the display attribute of the dynamic UI control, the control type, the wallpaper adjustment policy, and the like.

For example, an adjustment manner corresponding to the first adjustment parameter may include at least one of scale-down, scale-up, and moving. In this case, an adjustment amount (for example, a scale-down multiple, a scale-up multiple, or a quantity of pixels by which movement is performed, relative to a corresponding wallpaper element in an original lock screen wallpaper that exists before the adjustment) of each adjustment manner may be in a positive correlation relationship with information such as the quantity of to-be-displayed dynamic UI controls and the control height. In other words, a larger quantity of to-be-displayed dynamic UI controls indicates a larger height of the dynamic UI control and a larger scale-down multiple, a larger scale-up multiple, or a larger moving height of a corresponding wallpaper element. The original lock screen wallpaper indicates a lock screen wallpaper displayed on the mobile phone before a current wallpaper adjustment operation.

S203a: The mobile phone may adjust the wallpaper element in the lock screen wallpaper based on the first adjustment parameter.

In some embodiments, when adjusting the corresponding wallpaper element based on the first adjustment parameter, the mobile phone may play an adjustment process of the wallpaper element on the lock screen interface through motion effect. For example, an adjustment operation of moving down by 10 units of pixels is performed on the entire lock screen wallpaper. In this case, the mobile phone may play, based on a specific moving speed and specific duration, a move-down process of moving down the lock screen wallpaper by 10 units of pixels. In this way, a dynamic process of adjusting the lock screen wallpaper may be displayed to a user on the lock screen interface.

In some embodiments, the mobile phone may alternatively directly display, on the lock screen interface, an adjusted lock screen wallpaper, for example, a lock screen wallpaper obtained through move-down by 10 units of pixels.

S203b: After S202, the mobile phone may display the dynamic UI controls of the quantity on the lock screen interface.

As described in S201, the dynamic UI controls of the quantity are UI controls to be displayed on the lock screen interface. In this case, the mobile phone may display a corresponding quantity of dynamic UI controls on the lock screen interface based on respective display attributes of the dynamic UI controls.

Similar to S203a, in S203b, when displaying the dynamic UI controls of the quantity, the mobile phone may also display, by playing motion effect, a process of the dynamic UI controls appearing on the lock screen interface.

In some embodiments, S203a and S203b are parallel steps. To be specific, the mobile phone may adjust the lock screen wallpaper while displaying the dynamic UI controls on the lock screen interface.

In some embodiments, S203a and S203b may alternatively be performed in series. An execution order of the two steps is not limited in this application.

In this embodiment of this application, the mobile phone may determine the first adjustment parameter (for example, a scaling multiple, a moving height, or a moving direction) for the wallpaper element in the lock screen wallpaper based on the quantity of dynamic UI controls to be displayed on the lock screen interface and the display attribute of the dynamic UI control. When a lock screen wallpaper obtained through adjustment based on the first adjustment parameter is displayed on the lock screen interface, the target subject element in the lock screen wallpaper is not blocked by the dynamic UI control displayed on the lock screen interface, to highlight the subject element in the lock screen wallpaper on the lock screen interface.

It should be understood that all of the foregoing embodiments are described by using an example in which a person object is a subject element. In another embodiment, the subject element may be an image object of any type, for example, an animal, a plant, an article, or a building. A type of the image object related to the subject element is not limited in this application. In addition, the subject element in the lock screen wallpaper is not limited to the single person shown in the foregoing examples, and there may be a plurality of image objects serving as the subject element, for example, a plurality of persons, or a person and an animal. This is not limited herein either.

With reference to an application scenario 5 to an application scenario 7, the following describes the process shown in FIG. 4b in Example 2.

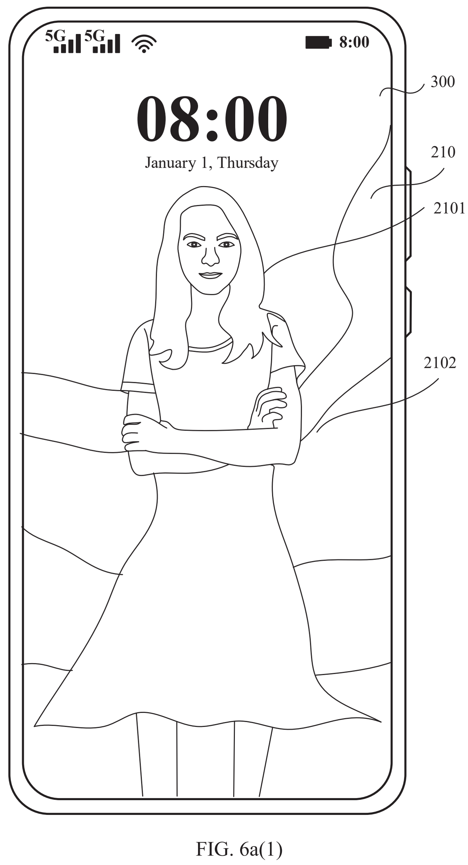

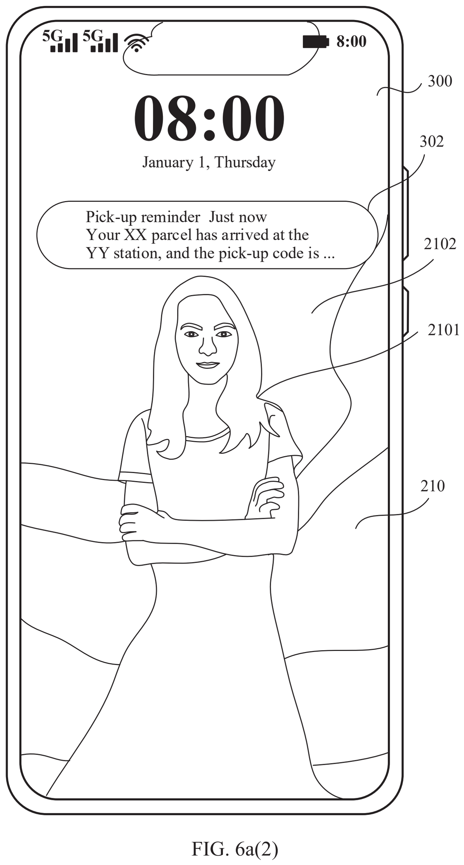

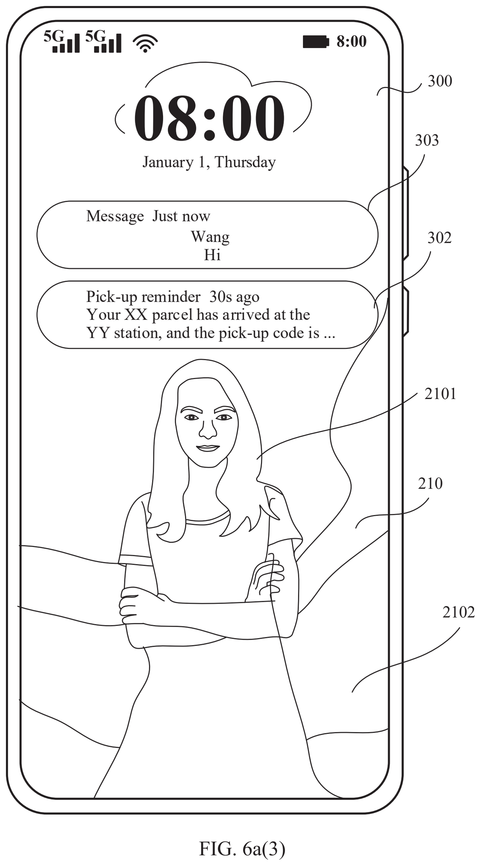

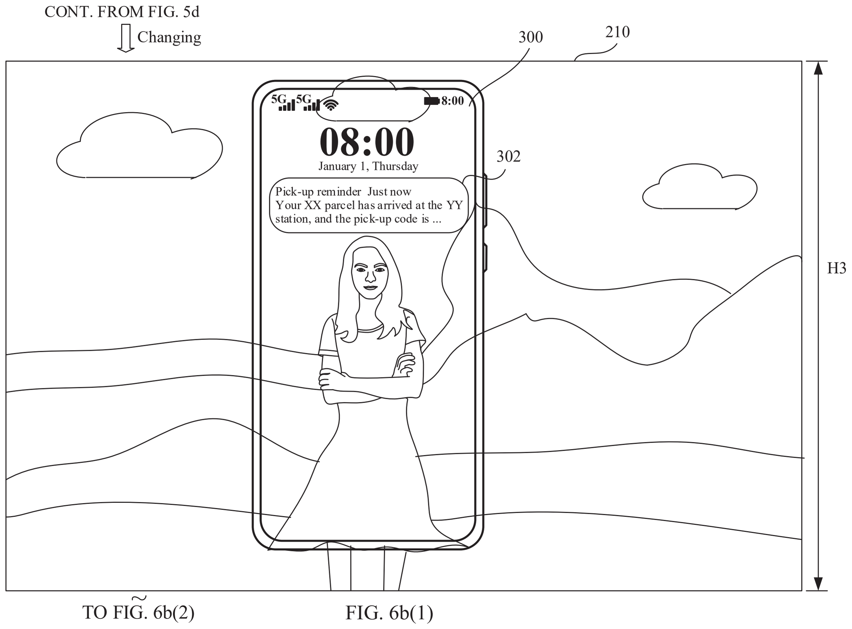

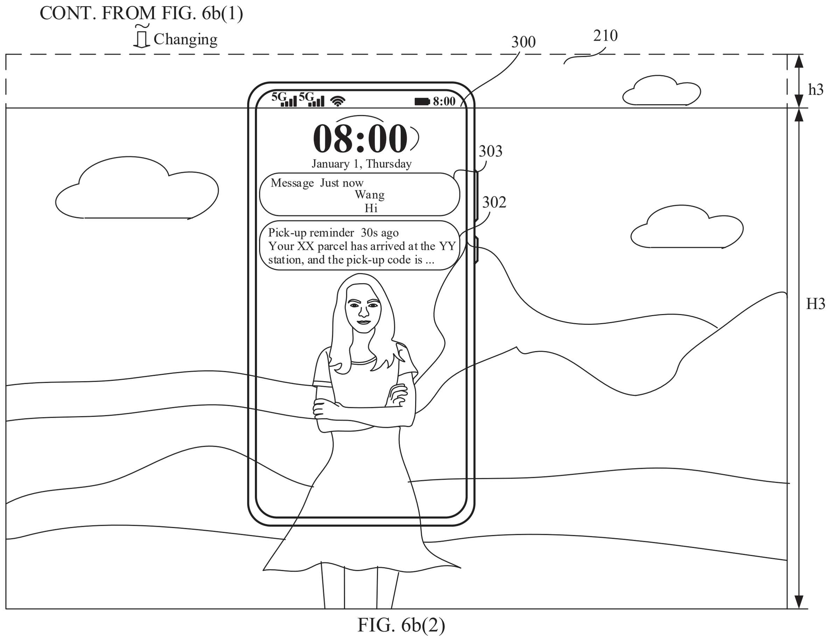

In the application scenario 5, with reference to FIG. 5a(1) to FIG. 5d, FIG. 6a(1) to FIG. 6a(3), FIG. 6b(1), and FIG. 6b(2) are diagrams of a process of adjusting the lock screen wallpaper by the mobile phone.

6a(1) shows a lock screen interface 300 of the mobile phone. A lock screen wallpaper 210 that is set through the wallpaper setting process shown in FIG. 5a(1) to FIG. 5d is displayed on the lock screen interface 300. In addition, a static UI control, for example, a network icon, a battery level icon, a time icon, or a date icon is further displayed on the lock screen wallpaper 300.

When the mobile phone displays the lock screen interface 300 shown in FIG. 6a(1), the mobile phone receives a notification message. In this case, the mobile phone may determine, through S202 shown in FIG. 4b, information, that is, a display location, a height, and a quantity (1 herein), about a message control related to the notification message, to determine a move-down height of the lock screen wallpaper 210; move down the lock screen wallpaper 210 based on the move-down height; and display the notification message on the lock screen interface 300, so that the lock screen interface 300 of the mobile phone switches (through direct switching or dynamic changing) from a state shown in FIG. 6a(1) to a state shown in FIG. 6a(2).

As shown in FIG. 6a(2), a currently received notification message 302 is displayed on the lock screen interface 300. In addition, the mobile phone moves down the entire lock screen wallpaper 210 (including a target subject element 2101 and a target background element 2102) on the lock screen interface 300, so that the pop-up notification message 302 does not block the target subject element 2101 in the lock screen wallpaper 210.

FIG. 6b(1) and FIG. 6b(2) show a specific move-down process of the lock screen wallpaper 210. In the scenario shown in FIG. 6a(1), a display location of the lock screen wallpaper 210 on the lock screen interface 300 is shown in FIG. 5d. In this case, when the mobile phone displays the notification message 302 on the lock screen interface 300, as shown in FIG. 6b(1), the mobile phone may move down the lock screen wallpaper 210, specifically including the image 210a and the image 210b shown in FIG. 5c(1) to FIG. 5c(3), by a corresponding height, to display a lock screen wallpaper 210 shown in FIG. 6a(2). A display state of the lock screen wallpaper 210 shown in FIG. 6b(1) is the same as a display state of the lock screen wallpaper 210 shown in FIG. 6a(2), except that a wallpaper element that exceeds a screen of the mobile phone in FIG. 6b(1) is not displayed on the lock screen interface 300.

When the mobile phone displays the lock screen interface 300 shown in FIG. 6a(2), the mobile phone receives a notification message again. In this case, the mobile phone may determine, through S202 shown in FIG. 4b, information, that is, a display location, a height, and a quantity (1 herein), about a message control related to the notification message, to determine a move-down height of the lock screen wallpaper 210; move down the lock screen wallpaper 210 based on the move-down height; and display the notification message on the lock screen interface 300, so that the lock screen interface 300 of the mobile phone switches (through direct switching or dynamic changing) from a state shown in FIG. 6a(2) to a state shown in FIG. 6a(3).

As shown in FIG. 6a(3), both the previously received notification message 302 and a currently received notification message 303 are displayed on the lock screen interface 300. In addition, the mobile phone further moves down the entire lock screen wallpaper 210 (including the target subject element 2101 and the target background element 2102) on the lock screen interface 300 in the state shown in FIG. 6a(2), so that the pop-up notification message 303 does not block the target subject element 2101 in the lock screen wallpaper 210.

FIG. 6b(1) and FIG. 6b(2) show a specific move-down process of the lock screen wallpaper 210. In the scenario shown in FIG. 6a(2), a display location of the lock screen wallpaper 210 on the lock screen interface 300 is shown in FIG. 6b(1). In this case, when the mobile phone displays the notification message 303 (a corresponding quantity of to-be-displayed notification messages is 1) on the lock screen interface 300, as shown in FIG. 6b(2), the mobile phone may move down the lock screen wallpaper 210, specifically including the image 210a and the image 210b shown in FIG. 5c(1) to FIG. 5c(3), by a corresponding height, so that the lock screen wallpaper 210 switches from a state shown in FIG. 6b(1) to a state shown in FIG. 6b(2), to display a lock screen wallpaper 210 shown in FIG. 6a(3). The display state of the lock screen wallpaper 210 shown in FIG. 6b(2) is the same as a display state of the lock screen wallpaper 210 shown in FIG. 6a(3), except that a wallpaper element that exceeds a screen of the mobile phone in FIG. 6b(2) is not displayed on the lock screen interface 300.

When the mobile phone moves down the lock screen wallpaper 210 shown in FIG. 6a(2) to display the lock screen wallpaper 210 shown in FIG. 6a(3), a height of the lock screen wallpaper 210 is H3, as shown in FIG. 6b(1). In this case, after the lock screen wallpaper 210 is further moved down from the state shown in FIG. 6b(1) based on a corresponding move-down height, as shown in FIG. 6b(2), no image element is displayed in a top region of the lock screen wallpaper 210 on the screen, and a blank region is displayed. Therefore, when adjusting the lock screen wallpaper 210 this time, as shown in FIG. 6b(2), the mobile phone may perform, in a height direction of the lock screen wallpaper 210, external extension from a top edge (indicated by a solid line) of the lock screen wallpaper 210 to a dashed line (an extension height is h3), to extend a target background element in the lock screen wallpaper 210. Herein, a blue sky and white cloud element is extended. In this way, the height of the lock screen wallpaper 210 is extended from H3 to H3+h3, as shown in FIG. 6b(2) and FIG. 6a(3). In this case, after an extended lock screen wallpaper 210 is moved down by a corresponding height, no blank region appears; instead, the extended blue sky background element is displayed.

In this embodiment, during extension of a wallpaper element (a background element herein) in the lock screen wallpaper 210, an extension principle and policy are the same as the principle described in S102 in Example 1. Details are not described herein again.

To be specific, S102 may be implemented not only in the lock screen wallpaper setting process, but also in the lock screen wallpaper adjustment process, to flexibly determine an extension manner of a wallpaper element according to an actual display requirement of the lock screen wallpaper.

In this embodiment of this application, information, such as a type, a size, and a quantity, about a dynamic UI control to be displayed on the lock screen interface is unpredictable before the lock screen wallpaper is set. Therefore, to ensure that a subject element in the lock screen wallpaper is not blocked by a dynamic UI control displayed on the lock screen interface, a first adjustment parameter for adjusting the lock screen wallpaper may be determined based on determined information about the dynamic UI control, and the subject element and/or a background element in the lock screen wallpaper are/is extended in real time based on the first adjustment parameter before the lock screen wallpaper is adjusted by using the first adjustment parameter. Then an extended lock screen wallpaper is correspondingly adjusted, to ensure that after a corresponding wallpaper element in the extended lock screen wallpaper is processed, for example, scaled or moved (moved down herein), no gap (which is not filled with an image element) appears between different elements in the lock screen wallpaper displayed on the screen of the mobile phone.

In this embodiment of this application, an example in which the dynamic UI control is a notification message and a quantity of notification messages to be displayed on the lock screen interface each time is 1 is used to describe the lock screen wallpaper adjustment process in this application. It should be understood that, when a quantity of notification messages to be displayed on the lock screen interface each time is greater than 1, an implementation principle of the process is similar, except that a move-down height of the lock screen wallpaper may be directly proportional to the quantity. For example, when two notification messages are to be displayed at a time, the lock screen interface of the mobile phone may directly switch from FIG. 6a(1) to the lock screen interface 300 shown in FIG. 6a(3), so that a single move-down height of the lock screen wallpaper 210 is a move-down height corresponding to the two notification messages.

In addition, in the application scenario shown in FIG. 6a(1) to FIG. 6a(3), FIG. 6b(1), and FIG. 6b(2) in this application, the entire lock screen wallpaper 210 is moved down to avoid a problem that a notification message displayed on the lock screen interface blocks the target subject element 2101 in the lock screen wallpaper 210, to highlight the target subject element 2101 on the lock screen interface 300. In this wallpaper adjustment manner of moving down the entire lock screen wallpaper, complexity of adjusting the lock screen wallpaper is lower, so that the lock screen wallpaper adjustment process can be performed more smoothly.

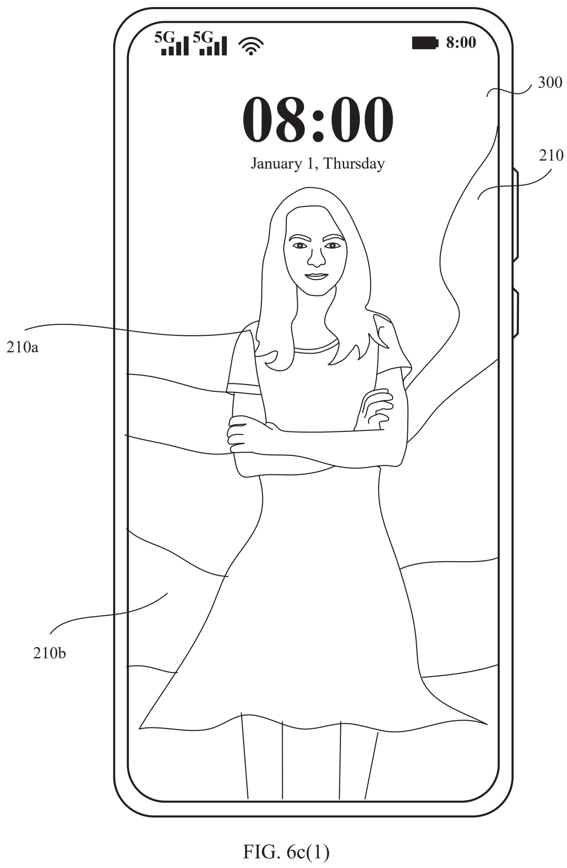

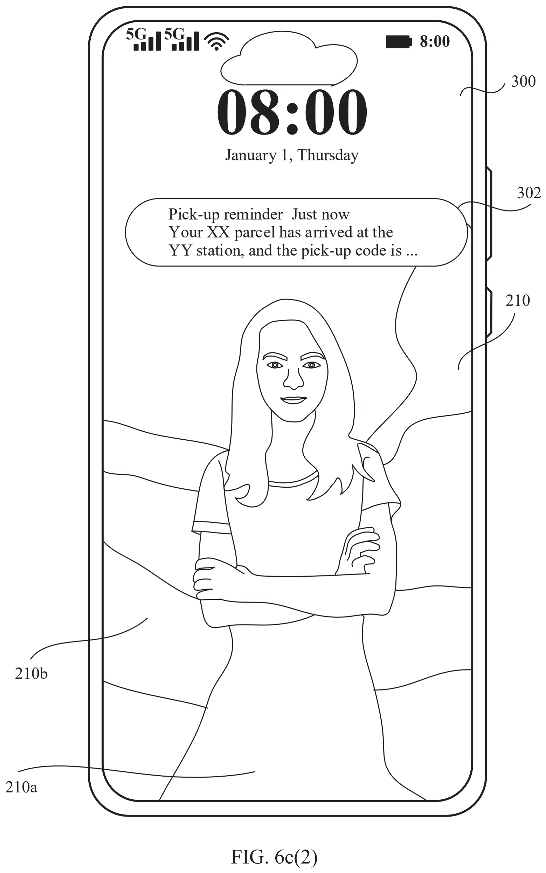

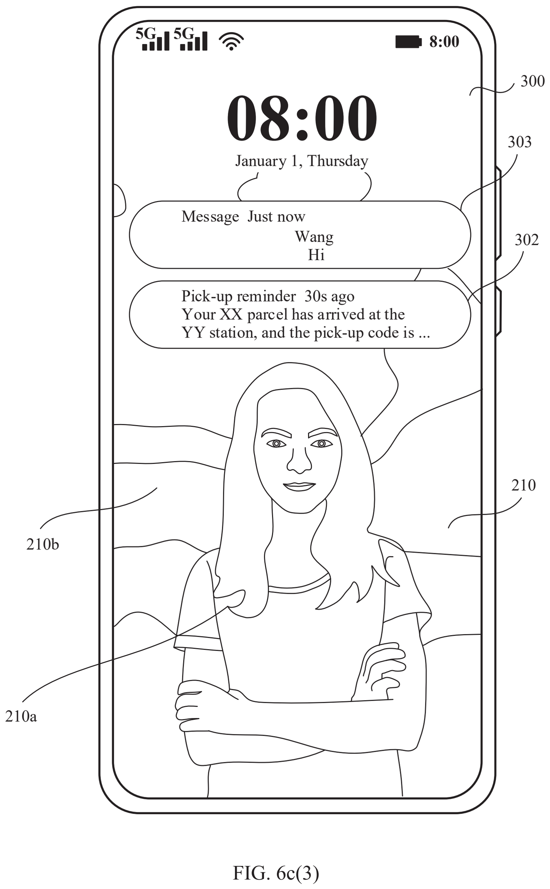

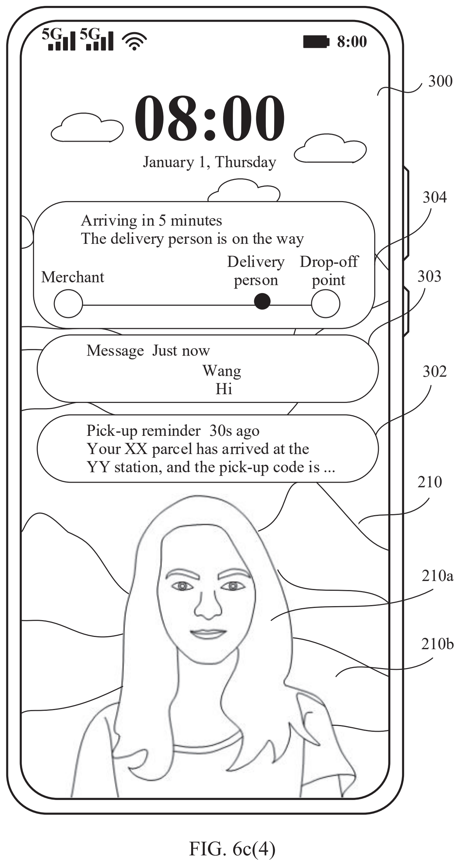

In the application scenario 6, with reference to FIG. 5a(1) to FIG. 5d, FIG. 6c(1) to FIG. 6c(4) are a diagram of a process of adjusting the lock screen wallpaper by the mobile phone.

Between the application scenario 6 and the application scenario 5, an implementation process of FIG. 4b is basically the same. A difference from the application scenario 5 (corresponding to FIG. 6a(1) to FIG. 6a(3), FIG. 6b(1), and FIG. 6b(2)) lies in: In the application scenario 6, a dynamic UI control to be displayed by the mobile phone on the lock screen interface may be both a notification message and a live video window. In addition, in the application scenario 6, a manner of adjusting a wallpaper element in the lock screen wallpaper includes not only move-down adjustment of the entire lock screen wallpaper, but also a scale-down operation on a background image in the lock screen wallpaper and a scale-up operation on a subject image.

FIG. 6c(1) shows a lock screen interface 300 of the mobile phone. A lock screen wallpaper 210 that is set through the wallpaper setting process shown in FIG. 5a(1) to FIG. 5d is displayed on the lock screen interface 300. With reference to FIG. 5c(1) to FIG. 5c(3), the lock screen wallpaper 210 shown in FIG. 6c(1) includes an image 210a (also expressed as a subject image 210a in the application scenario 6) including a target subject element 2101 and an image 210b (also expressed as a background image 210b in the application scenario 6) including a target background element 2101.

When the mobile phone displays the lock screen interface 300 shown in FIG. 6c(1), the mobile phone receives a notification message. In this case, the mobile phone may determine, through S202 shown in FIG. 4b, information, that is, a height and a quantity (1 herein), about a message control related to the notification message, to determine a scale-down multiple of the background image 210b in the lock screen wallpaper 210 shown in FIG. 6c(1), a scale-up multiple of the subject image 210a, a move-down height for moving down the background image 210b, and a move-down height for moving down the subject image 210a. In this embodiment, the move-down height of the subject image 210a is the same as the move-down height of the background image 210b.

In another embodiment, the move-down height corresponding to the background image 210b and the move-down height corresponding to the subject image 210a may alternatively be different.

To make the move-down height of the subject image 210a and the move-down height of the background image 210b different, in some embodiments, a principle that an object closer appears larger and an object farther away appears smaller may be followed. Specifically, because a depth-of-field of the subject image 210a is less than a depth-of-field of the background image 210b, the mobile phone may control the move-down height of the subject image 210a to be greater than the move-down height of the background image 210b. A height difference between the move-down height of the subject image 210a and the move-down height of the background image 210b may be related to a depth-of-field difference between the subject image 210a and the background image 210b. From a visual perspective, to be specific, the height difference is related to a distance between a subject element in the subject image 210a and a background element in the background image 210b.

A larger depth-of-field difference indicates a larger height difference. For example, the background element in the background image is a sky element, and the sky is infinitely away from the subject element (for example, a person). In this case, the mobile phone may control the subject image 210a to move down by a specific height, and the background image 210b is not moved down, in other words, the move-down height is 0.

Similarly, a smaller depth-of-field difference indicates a smaller height difference. For example, if a picture of the lock screen wallpaper is a picture in which a person stands against a wall, the subject element in the lock screen wallpaper is the person, and the background element is the wall. Because the person stands against the wall, a depth-of-field difference between the person and the wall is quite small. In this way, a mobile phone may control a subject image including the person and a background image including the wall to move down by similar heights, so that a height difference between the person and the wall is quite small.

In this way, the mobile phone moves down the subject image and the background image by different heights, to implement movement of the subject element and the background element at different layers, and produce effect similar to a three-dimensional animation.

Still refer to the embodiment of FIG. 6c(1) to FIG. 6c(4). A principle of an adjustment process of the foregoing adjustment operations performed by the mobile phone on the background image 210b and the subject image 210a shown in FIG. 6c(1) is similar to a principle of the process in FIG. 6b(1) and FIG. 6b(2) in the application scenario 5. A difference lies in: In the application scenario 6, in addition to move-down processing on the background image 210b and the subject image 210a, scale-down processing is further performed on the background image 210b, and scale-up processing is further performed on the subject image 210a.

In addition, for a scale-down operation performed by the mobile phone on the background image 210b in the lock screen wallpaper 210 shown in FIG. 6c(1) based on a determined corresponding scale-down multiple, a scale-up operation performed on the subject image 210a based on a corresponding scale-up multiple, and move-down operations performed on the background image 210b and the subject image 210a based on corresponding heights, these operations may be performed simultaneously or in series. This is not limited in this application.

In this embodiment, in response to a display request of the mobile phone for a to-be-displayed dynamic UI control (for example, in a scenario in which a notification message 302 shown in FIG. 6c(2) is to be displayed), various adjustment operations (for example, the foregoing scale-up, scale-down, and move-down) performed by the mobile phone on a wallpaper element in the lock screen wallpaper 210 may be performed simultaneously instead of in series. In this way, when an adjustment process of the lock screen wallpaper 210 is played through motion effect, the motion effect can be more coherent and smoother, to reduce frame freezing.

FIG. 6c(2) shows a lock screen wallpaper 210 obtained by the mobile phone by performing, based on a quantity of notification messages 302 and a control height, a scale-up operation on the subject image 210a shown in FIG. 6c(1), a scale-down operation on the background image 210b, and move-down operations of a same height on both the subject image 210a and the background image 210b. In addition, the notification message 302 is further displayed on the lock screen interface 300 shown in FIG. 6c(2).

In this embodiment, the lock screen wallpaper 210 shown in FIG. 6c(1) may dynamically change to a lock screen wallpaper 210 shown in FIG. 6c(2) based on the foregoing various adjustment operations.

In comparison with the lock screen wallpaper 210 shown in FIG. 6c(1), a subject image 210a in the lock screen wallpaper 210 shown in FIG. 6c(2) has been scaled up and moved down, and a background image 210b in the lock screen wallpaper 210 shown in FIG. 6c(2) has been scaled down and moved down.

Then, when the mobile phone displays the lock screen interface 300 shown in FIG. 6c(2), the mobile phone receives a notification message again. In this case, the mobile phone may perform S201, S202, S203a, and S203b shown in FIG. 4b to dynamically change the lock screen interface of the mobile phone from the lock screen interface 300 shown in FIG. 6c(2) to a lock screen interface 300 shown in FIG. 6c(3).

In comparison with FIG. 6c(2), as shown in FIG. 6c(3), a currently received notification message 303 is newly displayed on the lock screen interface 300 of the mobile phone. In addition, the mobile phone further dynamically changes the lock screen wallpaper 210 from a state shown in FIG. 6c(2) to a state shown in FIG. 6c(3). A principle of dynamically changing, by the mobile phone, the lock screen wallpaper 210 from the state shown in FIG. 6c(2) to the state shown in FIG. 6c(3) is the same as a principle of dynamically changing, by the mobile phone, the lock screen wallpaper 210 from a state shown in FIG. 6c(1) to the state shown in FIG. 6c(2). Details are not described herein again.

In comparison with the lock screen wallpaper 210 shown in FIG. 6c(2), a subject image 210a in a lock screen wallpaper 210 shown in FIG. 6c(3) has been scaled up and moved down, and a background image 210b in the lock screen wallpaper 210 shown in FIG. 6c(3) has been scaled down and moved down.

Then, when the mobile phone displays the lock screen interface 300 shown in FIG. 6c(3), the mobile phone requests to display a live video window. In this case, the mobile phone may perform S201, S202, S203a, and S203b shown in FIG. 4b to dynamically change the lock screen interface of the mobile phone from the lock screen interface 300 shown in FIG. 6c(3) to a lock screen interface 300 shown in FIG. 6c(4).

In comparison with FIG. 6c(3), as shown in FIG. 6c(4), a live video window 304 is newly displayed on the lock screen interface 300 of the mobile phone. In addition, the mobile phone further dynamically changes the lock screen wallpaper 210 from the state shown in FIG. 6c(3) to a state shown in FIG. 6c(4). A principle of dynamically changing, by the mobile phone, the lock screen wallpaper 210 from the state shown in FIG. 6c(3) to the state shown in FIG. 6c(4) is the same as the principle of dynamically changing, by the mobile phone, the lock screen wallpaper 210 from the state shown in FIG. 6c(1) to the state shown in FIG. 6c(2). A difference lies in: A dynamic UI control to be displayed this time is not a notification message, but is the live video window 304. A control height of the live video window 304 is greater than a control height of the notification message 302 or the notification message 303. Therefore, a scale-up multiple used by the mobile phone to scale up the subject image 201a in the lock screen wallpaper 210 shown in FIG. 6c(3), a scale-down multiple used to scale down the background image 201b, and move-down heights of the subject image 201a and the background image 210b this time are greater than adjustment amounts used by the mobile phone to perform corresponding adjustment operations on the lock screen wallpaper 210 during changing from FIG. 6c(1) to FIG. 6c(2) or from FIG. 6c(2) to FIG. 6c(3).

In comparison with the lock screen wallpaper 210 shown in FIG. 6c(3), a subject image 210a in a lock screen wallpaper 210 shown in FIG. 6c(4) has been further scaled up and moved down, and a background image 210b in the lock screen wallpaper 210 shown in FIG. 6c(4) has been further scaled down and moved down.

In this embodiment, the dynamic UI control to be displayed by the mobile phone on the lock screen interface may be both a notification message and a live video window. When displaying a dynamic UI control, for example, a notification message or a live video window, on the lock screen interface, the mobile phone can adjust the lock screen wallpaper to ensure that the notification message or the live video window does not block a subject element in the lock screen wallpaper, to display the dynamic UI control on the lock screen interface while highlighting the subject element in the lock screen wallpaper. In addition, in this embodiment, when adjusting the lock screen wallpaper, the mobile phone performs a scale-down operation on a background image in the lock screen wallpaper, a scale-up operation on a subject image, and move-down operations on both the subject image and the background image. In this case, a corresponding wallpaper element in the lock screen wallpaper is adjusted based on the foregoing three types of operations, to present motion effect of Hitchcock zooming on the lock screen wallpaper.

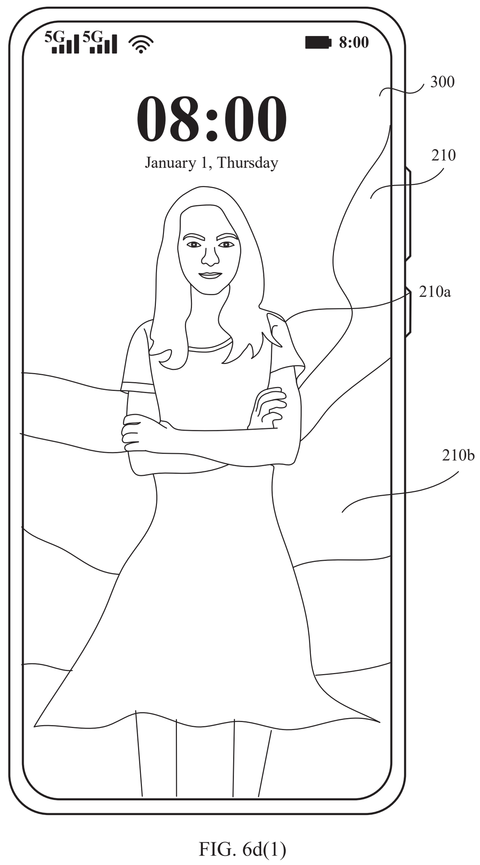

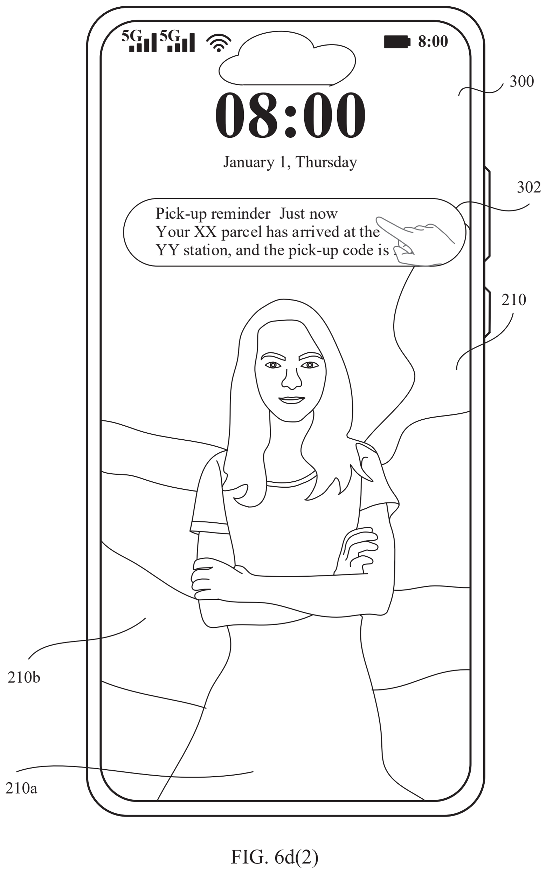

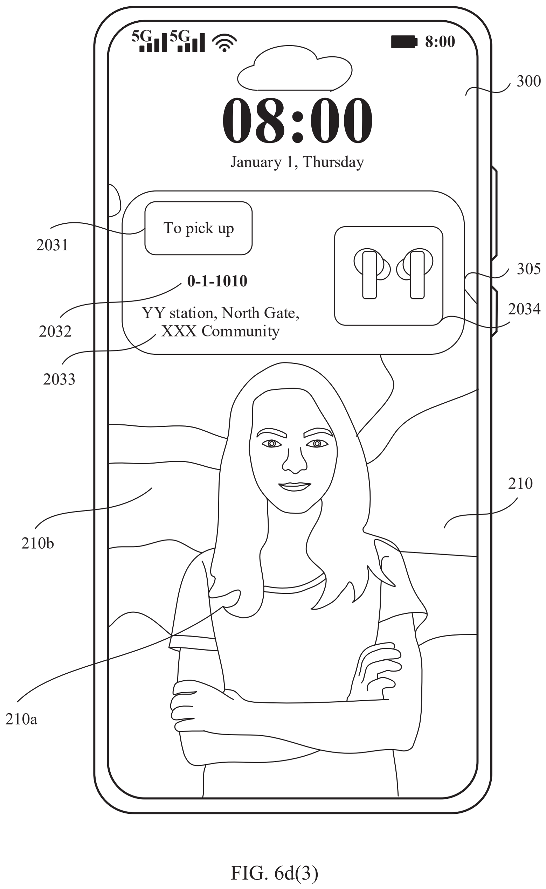

In the application scenario 7, with reference to FIG. 5a(1) to FIG. 5d, FIG. 6d(1) to FIG. 6d(3) are a diagram of a process of adjusting the lock screen wallpaper by the mobile phone.

Between the application scenario 7 and the application scenario 6, an implementation process of the mobile phone is mostly the same. A difference lies in: In the application scenario 7, the mobile phone may perform, on the lock screen wallpaper based on a control type of a dynamic UI control to be displayed on the lock screen interface, a wallpaper adjustment operation corresponding to the control type. Herein, a notification message and a service card are used as examples for description.

Refer to FIG. 6d(1) to FIG. 6d(3). A lock screen interface 300 shown in FIG. 6d(1) is the same as the lock screen interface 300 shown in FIG. 6c(1), and a lock screen interface 300 shown in FIG. 6d(2) is the same as the lock screen interface 300 shown in FIG. 6c(2).

When the mobile phone displays the lock screen interface 300 shown in FIG. 6d(1), the mobile phone receives a notification message. In this case, the mobile phone may determine that a control type of a dynamic UI control to be displayed on the lock screen interface is a notification message. For example, the mobile phone preconfigures a wallpaper adjustment policy corresponding to the control type (for example, a message control) of the notification message. The wallpaper adjustment policy may include a wallpaper element to undergo an operation and an operation to be performed on the wallpaper element, and optionally further include information like an adjustment amount of each operation.

For example, the wallpaper adjustment policy corresponding to the control type of the notification message may include scaling down a background image, scaling up a subject image, and moving down the entire lock screen wallpaper in a same direction (for example, moving down both the subject image and the background image by a same height), and optionally include a scale-down multiple of the scale-down operation, a scale-up multiple of the scale-up operation, and a move-down height of the move-down operation.

In this embodiment, the wallpaper adjustment policy corresponding to the control type of the notification message does not include adjustment amounts of the foregoing operations. In this case, the mobile phone may determine, through S202 shown in FIG. 4b, information, that is, a height and a quantity (1 herein), about a message control related to the notification message, to determine, based on the height of the message control and a quantity of to-be-displayed message controls, a scale-down multiple of a background image 210b in a lock screen wallpaper 210 shown in FIG. 6d(1), a scale-up multiple of a subject image 210a, a move-down height of the background image 210b, and a move-down height of the subject image 210a (for example, the move-down height of the background image 210b is the same as the move-down height of the subject image 210a).

In this embodiment, the first adjustment parameter for the wallpaper element shown in FIG. 4b may include the wallpaper adjustment policy corresponding to the control type of the notification message, and an adjustment amount of each operation corresponding to the wallpaper adjustment policy.

Then the mobile phone may perform S203a shown in FIG. 4b to scale down the background image 210b in the lock screen wallpaper 210 shown in FIG. 6d(1) based on the determined scale-down multiple, scale up the subject image 210a shown in FIG. 6d(1) based on the determined scale-up multiple, and perform move-down operations on both the subject image 210a and the background image 210b shown in FIG. 6d(1) based on the move-down height, to directly switch or dynamically change, through motion effect, from the lock screen wallpaper 210 shown in FIG. 6d(1) to a lock screen wallpaper 210 shown in FIG. 6d(2).

In addition, the mobile phone may perform S203b shown in FIG. 4b to display a notification message 302 on the lock screen interface 300.

In this way, the lock screen interface of the mobile phone switches from the lock screen interface 300 shown in FIG. 6d(1) to the lock screen interface 300 shown in FIG. 6d(2).

Still refer to FIG. 6d(1) to FIG. 6d(3). When the mobile phone displays the lock screen interface 300 shown in FIG. 6d(2), a user performs a touch-and-hold operation on the notification message 302. A specific operation type herein is not limited, and may be flexibly configured according to a requirement. In response to the user operation, the mobile phone may generate, based on the notification message 302, a service card (a service card 305 shown in FIG. 6d(3) herein) related to the notification message 302.

For example, the mobile phone may invoke an artificial intelligence (Artificial Intelligence, AI) module to perform AI recognition on a received target input (for example, the touch-and-hold operation on the notification message 302) in response to a received indication, generate service information based on the notification message 302, and generate the service card based on the service information.

For example, the mobile phone may perform AI recognition on message content of the notification message 302 in response to the touch-and-hold operation on the notification message 302, to obtain structured service information. For example, the service information may include but is not limited to a pick-up location, a pick-up code, an item type of an item in express delivery, a courier company name, and the like. Then the mobile phone may determine, by using the recognized service information, that the notification message 302 shown in FIG. 6d(2) needs to be refreshed to the service card 305 shown in FIG. 6d(3).

In this way, the mobile phone can determine that the service card 305 to be displayed on the lock screen interface 300 and the notification message 302 to be canceled from being displayed on the lock screen interface 300 exist.

Then the mobile phone may determine, based on a control type (a service card herein) of the to-be-displayed service card 305, a wallpaper adjustment policy corresponding to the control type.

For example, a wallpaper adjustment policy that is preset by the mobile phone and that corresponds to the control type of the service card may include: scaling down a background image, scaling up a subject image, and moving down only the subject object, and optionally include a scale-down multiple of the scale-down operation, a scale-up multiple of the scale-up operation, and a move-down height of the move-down operation.

In addition, the mobile phone may determine, based on a control height of the service card 305 and a control height of the notification message 302, for example, a height difference between the control height of the service card 305 and the control height of the notification message 302, and based on a quantity (1 herein) of to-be-displayed service cards, a scale-down multiple of a background image 210b (for example, scale-down to half of the background image 210b) in the lock screen wallpaper 210 shown in FIG. 6d(2), a scale-up multiple of a subject image 210a in the lock screen wallpaper 210 shown in FIG. 6d(2), and a move-down height of the subject image 210a. An original lock screen wallpaper corresponding to operation amounts of the operations included in the wallpaper adjustment this time is the lock screen wallpaper 210 shown in FIG. 6d(2).

Then the mobile phone may adjust the lock screen wallpaper 210 shown in FIG. 6d(2) by a corresponding multiple and a corresponding height according to the wallpaper adjustment policy corresponding to the control type of the service card and the determined operation amounts (the scale-down multiple, the scale-up multiple, and the move-down height) of the operations, to directly switch or dynamically change to a lock screen wallpaper 210 shown in FIG. 6d(3). In addition, the mobile phone may update the notification message 302 shown in FIG. 6d(2) to the service card 305 shown in FIG. 6d(3).

As shown in FIG. 5d(3), the service card 305 may include but is not limited to a control 2031, a control 2032, a control 2033, a control 2034, and the like. The control 2031 indicates information about an express parcel that is not picked up, for example, "To pick up". The control 2032 indicates a pick-up code, for example, "0-1-1010". The control 2033 indicates a pick-up location, for example, "YY station, North Gate, XXX Community". The control 2034 may be a picture, to indicate an item type of an item in an express parcel to be picked up. For example, the item type herein is a headset.

Through comparison between the lock screen wallpaper 210 shown in FIG. 6d(2) and the lock screen wallpaper 210 shown in FIG. 6d(3), the subject image 210a in the lock screen wallpaper 210 has undergone scale-up and move-down processing, and the background image 210b has undergone scale-down processing without move-down processing.

In the application scenario 7 corresponding to FIG. 6d(1) to FIG. 6d(3), the lock screen application of the mobile phone may invoke the UI framework module to adjust a wallpaper element in the lock screen wallpaper according to a wallpaper adjustment policy corresponding to a control type of a current to-be-displayed dynamic UI control. An adjustment amount of the wallpaper element may be determined based on a control height of the current to-be-displayed dynamic UI control and a control quantity of the dynamic UI control. In this way, when the control type of the to-be-displayed dynamic UI control varies, the mobile phone may play the lock screen wallpaper through different motion effect (corresponding to motion effect of the adjustment), and the motion effect can match the control type.

In addition, when at least one dynamic UI control is displayed, if there is still a dynamic UI control that needs to be canceled from being displayed, an adjustment amount of the wallpaper element this time may be further determined based on a control height and a control quantity of the dynamic UI control to be canceled from being displayed, so that a change in the lock screen wallpaper can match a control type and a control quantity of a dynamic UI control that is finally displayed on the lock screen interface.

In addition, in the application scenario 7, an example in which one dynamic UI control (for example, the service card 305 shown in FIG. 6d(3)) is displayed at a time is used to describe a process of adjusting the lock screen wallpaper by the mobile phone. When dynamic UI controls of a plurality of control types are displayed at a time and each type of dynamic UI control includes a plurality of dynamic UI controls, a principle of an implementation process is the same. A difference lies only in: A first adjustment parameter finally determined by the mobile phone for the lock screen wallpaper is a cumulative result of wallpaper adjustment policies and adjustment amounts that respectively correspond to the plurality of types of dynamic UI controls.

For example, when the mobile phone displays one lock screen wallpaper (an original lock screen wallpaper herein), it is determined that a dynamic UI control to be displayed this time includes two notification messages and one service card. A wallpaper adjustment policy corresponding to a control type of the notification message is: scaling up a subject image to twice a subject image in the original lock screen wallpaper, scaling down a background image to 1/10 of a background image in the original lock screen wallpaper, and moving down the entire lock screen wallpaper by a height of five pixels (to be specific, moving down the subject image and the background image by a same height).

A wallpaper adjustment policy corresponding to a control type of the service card is: scaling up a subject image to three times a subject image in the original lock screen wallpaper, scaling down a background image to 1/5 of a background image in the original lock screen wallpaper, and moving down the subject image by a height of 10 pixels.

There are two to-be-displayed notification messages, and there is one to-be-displayed service card. In this case, the mobile phone may determine, through accumulation based on quantities of various types of to-be-displayed dynamic UI controls and wallpaper adjustment policies for the dynamic UI controls, that a first adjustment parameter for a wallpaper element in the lock screen wallpaper includes: scaling up a subject image by seven times, scaling down a background image by 2/5, moving down the subject image by a height of 20 pixels, and moving down the background image by a height of 10 pixels.

In this way, when displaying two notification messages and one service card on the lock screen interface, the mobile phone may perform an adjustment operation of scaling up a subject image in the lock screen wallpaper to seven times an original subject image, scaling down a background image to 2/5 of an original background image, moving down the subject image from a location of the original subject image in an original lock screen wallpaper by a height of 20 pixels, and moving down the background image from a location of the original background image in the original lock screen wallpaper by a height of 10 pixels, so that the subject element in the lock screen wallpaper is not blocked by the notification messages and the service card that are displayed.

The original lock screen wallpaper herein is a lock screen wallpaper displayed by the mobile phone before the current wallpaper adjustment operation. The original subject image herein is a subject image in the original lock screen wallpaper. The original background image is a background image in the original lock screen wallpaper.

Unless otherwise specified, the scale-up multiple, the scale-down multiple, the moving height, and the like in embodiments of this application indicate to scale up to a corresponding multiple of a corresponding original image, scale down to a corresponding multiple of a corresponding original image, and move from a location in an original image by a corresponding height.

Certainly, during adjustment of a wallpaper element in the lock screen wallpaper in this application, a multiple of a scale-up or scale-down operation is not limited to the relative multiples described herein as examples, and may alternatively be an absolute multiple. This is not limited herein.

It should be understood that all of the foregoing embodiments of this application are described by using an example in which a plurality of dynamic UI controls are displayed in a top-to-bottom order in a height direction of the lock screen interface (for example, in an order from the bottom of a time and date icon to the bottom of the screen).

In addition, it should be understood that FIG. 6d(1) to FIG. 6d(3) show only an example service card to which the method in this application is applicable. The method in this application is applicable to various types of service cards (for example, a media card, a sports card, and a custom card) and service cards generated in various manners. A principle thereof is similar. This is not limited herein.

In some embodiments, when the mobile phone is to display a dynamic UI control (a notification message is used as an example for description) on the lock screen interface, when the mobile phone determines, through S202 shown in FIG. 4b, a first adjustment parameter for a wallpaper element on the lock screen interface, the first adjustment parameter is not limited to the scale-up adjustment of the subject image and the scale-down adjustment of the background image in the foregoing embodiments, and may alternatively be scaling down the subject image and scaling up the background image. Optionally, move-down adjustment is performed on at least one of the subject image and the background image. In this way, when the notification message is displayed on the lock screen interface of the mobile phone, a change process of the lock screen wallpaper displayed on the lock screen interface may be presented through effect of Hitchcock reverse zooming. This can ensure that the displayed notification message does not block the subject element, and can also enable the subject element to be always completely displayed on the lock screen interface.

### Example 3: Process of canceling displaying a dynamic UI control and adjusting a lock screen wallpaper

FIG. 4c is a diagram of an example lock screen wallpaper adjustment process.

After a lock screen wallpaper is adjusted and a dynamic UI control is displayed on a lock screen interface through the process shown in FIG. 4b, a lock screen application of a mobile phone may invoke a UI framework to perform the following process, as shown in FIG. 4c. The process shown in FIG. 4c is equivalent to an inverse process of the process shown in FIG. 4b, and execution principles of similar steps of the two processes are similar.

As shown in FIG. 4c, the process may include the following steps.

S301: When a lock screen wallpaper and a dynamic UI control are displayed on the lock screen interface of the mobile phone, the mobile phone may determine a quantity of dynamic UI controls to be canceled from being displayed and a display attribute of the dynamic UI control.

The dynamic UI control may include but is not limited to a message control related to a notification message, a live video window, a service card, and the like.

In some embodiments, a control type of the dynamic UI control to be canceled from being displayed on the lock screen interface may be one control type, for example, a message control, a live video window, or a service card.

In some embodiments, a control type of the dynamic UI control to be canceled from being displayed on the lock screen interface may be a plurality of control types, for example, a to-be-displayed message control and a live video window.

For the display attribute of the dynamic UI control, refer to the descriptions of the display attribute in S201 in Example 2. Details are not described herein again.

S302: The mobile phone may determine, based on the quantity of dynamic UI controls to be canceled from being displayed and the display attribute of the dynamic UI control, a second adjustment parameter for a wallpaper element in the lock screen wallpaper.

As described in Example 1, the lock screen wallpaper may include a subject image including a target subject element and a background image including a target background element.

In some embodiments, the to-be-adjusted wallpaper element may be a part or all of target subject elements in the lock screen wallpaper. In other words, the mobile phone may adjust at least one of the foregoing subject images that forms the lock screen wallpaper.

In some embodiments, the to-be-adjusted wallpaper element may be a part or all of target background elements in the lock screen wallpaper. In other words, the mobile phone may adjust at least one of the foregoing background images that forms the lock screen wallpaper.

In some embodiments, the to-be-adjusted wallpaper element may include a part or all of target subject elements in the lock screen wallpaper and a part or all of target background elements in the lock screen wallpaper. In other words, the mobile phone may adjust both at least one of the foregoing subject images and at least one of the foregoing background images that form the lock screen wallpaper.

During specific application, one or more elements specifically included in the wallpaper element adjusted by the mobile phone may be flexibly determined based on the quantity of dynamic UI controls to be canceled from being displayed and the display attribute of the dynamic UI control, and optionally, based on the control type of the dynamic UI control to be canceled from being displayed, a wallpaper adjustment policy, and the like. This is not limited herein.

In addition, the second adjustment parameter determined by the mobile phone for the wallpaper element may be related to at least one of the quantity of to-be-displayed dynamic UI controls, the display attribute of the dynamic UI control, the control type, the wallpaper adjustment policy, and the like.

For example, an adjustment manner corresponding to the second adjustment parameter may include at least one of scale-down, scale-up, and moving. In this case, an adjustment amount (for example, a scale-down multiple, a scale-up multiple, or a quantity of pixels by which movement is performed) of each adjustment manner may be in a positive correlation relationship with information such as the quantity of to-be-displayed dynamic UI controls and the control height. In other words, a larger quantity of dynamic UI controls to be canceled from being displayed indicates a larger height of the dynamic UI control to be canceled from being displayed and a larger scale-down multiple, a larger scale-up multiple, or a larger moving height of a corresponding wallpaper element.

S303a: The mobile phone may adjust the lock screen wallpaper based on the second adjustment parameter.

In some embodiments, when adjusting the corresponding wallpaper element based on the second adjustment parameter, the mobile phone may play an adjustment process of the wallpaper element on the lock screen interface through motion effect. For example, an adjustment operation of moving up by 10 units of pixels is performed on the entire lock screen wallpaper. In this case, the mobile phone may play, based on a specific moving speed and specific duration, a move-up process of moving up the lock screen wallpaper by 10 units of pixels. In this way, a dynamic process of adjusting the lock screen wallpaper may be displayed to a user on the lock screen interface.

In some embodiments, the mobile phone may alternatively directly display, on the lock screen interface, an adjusted lock screen wallpaper, for example, a lock screen wallpaper obtained through move-up by 10 units of pixels.

S303b: After S302, the mobile phone may cancel displaying the dynamic UI controls of the quantity on the lock screen interface.

As described in S301, the dynamic UI controls of the quantity are UI controls to be canceled from being displayed on the lock screen interface. In this case, the mobile phone may cancel displaying a corresponding quantity of dynamic UI controls based on display attributes of the dynamic UI controls.

Similar to S303a, in S303b, when canceling displaying the dynamic UI controls of the quantity, the mobile phone may also display, by playing motion effect, a process of the dynamic UI controls disappearing from the lock screen interface.

In some embodiments, S303a and S303b are parallel steps. To be specific, the mobile phone may adjust the lock screen wallpaper while canceling displaying the dynamic UI controls on the lock screen interface.

In some embodiments, S303a and S303b may alternatively be performed in series. An execution order of the two steps is not limited in this application.

In this embodiment of this application, the mobile phone may determine the second adjustment parameter (for example, a scaling multiple, a moving height, or a moving direction) for the wallpaper element in the lock screen wallpaper based on the quantity of dynamic UI controls to be canceled from being displayed the lock screen interface and the display attribute of the dynamic UI control, and adjust the lock screen wallpaper based on the second adjustment parameter, to restore the wallpaper element in the lock screen wallpaper to a display state in which the dynamic UI control is not displayed, and cancel displaying a corresponding dynamic UI control on the lock screen interface.

With reference to an application scenario 8, the following describes the process shown in FIG. 4c in Example 3.

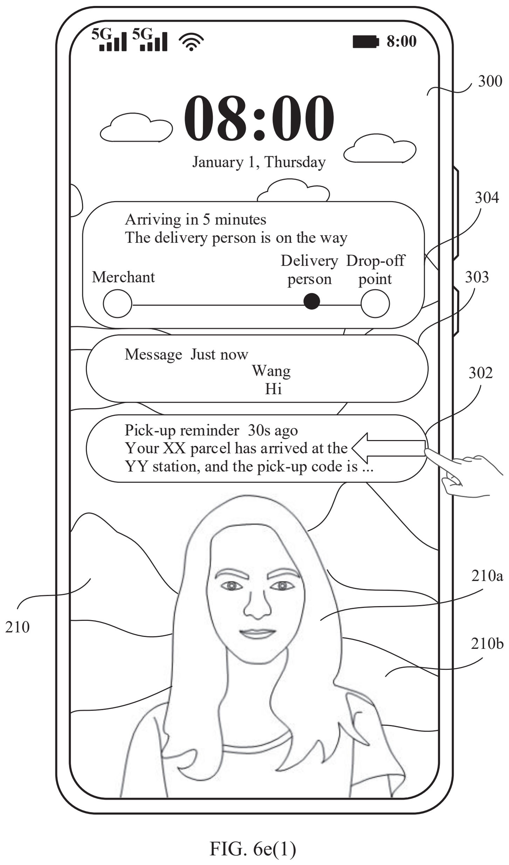

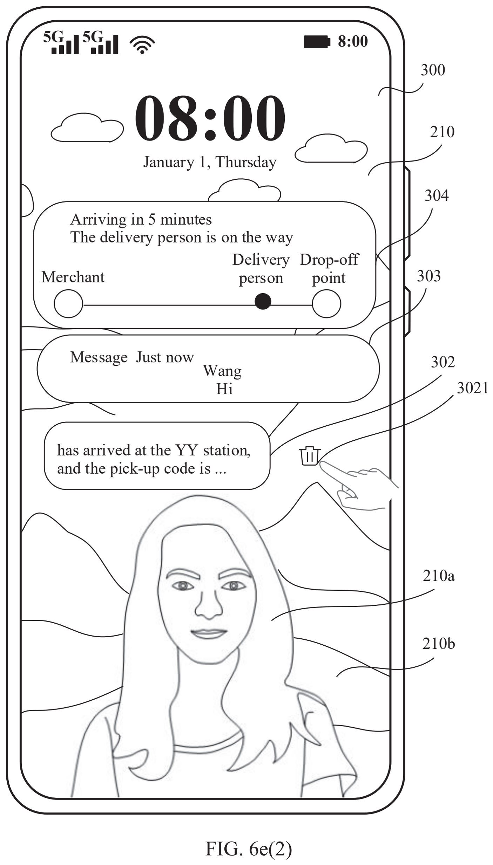

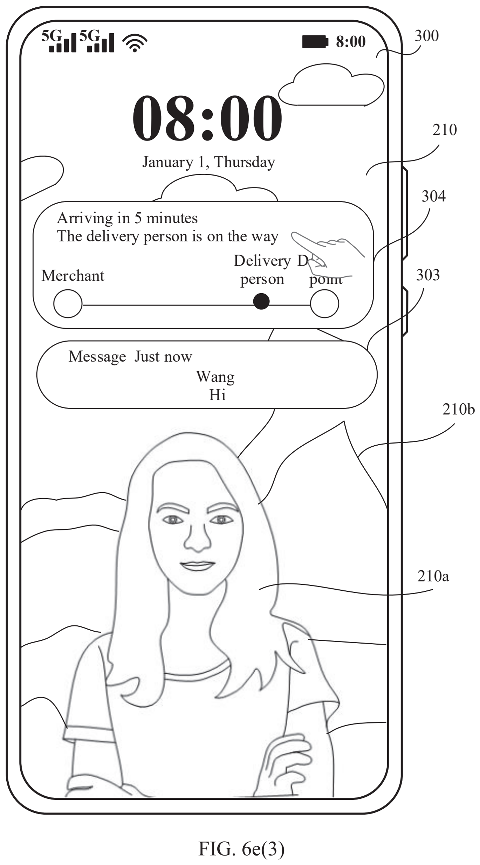

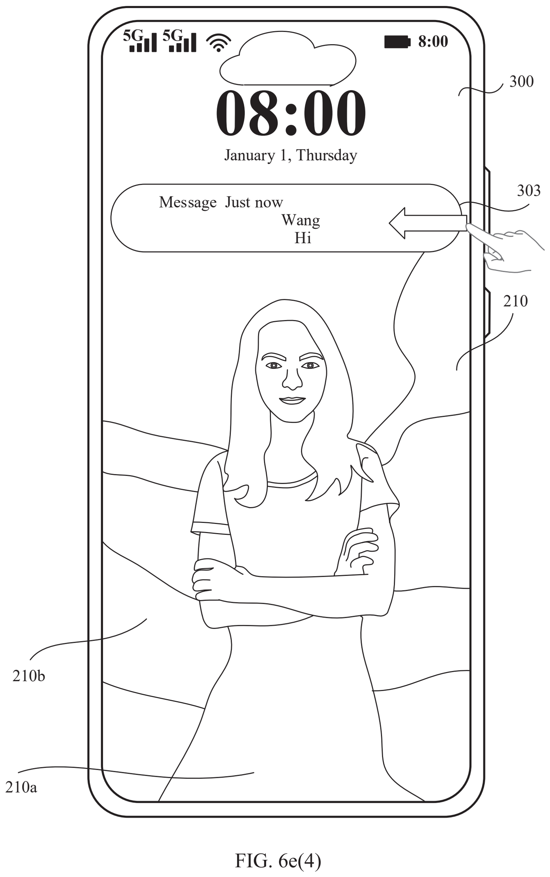

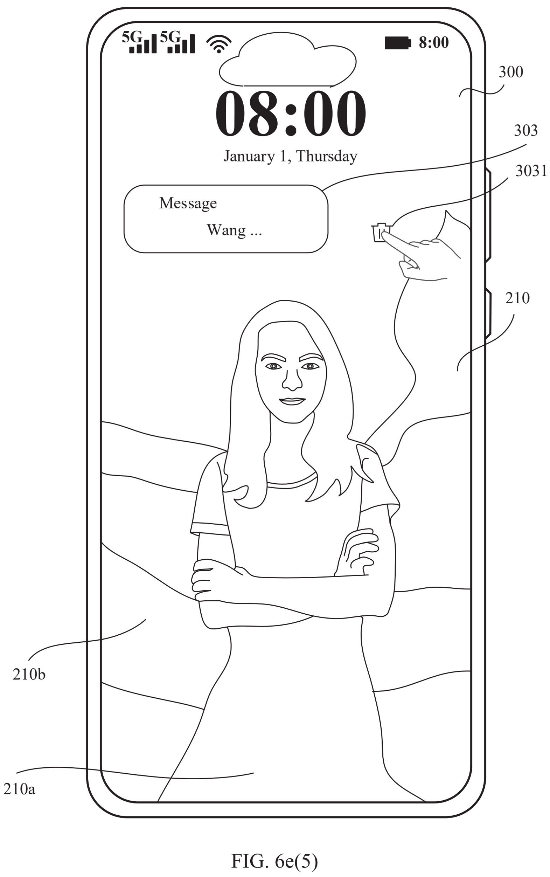

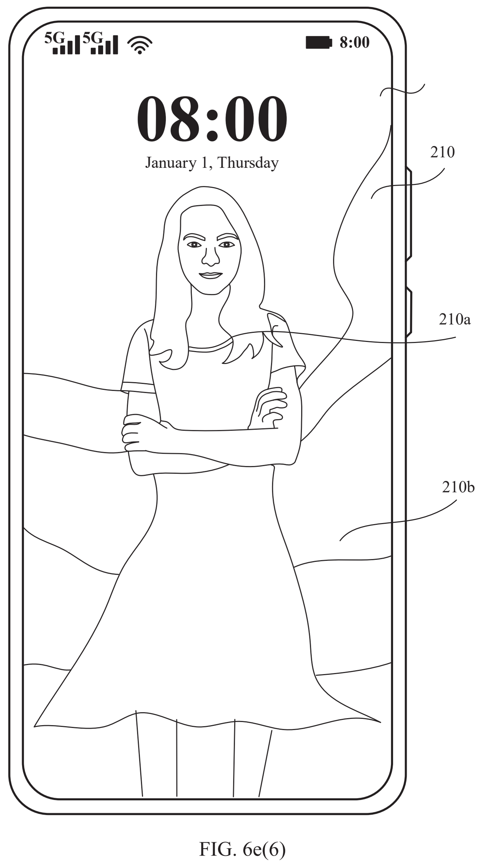

In the application scenario 8, with reference to FIG. 5a(1) to FIG. 5d and FIG. 6c(1) to FIG. 6c(4), FIG. 6e(1) to FIG. 6e(6) are a diagram of a process of adjusting the lock screen wallpaper by the mobile phone.

FIG. 6e(1) shows a lock screen interface 300 of the mobile phone. The lock screen interface 300 is the same as the lock screen interface 300 shown in FIG. 6c(4). As shown in FIG. 6e(1), the user slides left on a notification message 302 on the lock screen interface 300 in a direction indicated by an arrow, and in response to the user operation, the mobile phone may display a lock screen interface 300 shown in FIG. 6e(2). As shown in FIG. 6e(2), a length of the notification message 302 on the lock screen interface 300 is reduced, and a delete control 3021 is displayed. The user taps the delete control 3021. In response to the user operation, the mobile phone may perform S301, S302, S303a, and S303b shown in FIG. 4c to cancel displaying the notification message 302, and perform a wallpaper adjustment operation on a lock screen wallpaper 210 shown in FIG. 6e(2) to display a lock screen interface 300 shown in FIG. 6e(3).

As shown in FIG. 6e(3), the notification message 302 on the lock screen interface 300 is canceled from being displayed. In addition, in comparison with the lock screen wallpaper 210 shown in FIG. 6e(2), after the wallpaper adjustment operation, a subject image 210a in a lock screen wallpaper 210 shown in FIG. 6e(3) has undergone scale-up processing and move-up processing, and a background image 210b has undergone scale-down processing and move-up processing. A move-up height of the subject image 210a is the same as a move-up height of the background image 210b.

All of a scale-up multiple of the subject image 210a, a scale-down multiple of the background image 210b, and a move-up height of the entire lock screen wallpaper 210 are positively correlated with a control height of the notification message 302 shown in FIG. 6e(2).

Still refer to FIG. 6e(3). The user touches-and-holds a live video window 304 on the lock screen interface 300 to request to cancel displaying the live video window 304 on the lock screen interface 300. It should be understood that an operation indicating to cancel displaying the live video window 304 is not limited to the touch-and-hold operation described herein as an example, and may be any type of user operation. This is not limited herein.

Then, in response to the touch-and-hold operation of the user for the live video window 304, the mobile phone may perform S301, S302, S303a, and S303b shown in FIG. 4c to cancel displaying the live video window 304 on the lock screen interface 300, and perform a wallpaper adjustment operation on the lock screen wallpaper 210 shown in FIG. 6e(3) to display a lock screen interface 300 shown in FIG. 6e(4).

As shown in FIG. 6e(4), the live video window 304 on the lock screen interface 300 is canceled from being displayed. In addition, in comparison with the lock screen wallpaper 210 shown in FIG. 6e(3), after the wallpaper adjustment operation, a subject image 210a in a lock screen wallpaper 210 shown in FIG. 6e(4) has undergone further scale-up processing and move-up processing, and a background image 210b has undergone further scale-down processing and move-up processing. A move-up height of the subject image 210a is the same as a move-up height of the background image 210b.

All of a scale-up multiple of the subject image 210a, a scale-down multiple of the background image 210b, and a move-up height of the entire lock screen wallpaper 210 are positively correlated with a control height of the live video window 304 shown in FIG. 6e(3).

The control height of the live video window 304 shown in FIG. 6e(1) to FIG. 6e(3) is greater than the control height of the notification message 302 and a control height of a notification message 302. Therefore, it can be learned from FIG. 6e(1) to FIG. 6e(6) that, by using a scale-up multiple of the subject image 210a an example for description, a scale-up multiple of the subject image 210a during changing from FIG. 6e(3) to FIG. 6e(4) is greater than a scale-up multiple of the subject image 210a during changing from FIG. 6e(2) to FIG. 6e(3).

Still refer to FIG. 6e(4). The user slides left on the notification message 303 on the lock screen interface 300 in a direction indicated by an arrow, and in response to the user operation, the mobile phone may display a lock screen interface 300 shown in FIG. 6e(5). As shown in FIG. 6e(5), a length of the notification message 303 on the lock screen interface 300 is reduced, and a delete control 3031 is displayed. The user taps the delete control 3031. In response to the user operation, the mobile phone may perform S301, S302, S303a, and S303b shown in FIG. 4c to cancel displaying the notification message 303, and perform a wallpaper adjustment operation on a lock screen wallpaper 210 shown in FIG. 6e(5) to display a lock screen interface 300 shown in FIG. 6e(6).

As shown in FIG. 6e(6), the notification message 303 on the lock screen interface 300 is canceled from being displayed. In addition, in comparison with the lock screen wallpaper 210 shown in FIG. 6e(5), after the wallpaper adjustment operation, a subject image 210a in a lock screen wallpaper 210 shown in FIG. 6e(5) has undergone further scale-up processing and move-up processing, and a background image 210b has undergone further scale-down processing and move-up processing. A move-up height of the subject image 210a is the same as a move-up height of the background image 210b.

All of a scale-up multiple of the subject image 210a, a scale-down multiple of the background image 210b, and a move-up height of the entire lock screen wallpaper 210 are positively correlated with a control height of the notification message 303 shown in FIG. 6e(5).

In this way, a lock screen wallpaper 210 on the lock screen interface 300 shown in FIG. 6e(6) is a picture that is the same as a picture of the lock screen wallpaper 210 (for example, the lock screen wallpaper 210 shown in FIG. 5a(6)) that is set in the embodiments of FIG. 5a(1) to FIG. 5d.

In some embodiments, when the mobile phone is to cancel displaying a dynamic UI control on the lock screen interface, similarly, according to a principle similar to the principle of the application scenario 7, the mobile phone may perform, on the lock screen wallpaper based on a control type of the dynamic UI control to be canceled from being displayed on the lock screen interface, optionally based on a quantity of controls of the control type, and optionally based on a control height, an adjustment operation corresponding to the control type. In this way, when the control type of the dynamic UI control to be canceled from being displayed varies, the mobile phone may perform wallpaper adjustment on the lock screen wallpaper according to different adjustment policies. For a specific principle, refer to related descriptions in the application scenario 7. Details are not described herein again.

In addition, similar to the embodiments of FIG. 6a(1) to FIG. 6a(3), FIG. 6c(1) to FIG. 6c(4), and FIG. 6d(1) to FIG. 6d(3), each time the mobile phone switches the lock screen wallpaper to an adjusted lock screen wallpaper, the mobile phone may directly switch the lock screen wallpaper to the adjusted lock screen wallpaper, or may display an adjustment process of the lock screen wallpaper through motion effect. Details are not described herein again.

A most significant difference between the embodiment of FIG. 4b and the embodiment of FIG. 4c lies in: In the embodiment of FIG. 4b and the embodiment of FIG. 4c, adjustment directions of a same wallpaper element in the lock screen wallpaper are opposite. For example, in the embodiment of FIG. 4b, when a dynamic UI control is displayed on the lock screen interface, the mobile phone may move down and scale up, for example, a subject image. On the contrary, in the embodiment of FIG. 4c, when a dynamic UI control is canceled from being displayed on the lock screen interface, the mobile phone may move up and scale down, for example, a subject image. Principles of other processes in the embodiment of FIG. 4b and the embodiment of FIG. 4c are similar. Details are not described herein again.

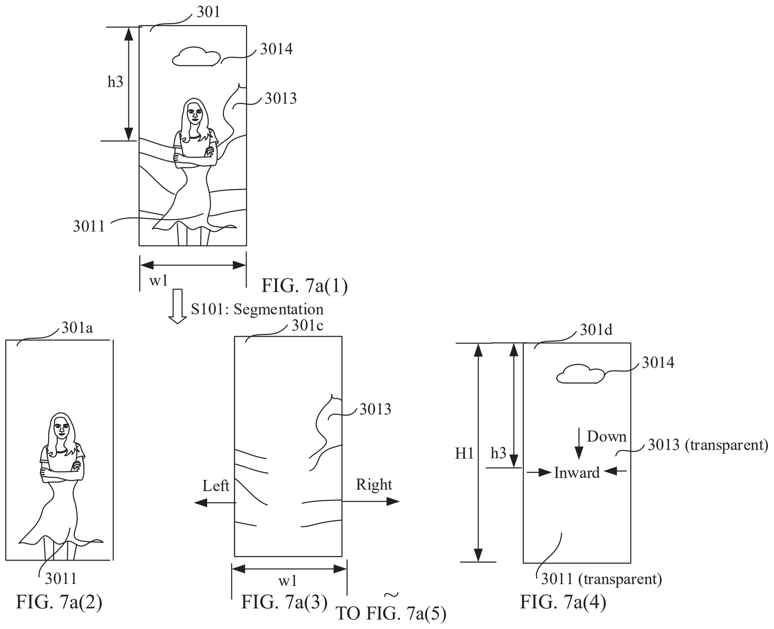

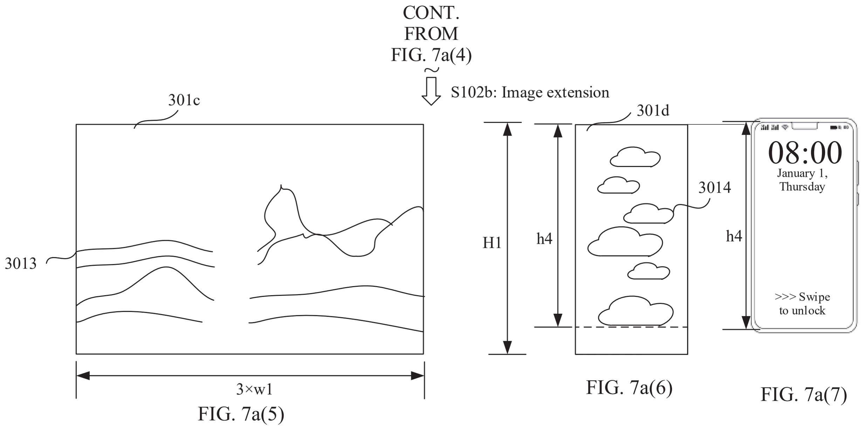

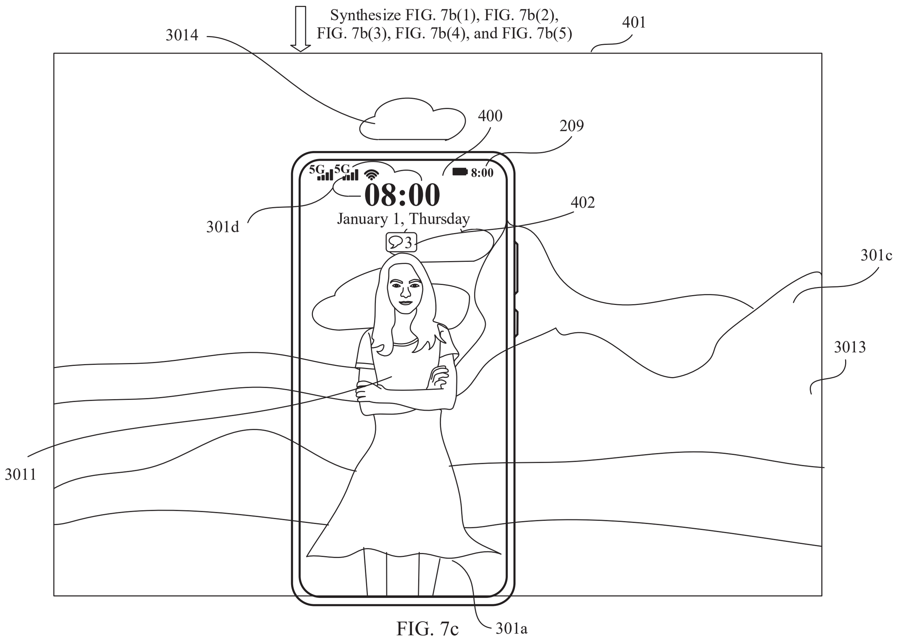

In an application scenario 9, FIG. 7a(1) to FIG. 7c are diagrams of an application scenario of the lock screen wallpaper setting process in FIG. 4a.

An implementation principle of the process in FIG. 7a(1) to FIG. 7c is basically the same as an implementation principle of the process in FIG. 5a(1) to FIG. 5d. A difference lies in: In the application scenario 9 shown in FIG. 7a(1) to FIG. 7c, a plurality of background images (instead of a single background image) are obtained by segmenting a first image, and the background images include different background elements. The plurality of background images are obtained in this image segmentation manner. In this case, when performing the lock screen wallpaper adjustment process in FIG. 4b or FIG. 4c, the mobile phone may implement wallpaper adjustment according to more wallpaper adjustment policies, to reduce blocking of a subject element in the lock screen wallpaper by a dynamic UI control displayed on the lock screen interface.

Refer to both FIG. 4a and FIG. 7a(1) to FIG. 7a(7). FIG. 7a(1) shows an image 301 to be set as a lock screen wallpaper. The image 301 includes a subject element 3011, a background element 3013 (a mountain herein), and a background element 3014 (a blue sky and a white cloud herein). A width of the fault 301 is w1.

Then the mobile phone segments the image 310 through S101 shown in FIG. 4a, to obtain a subject image 301a shown in FIG. 7a(2), a background image 301c shown in FIG. 7a(3), and a background image 301d shown in FIG. 7a(4).

The subject image 301a includes a subject element 3011, and a region other than the subject element 3011 is a transparent region.

The background image 301c includes a background element 3013, and a region other than the background element 3013 is a transparent region.

The background image 301d includes a background element 3014, and a region (herein, a region in which the subject element 3011 is located and a region in which the background element 3013 is located) other than the background element 3014 is a transparent region.

In addition, sizes of the subject image 301a, the background image 301c, and the background image 301d are the same as a size of the image 301 shown in FIG. 7a(1).

Then, as shown in FIG. 7a(1) to FIG. 7a(7), the image 301 is not a large banner image, and the mobile phone may separately extend the subject image 301a, the background image 301c, and the background image 301d through S102 shown in FIG. 4a.

### An extension process is as follows:

As shown in FIG. 7a(3), the mobile phone may extend a background element in the background image 301c leftward and rightward in a width direction, where the mountain element is extended herein, to obtain a background image 301c that is shown in FIG. 7a(5) and whose image width is three times the width (w1) that exists before the extension.

In addition, as indicated by an arrow in the background image 301d shown in FIG. 7a(4), the mobile phone may further extend, inside the background image 301d, the blue sky and white cloud element in the image. Specifically, the mobile phone may perform, inside the background image 301d, downward extension in the image in an image height direction, to obtain an extended background image 301d shown in FIG. 7a(6).

As shown in FIG. 7a(1) and FIG. 7a(4), a maximum height of a background element (the blue sky and white cloud element herein) in the image 301 or the image 301d is h3, and image heights of the image 301 and the image 301d are H1.

When extending the background element 3014 in the image 301d, the mobile phone may extend the background element 3014 to a background element whose height is a height h4, shown in FIG. 7a(7), of a screen of the mobile phone. As shown in FIG. 7a(6), the height h4 of the background element 3014 in the background image 301d obtained through the image extension in S102b is the height of the screen of the mobile phone.

Certainly, in another embodiment, an extended height of the background element 3014 is not limited to the height of the screen of the mobile phone, and may alternatively be an image height of the entire background image 301d, where the image height herein is H1 or another height. Specifically, this may be flexibly configured according to a requirement, and is not limited herein.

Herein, a reason why downward extension is performed, inside the background image 301d, on the background element 3014 in the image lies in: When the lock screen wallpaper is subsequently adjusted because a dynamic UI control is displayed on the lock screen interface, the background image 301d may not be moved, and only the subject image 310a corresponding to the subject element needs to be moved down, to ensure that the subject element 3011 is not blocked by the dynamic UI control, and also avoid a case that a blank region (without an image element) exists between the blue sky and white cloud element and the subject element in the lock screen wallpaper after the subject image 301a is moved down.

In addition, during extension of the three images that are shown in FIG. 7a(1) to FIG. 7a(7) and that are obtained through segmentation, size extension may be performed on the subject image 301a shown in FIG. 7a(2) and the image 301d shown in FIG. 7a(6) based on the width (3×w1) of the background image 301c shown in FIG. 7a(5). In this way, sizes of a subject image 301a and an image 301d that are obtained through size extension are the same as a size of the background image 301c shown in FIG. 7a(5). Herein, an image width is 3×w1, and an image height is H1.

For a manner and a principle of the size extension, refer to related descriptions of FIG. 5e(4). Details are not described herein again.

In addition, in some embodiments, an extension manner of extending, by the mobile phone, the background image 301c shown in FIG. 7a(3) and the background image 301d shown in FIG. 7a(4) may alternatively be combined with the extension manner of the background element in FIG. 5g or FIG. 5f. A principle is the same, and details are not described again.

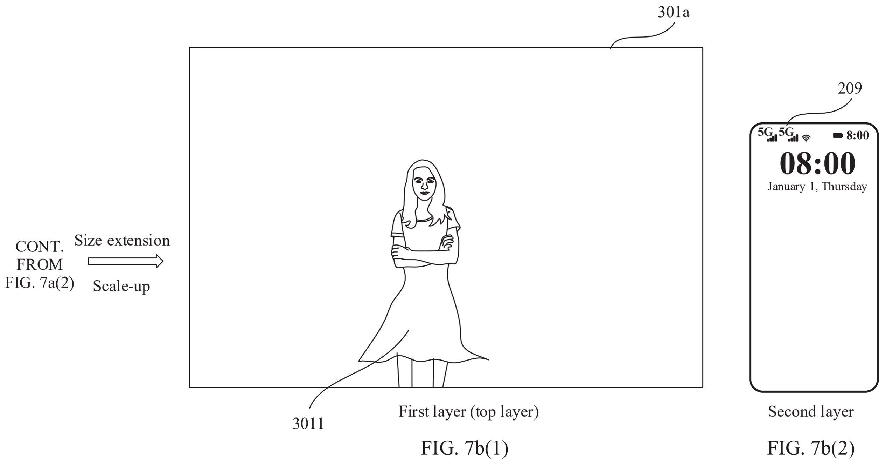

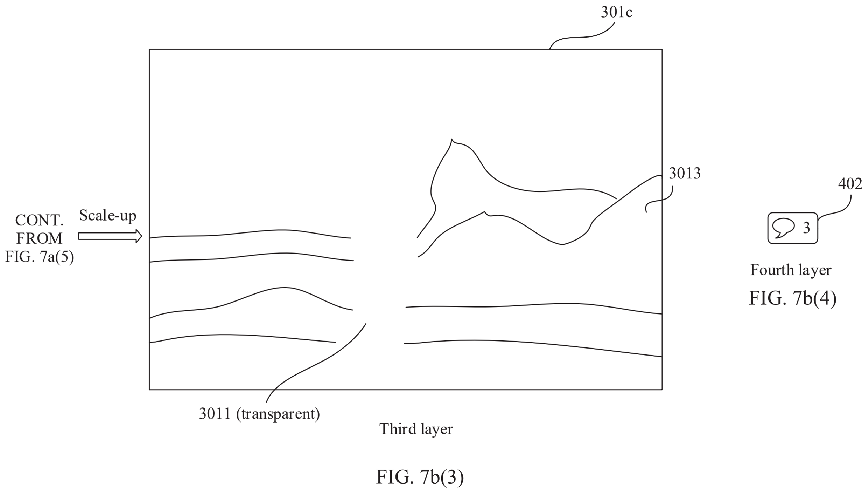

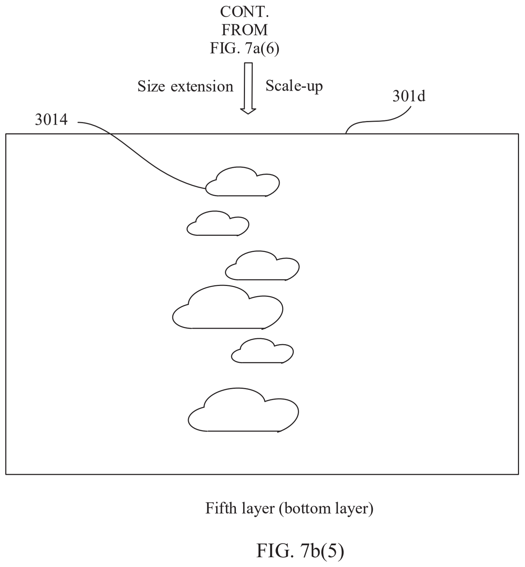

After the process shown in FIG. 7a(1) to FIG. 7a(7), refer to FIG. 7b(1) to FIG. 7b(5). The mobile phone may perform size extension on the subject image 301a shown in FIG. 7a(2). A size obtained through extension is as follows: An image width is 3×w1, and an image height is H1. Then the mobile phone may scale up a subject image 301a obtained through size extension, to obtain a subject image 301a shown in FIG. 7b(1).

Similarly, the mobile phone may perform size extension on the background image 301d shown in FIG. 7a(6). A size obtained through extension is as follows: An image width is 3×w1, and an image height is H1. Then the mobile phone may scale up a background image 301d obtained through size extension, to obtain a background image 301d shown in FIG. 7b(5).

Similarly, the mobile phone may scale up the background image 301c shown in FIG. 7a(5), to obtain a background image 301c shown in FIG. 7b(3).

Sizes of the subject image 301a, the background image 301c, and the background image 301d that are shown in FIG. 7b(1), FIG. 7b(3), and FIG. 7b(5) and that are obtained through scale-up are the same. Compared with a size of a second layer 209 shown in FIG. 7b(2), where the size of the second layer 209 is a size of the screen of the mobile phone, the sizes of the subject image 301a, the background image 301c, and the background image 301d that are obtained through segmentation and scale-up processing are greater. The second layer 209 may include but is not limited to static UI controls such as a network icon, a battery level icon, a clock icon, and a date icon.

In addition, in the application scenario 9, a message control 402, that is, a control representing a collapsed notification message, shown in FIG. 7b(4) is further displayed on the current lock screen interface of the mobile phone.

In this case, as shown in FIG. 7b(1) to FIG. 7b(5) and FIG. 7c, when setting the lock screen wallpaper based on the image 301, the mobile phone may place, as a first layer (namely, a top layer), the subject image 301a shown in FIG. 7b(1) above the second layer that is shown in FIG. 7b(2) and that is related to the static UI controls.

In addition, the mobile phone may place the background image 301c shown in FIG. 7b(3) and the background image 301d shown in FIG. 7b(5) below the second layer. Herein, the background image 301c shown in FIG. 7b(3) serves as a third layer below the second layer, and the background image 301d shown in FIG. 7b(5) serves as a fifth layer (namely, a bottom layer). Optionally, the message control 402 shown in FIG. 7b(4) serves as a fourth layer between the third layer and the fifth layer.

In some embodiments, based on a difference between background elements in the plurality of background images obtained through segmentation, an order of layers between the plurality of background images is not limited to the example synthesis order in FIG. 7b(1) to FIG. 7b(5), and a stacking pipeline between an upper layer and a lower layer may be set between the plurality of background images according to a requirement. This is not limited herein.

In addition, a layer at which the message control 402 is placed is not limited in this application either, provided that the message control 402 does not block the subject element 3011 in the lock screen wallpaper.

In this way, the mobile phone may synthesize, in a top-to-bottom order of layers, the layers shown in FIG. 7a(1), FIG. 7a(2), FIG. 7a(3), FIG. 7a(4), and FIG. 7a(5), to obtain a lock screen interface 400 shown in FIG. 7c. The lock screen interface 400 may include but is not limited to a lock screen wallpaper 401, a message control 402 that does not block a subject element 3011, and a second layer 209. The second layer 209 may include static UI controls such as a time icon, a date icon, a network icon, and a battery level icon, and the second layer 209 does not block the subject element 3011 either.

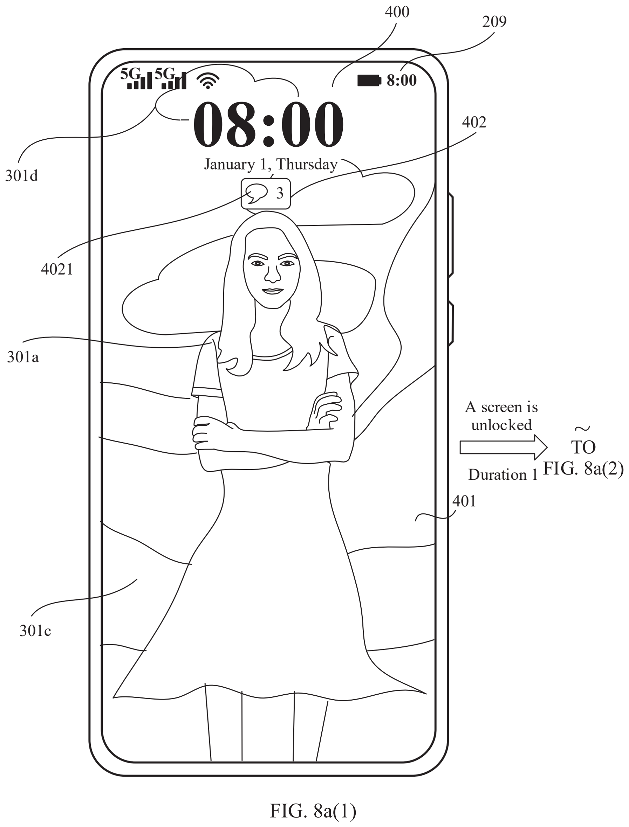

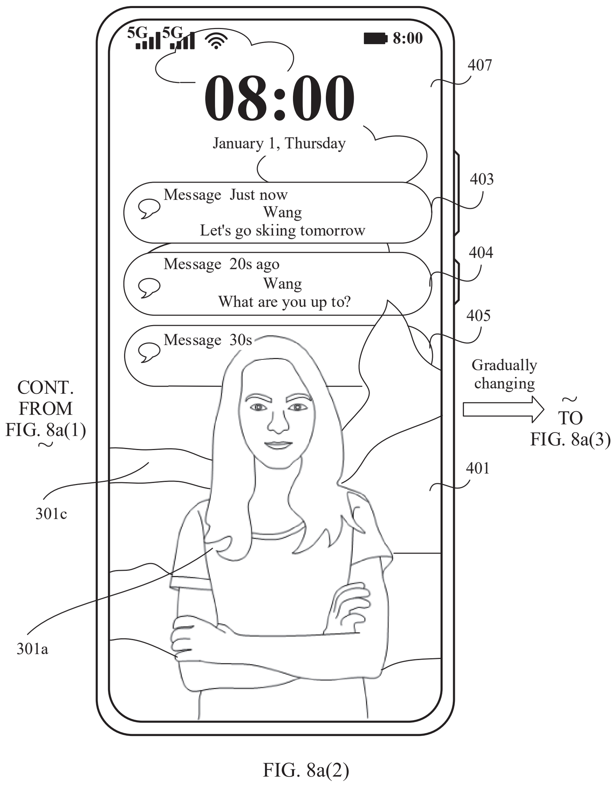

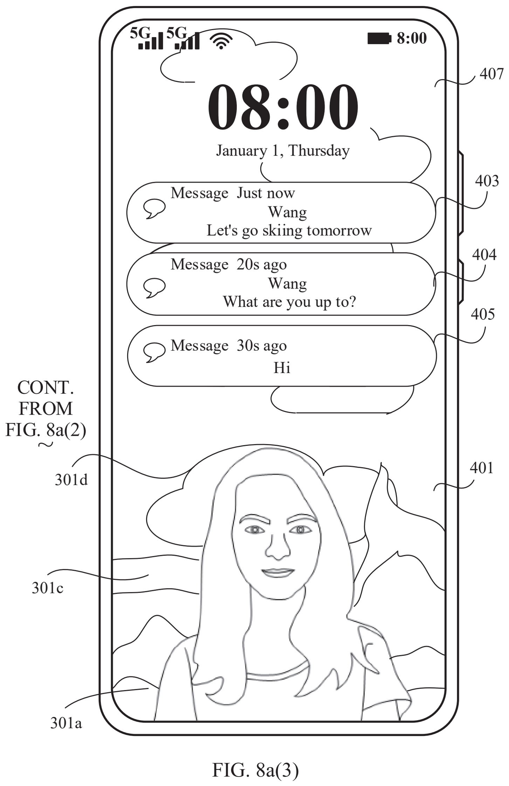

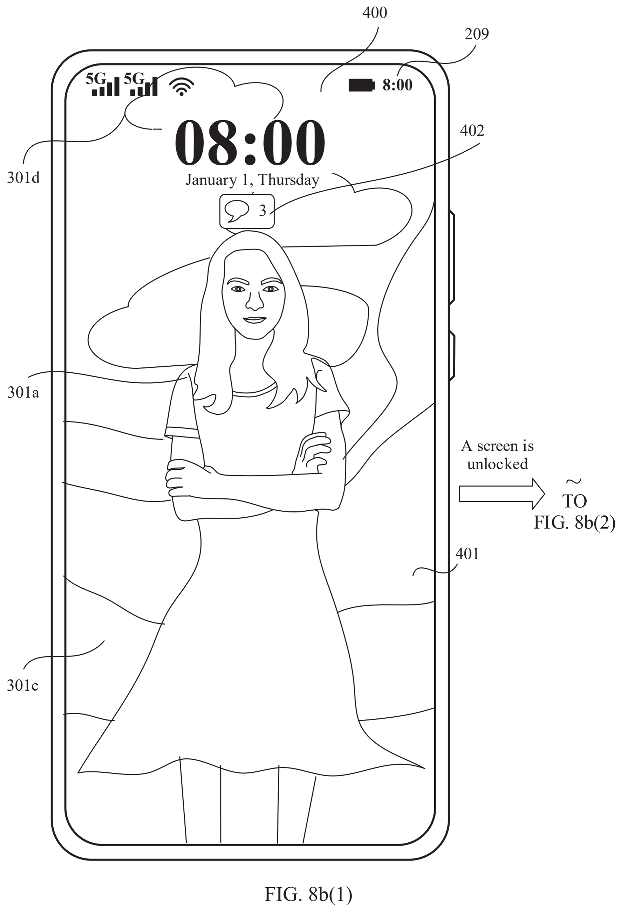

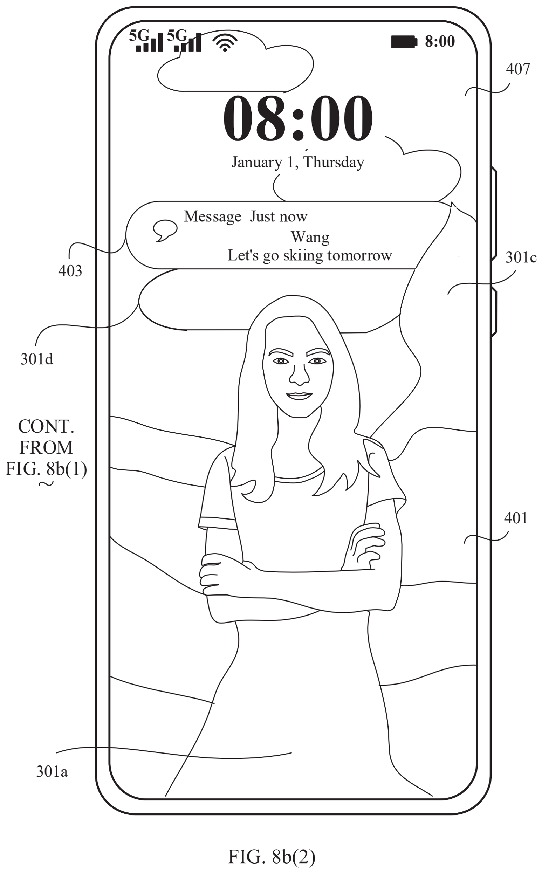

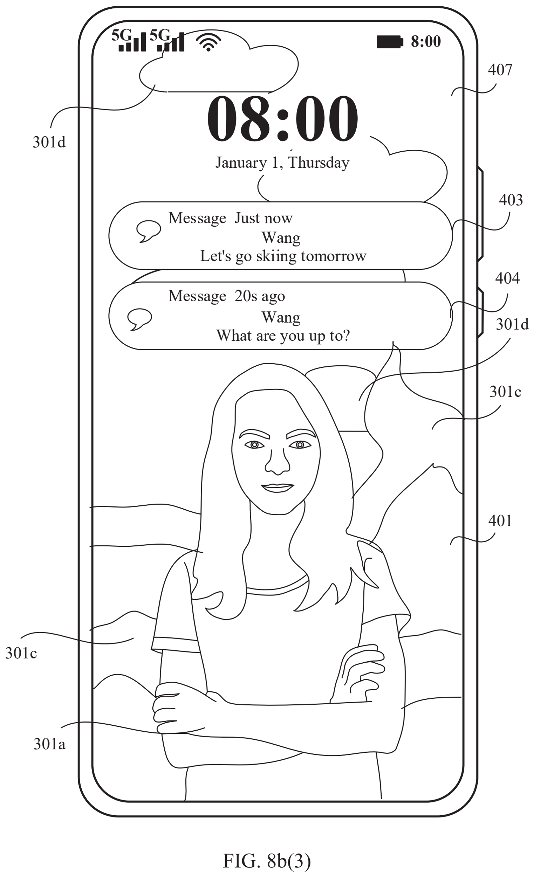

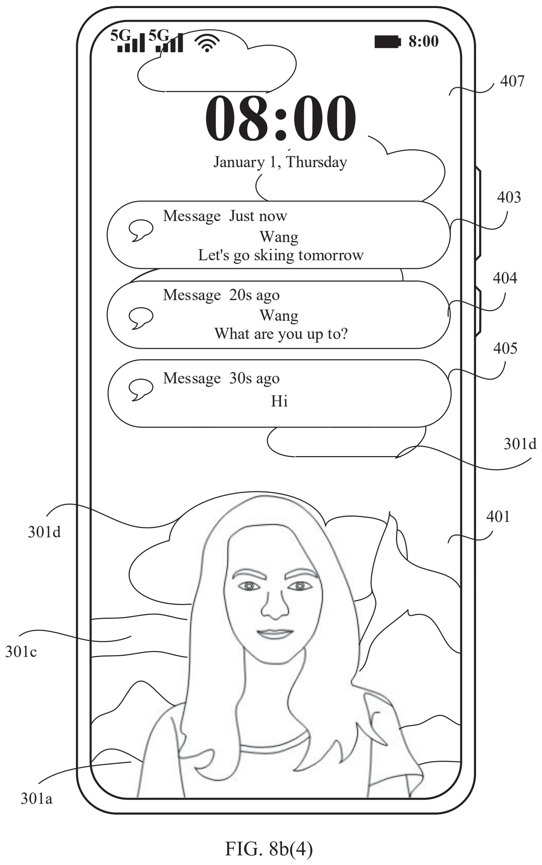

In this embodiment, the message control 402 is located between a background image 301c and a background image 301d, to be specific, between a mountain element and a blue sky and white cloud element. In this way, when the mobile phone displays, on the lock screen interface 400 in an expanded manner, a notification message related to the message control 402, visual effect of the notification message gradually appearing from the back of the mountain can be presented by adjusting the lock screen wallpaper. This is specifically described in embodiments of FIG. 8a(1) to FIG. 8a(3) and FIG. 8b(1) to FIG. 8b(4), and details are not described herein.

A size of the lock screen wallpaper 401 is as follows: An image width is 3×w1, and an image height is H1. The size is greater than the size of the screen of the mobile phone, to facilitate scaling of the lock screen wallpaper 401.

The lock screen wallpaper 401 may include a subject image 301a, the background image 301c, and the background image 301d at layers from top to bottom.

A background element in the background image 301d is the blue sky and white cloud, and the blue sky and white cloud are background elements whose colors are close. In addition, a background element in the background image 301d is an image element extending outward from a center of the screen of the mobile phone.

In this case, for recognized background elements (for example, the blue sky and white cloud (a sky) or a grassland) whose colors are simple and close and that has specific extensibility of being able to extend from a region near a center of the screen to an edge of the screen, during segmentation, the mobile phone may perform segmentation on an image including this type of background elements to obtain a background image, and place the background image at a bottom layer among layers of a lock screen wallpaper when synthesizing the background image into the lock screen wallpaper.

In this embodiment of this application, when segmenting the first image to be set as the lock screen wallpaper, the mobile phone may segment the first image into a subject image including a subject element and a background image including a background element, and specifically, may segment the first image into a plurality of background images based on element types and element layouts of background elements. Element types and element layouts of the background images may be different. For example, the mobile phone may perform segmentation on background elements whose colors are close and whose distribution in the first image has specific extensibility (for example, extending from a region near an image center to an image edge) to obtain a background image (for example, any one of a sky, a grassland, and a sea). In this way, the mobile phone obtains the plurality of background images through segmentation. Therefore, when subsequently adjusting the lock screen wallpaper, the mobile phone may determine a wallpaper adjustment policy based on background elements in the plurality of background images, to present more wallpaper adjustment effect, and ensure that the subject element is not blocked by a dynamic UI control.

In an application scenario 10, FIG. 8a(1) to FIG. 8a(3) are a diagram of an application scenario of the lock screen wallpaper adjustment process in FIG. 4b.

Based on the lock screen wallpaper 401 that is set in the application scenario 9, refer to FIG. 8a(1) to FIG. 8a(3). FIG. 8a(1) shows a lock screen interface 400 of the mobile phone. Displayed content of the lock screen interface 400 is the same as displayed content of the lock screen interface 400 shown in FIG. 7c in the application scenario 9. To be specific, the lock screen interface 400 shown in FIG. 8a(1) includes a message control 402, the lock screen wallpaper 401 that is set in the application scenario 9, and static UI controls (for example, a network icon, a time icon, and a date icon) related to a second layer 209. Details are not described herein again.

It should be understood that the message control 402 indicates at least one reminder message in a collapsed state, and the reminder message is a reminder message that has been received by the mobile phone. However, a message control indicating a reminder message in a collapsed state is not limited to the message control 402, and may alternatively be a control of another type.

Specific message content cannot be displayed in the reminder message in the collapsed state.

The message control 402 shown in FIG. 8a(1) may include a number "3" and an icon 4021. The icon 4021 indicates an application to which a notification message in a collapsed state belongs, where the application is a "Messages application" herein. The number "3" indicates a message quantity of notification messages in a collapsed state.

In the embodiments of FIG. 6a(1) to FIG. 6d(3), a to-be-displayed notification message is a currently received notification message. A difference in the embodiment of FIG. 8a(1) to FIG. 8a(3) lies in: A to-be-displayed notification message is a notification message that has been received but is in a collapsed state and is not displayed on the lock screen interface, for example, three pieces of notification information of the Messages application that are indicated by the message control 402. In addition, in the embodiments of FIG. 6a(1) to FIG. 6d(3), a quantity of to-be-displayed notification messages determined by the mobile phone during each adjustment of the lock screen wallpaper is 1. However, there are three notification messages herein. In this case, a first adjustment parameter determined by the mobile phone is related to the three notification messages.

In addition, in the embodiment of FIG. 8a(1) to FIG. 8a(3), because a background image includes a background image 301c and a background image 301d, a wallpaper adjustment policy that is determined by the mobile phone and that is related to the first adjustment parameter is specifically: keeping the background image 301d unchanged, scaling up a subject image 301a, scaling down the background image 301c, and moving down both the subject image 301a and the background image 301c. Herein, move-down heights are the same. In another embodiment, move-down heights may be different.

In addition, in the embodiment of FIG. 8a(1) to FIG. 8a(3), the mobile phone may determine, based on a quantity (3 herein) of to-be-displayed notification messages and a control height of the notification message, an operation amount, for example, a scale-up multiple, a scale-down multiple, or a move-down height, of each operation corresponding to the wallpaper adjustment policy.

Refer to FIG. 8a(1). For example, the user unlocks a screen by using the face. The mobile phone may perform facial recognition on the user in response to the user operation. When the facial recognition succeeds, the mobile phone may unlock the lock screen interface 400, to display, on an unlocked display interface (for example, a display interface 407 shown in FIG. 8a(1) to FIG. 8a(3), namely, a lock screen interface) in an expanded manner, three unread notification messages in a collapsed state, and adjust the lock screen wallpaper 401 based on the first adjustment parameter (specifically including the wallpaper adjustment policy and each operation).

For example, the first adjustment parameter determined by the mobile phone includes: scaling up the subject image 301a in the lock screen wallpaper 401 shown in FIG. 8a(1) to four times the subject image 301a, scaling down the background image 301c to 1/4 of the background image 301c, moving down both the subject image 301a and the background image 301c from locations in FIG. 8a(1) by a height of nine pixels, and keeping the background image 301d unchanged.

In addition, the mobile phone may display an adjustment process of the lock screen wallpaper 401 within duration 1 through dynamic effect 1. In this way, the subject image 301a in the lock screen wallpaper 401 shown in FIG. 8a(1) can be gradually scaled up within the duration 1 at a specific speed, to be scaled up to four times the subject image 301a shown in FIG. 8a(1); the background image 301c can be gradually scaled down within the duration 1 at a specific speed, to be finally scaled down to 1/4 of the background image 301c shown in FIG. 8a(1); and both the subject image 301a and the background image 301c can be gradually moved down within the duration 1, to be finally moved down by a height of nine pixels.

In addition, in the embodiment of FIG. 8a(1) to FIG. 8a(3), when displaying the three notification messages on the display interface 407 in the expanded manner, the mobile phone may simultaneously display the three notification messages. For example, the mobile phone may simultaneously display the three notification messages within duration 2 through motion effect 2.

In the embodiment of FIG. 8a(1) to FIG. 8a(3), the duration 2 is less than the duration 1. In other words, when simultaneously starting a process of expanding the three notification messages and an operation process of adjusting the lock screen wallpaper in response to the unlock operation of the user, the mobile phone may complete the process of displaying the three notification messages on the lock screen interface 400 within the duration 1, and complete the process of adjusting the lock screen wallpaper 401 within the duration 2.

Therefore, as shown in FIG. 8a(1) to FIG. 8a(3), after the screen is unlocked, a display interface of the mobile phone may gradually change from the lock screen interface 400 shown in FIG. 8a(1) to a display interface 407 shown in FIG. 8a(3). A display interface 407 shown in FIG. 8a(2) is merely a lock screen interface at a moment in the change process. Specifically, after the screen is unlocked, the display interface of the mobile phone may change from the lock screen interface 400 shown in FIG. 8a(1) to the display interface 407 shown in FIG. 8a(2) within the duration 2; and after the screen is unlocked, the display interface of the mobile phone may change from the lock screen interface 400 shown in FIG. 8a(1) to the display interface 407 shown in FIG. 8a(3) within the duration 1. For example, after the subject image 301a shown in FIG. 8a(1) is scaled up to twice the subject image 301a and is moved down from an original location by a height of four pixels, a subject image 301a on the display interface 407 shown in FIG. 8a(2) is obtained; and after the background image 301c shown in FIG. 8a(1) is scaled down to 1/4 of the background image 301c and is moved down from an original location by a height of four pixels, a background image 301c on the display interface 407 shown in FIG. 8a(2) is obtained. The original location is a location of a corresponding subject image or background image in the lock screen wallpaper 401 shown in FIG. 8a(1).

In a process in which the display interface of the mobile phone gradually changes from the lock screen interface 400 shown in FIG. 8a(1) to the display interface 407 shown in FIG. 8a(3), the mobile phone may simultaneously display the three notification messages within the duration 2, where the three notification messages are a notification message 403, a notification message 404, and a notification message 405 herein; and gradually scale up and move down the subject image 301a in the lock screen wallpaper 401 and gradually scale down and move down the background image 301c within the duration 1 based on the motion effect 1. In a lock screen wallpaper 401 shown in FIG. 8a(3), a subject image 301a is scaled up to four times the subject image shown in FIG. 8a(1), a background image 301c is scaled down to 1/4 of the background image 301c shown in FIG. 8a(1), and both the subject image 301a and the background image 301c are moved down from display locations shown in FIG. 8a(1) by a height of nine pixels.

In this embodiment, the duration 1 of the motion effect 2 of the three notification messages that are simultaneously displayed is less than the duration 2 of the motion effect 2 of the wallpaper adjustment process, a speed of the motion effect 2 is higher, and a speed of the motion effect 1 for displaying the wallpaper adjustment process is lower. In addition, it can be learned from a relationship between the layers shown in FIG. 7b(1) to FIG. 7b(5) that, a layer at which the notification message 403 to the notification message 405 shown in FIG. 8a(1) to FIG. 8a(3) and related to the message control 402 are located is above the background image 301d and is below the background image 301c, to be specific, is between a sky element and a mountain element. In this way, in the wallpaper adjustment process, effect of a notification message gradually appearing from behind the background image 301c (corresponding to the mountain element) is presented, as shown in FIG. 8a(2) and FIG. 8a(3).

In the wallpaper adjustment process in this embodiment of this application, a manner of adjusting a wallpaper element in the lock screen wallpaper includes: scaling up and moving down a subject element, scaling down and moving down the mountain element, and keeping the sky (blue sky and white cloud) element unchanged. In the lock screen wallpaper setting process shown in FIG. 7a(1) to FIG. 7a(7), the sky element is extended in a height direction, so that a height of the sky element in the background image 301d shown in FIG. 8a(1) to FIG. 8a(3) is a height h4 of the entire screen of the mobile phone. Therefore, after the mountain element and the subject element that are located at an upper layer of the sky element are moved down, the extended sky element may be exposed, without a blank region (not including any image element) between the sky element and the mountain element in an adjusted lock screen wallpaper or a blank region between the sky element and the subject element, so that a picture of the adjusted lock screen wallpaper is smoother and more coherent. In addition, the mobile phone may gradually scale down and move down, based on a quantity (3 herein) of notification messages to be displayed in an expanded manner and a control height of the notification message, the mountain element displayed in the lock screen wallpaper, to gradually display three expanded notification messages; and gradually scale up and move down the subject element displayed in the lock screen wallpaper. In this way, a plurality of notification messages can be displayed while the subject element is highlighted in the lock screen wallpaper, and the plurality of notification messages do not block the subject element, achieving effect of Hitchcock zooming.

In the embodiment of FIG. 8a(1) to FIG. 8a(3), message content is displayed in an expanded notification message, for example, the notification message 403, the notification message 404, and the notification message 405. In another embodiment, whether specific message content is displayed in an expanded notification message is not limited in this application, and specifically depends on an application or system setting.

In an application scenario 11, FIG. 8b(1) to FIG. 8b(4) are a diagram of an application scenario of the lock screen wallpaper adjustment process in FIG. 4b.

Implementation processes in FIG. 8b(1) to FIG. 8b(4) and FIG. 8a(1) to FIG. 8a(3) are mostly the same. A difference lies in: In FIG. 8b(1) to FIG. 8b(4), after a screen is unlocked, the mobile phone may expand a plurality of notification messages (three notification messages herein) in a collapsed state one by one, instead of simultaneously expanding the notification messages (also referred to as expanding the notification messages at a time), as shown in FIG. 8a(1) to FIG. 8a(3). A process of expanding the three notification messages one by one may be implemented by playing motion effect 3. Duration of the motion effect 3 may be the same as the duration 1 of the motion effect 1 corresponding to the wallpaper adjustment process. To be specific, after the screen is unlocked, the mobile phone may display the three notification messages on the lock screen interface in an expanded manner one by one within the duration 1 through the motion effect 3; and scale up, within the duration 1 through the motion effect 1, a subject image 301a to four times a subject image 301a (that is, a subject image 301a shown in FIG. 8b(1)) that exists before the screen is unlocked, scale down a background image 301c to 1/4 of a background image 301c (that is, a background image 301c shown in FIG. 8b(1)) that exists before the screen is unlocked, and move down, by a height of nine pixels, both the subject image 301a and the background image 301c from corresponding original locations used before the screen is unlocked. In this way, when a last notification message is displayed on the lock screen interface, corresponding adjustment of a lock screen wallpaper 401 is also completed, so that a notification message expanding process is synchronous with a lock screen wallpaper adjustment process, and change speeds of the two processes match.

The following describes the process with reference to FIG. 8b(1) to FIG. 8b(4). Similarities with FIG. 8a(1) to FIG. 8a(3) are not described herein again.

As shown in FIG. 8b(1), a lock screen interface 400 of the mobile phone is the same as the lock screen interface 400 shown in FIG. 8a(1). For details, refer to the descriptions of FIG. 8a(1). Details are not described herein again. When the mobile phone displays the lock screen interface 400 shown in FIG. 8b(1), the mobile phone receives a face-based unlock input. In response to the input, the mobile phone may unlock the screen and determine that a quantity of to-be-displayed notification messages is three notification messages indicated by a message control 402, to determine that a first adjustment parameter for current lock screen wallpaper adjustment specifically includes: scaling up a subject image 301a in a lock screen wallpaper 401 shown in FIG. 8b(1) to four times an original image (that is, the subject image 301a shown in FIG. 8b(1)), scaling down a background image 301c to 1/4 of an original image (that is, the background image 301c shown in FIG. 8b(1)), moving down both the subject image 301a and the background image 301c from respective original locations by a height of nine pixels, and keeping a background image 301d unchanged. An original location of the subject image 301a described in the application scenario 11 is a display location, in the lock screen wallpaper 401, of the subject image 301a shown in FIG. 8b(1). An original location of the background image 301c described in the application scenario 11 is a display location, in the lock screen wallpaper 401, of the background image 301c shown in FIG. 8b(1).

Then the mobile phone may display the three to-be-displayed notification messages one by one in response to the face-based unlock input, and gradually adjust, based on the first adjustment parameter, the lock screen wallpaper 401 shown in FIG. 8b(1). In this way, a display interface of the mobile phone can gradually change from the lock screen interface 400 shown in FIG. 8b(1) to a display interface 407 shown in FIG. 8b(2), then gradually change from the display interface 407 shown in FIG. 8b(2) to a display interface 407 shown in FIG. 8b(3), and finally gradually change from the display interface 407 shown in FIG. 8b(3) to a display interface 407 shown in FIG. 8b(4).

A process of the display interface of the mobile phone changing from FIG. 8b(1) to FIG. 8b(2) is as follows:
The mobile phone may display a notification message 403 on the display interface 407 shown in FIG. 8b(2).

In addition, the mobile phone may scale up the subject image 301a shown in FIG. 8b(1) to twice the original image (that is, the subject image 301a shown in FIG. 8b(1)), and move down the subject image 301a from the corresponding original location by a height of three pixels, to display a subject image 301a on the display interface 407 shown in FIG. 8b(2).

In addition, the mobile phone may scale down the background image 301c shown in FIG. 8b(1) to 1/2 of the original image (that is, the background image 301c shown in FIG. 8b(1)), and move down the background image 301c from the original location by a height of three pixels, to display a background image 301c on the display interface 407 shown in FIG. 8b(2).

In this way, when the display interface of the mobile phone changes from the lock screen interface 400 shown in FIG. 8b(1) to the display interface 407 shown in FIG. 8b(2), the notification message 403 can gradually appear from behind a mountain element corresponding to the background image 301c in the lock screen wallpaper 401, without blocking a subject element in the subject image 301a.

A process of the display interface of the mobile phone changing from FIG. 8b(2) to FIG. 8b(3) is as follows:
The mobile phone may newly display a notification message 404 on the display interface 407 shown in FIG. 8b(3).

In addition, the mobile phone may continue to scale up the subject image 301a shown in FIG. 8b(1) to three times the original image (that is, the subject image 301a shown in FIG. 8b(1)), and continue to move down the subject image 301a from the corresponding original location, for example, by a height of three pixels, to display a subject image 301a on the display interface 407 shown in FIG. 8b(3).

In addition, the mobile phone may continue to scale down the background image 301c shown in FIG. 8b(1) to 1/3 of the original image (that is, the background image 301c shown in FIG. 8b(1)), and continue to move down the background image 301c from the original location, for example, by a height of three pixels, to display a background image 301c on the display interface 407 shown in FIG. 8b(3).

In this way, when the display interface of the mobile phone changes from the lock screen interface 400 shown in FIG. 8b(2) to the display interface 407 shown in FIG. 8b(3), the second notification message 404 can gradually appear from behind the mountain element corresponding to the background image 301c in the lock screen wallpaper 401, without blocking the subject element in the subject image 301a.

A process of the display interface of the mobile phone changing from FIG. 8b(3) to FIG. 8b(4) is as follows:
The mobile phone may newly display a notification message 405 on the display interface 407 shown in FIG. 8b(4).

In addition, the mobile phone may continue to scale up the subject image 301a shown in FIG. 8b(1) to four times the original image (that is, the subject image 301a shown in FIG. 8b(1)), and continue to move down the subject image 301a from the corresponding original location, for example, by a height of three pixels, so that the subject image 301a is moved down by a total height of nine pixels, to display a subject image 301a on the display interface 407 shown in FIG. 8b(3).

In addition, the mobile phone may continue to scale down the background image 301c shown in FIG. 8b(1) to 1/4 of the original image (that is, the background image 301c shown in FIG. 8b(1)), and continue to move down the background image 301c from the original location, for example, by a height of three pixels, to display a background image 301c on the display interface 407 shown in FIG. 8b(4).

In this way, when the display interface of the mobile phone changes from the lock screen interface 400 shown in FIG. 8b(3) to the display interface 407 shown in FIG. 8b(4), the third notification message 405 can gradually appear from behind the mountain element corresponding to the background image 301c in the lock screen wallpaper 401, without blocking the subject element in the subject image 301a.

It should be understood that a process of the display interface of the mobile phone changing from the lock screen interface 400 shown in FIG. 8b(1) to the display interface 407 shown in FIG. 8b(4) is a change process in which wallpaper adjustment is performed based on the first adjustment parameter: scaling up the subject image 301a by four times, scaling down the background image 301c to 1/4 of the original image, and moving down the subject image 301a and the background image 301c from corresponding original locations of the original images by a height of nine pixels. The lock screen wallpaper 401 in the process is not limited to a picture of a lock screen wallpaper 401 shown in FIG. 8b(2) or FIG. 8b(3), and may alternatively include another display picture related to the lock screen wallpaper 401.

In some embodiments, the duration 1 of the motion effect 1 used in the process of the display interface of the mobile phone changing from the lock screen interface 400 shown in FIG. 8b(1) to the display interface 407 shown in FIG. 8b(4) may be the same as duration of displaying the three notification messages through the motion effect 3. In this way, in a process of displaying the notification messages one by one, the mobile phone may synchronously adjust a wallpaper element, to ensure that the subject element is not blocked by an expanded notification message.

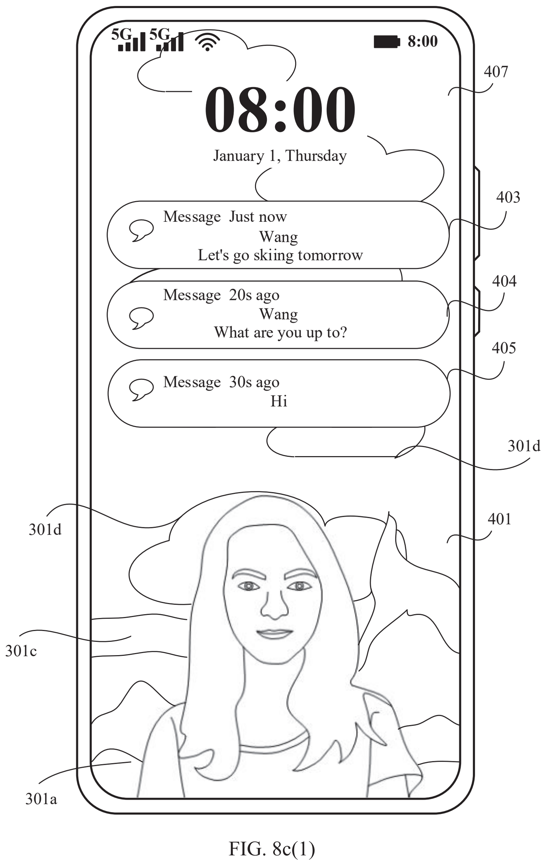

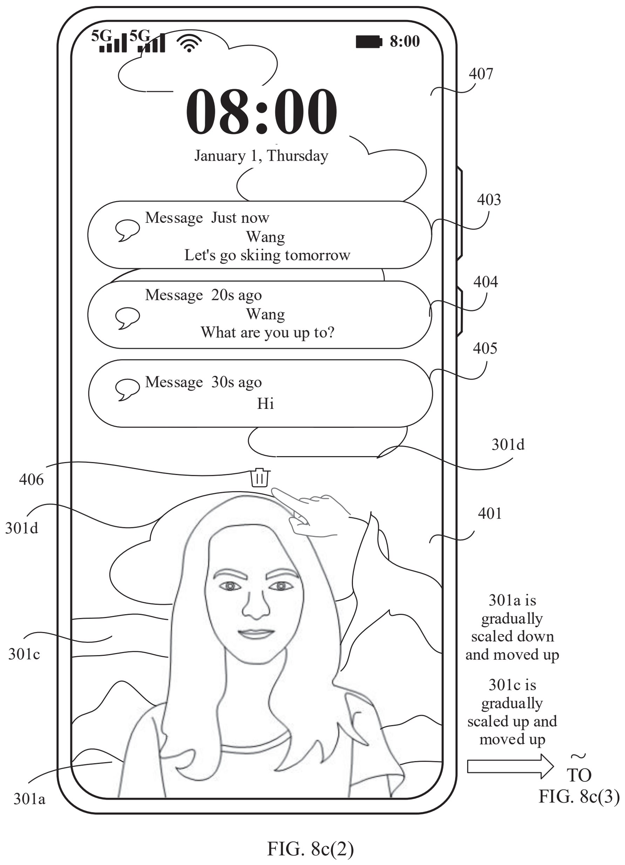

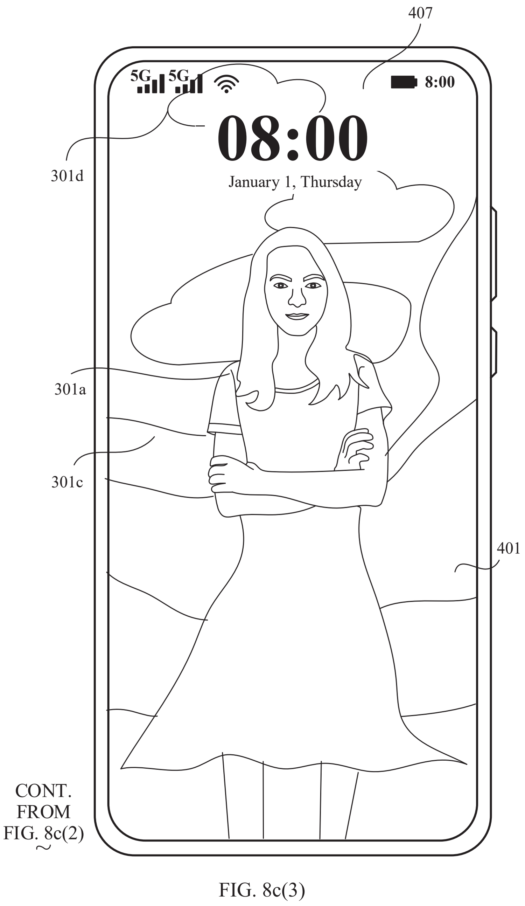

In an application scenario 12, FIG. 8c(1) to FIG. 8c(3) are a diagram of an application scenario of the lock screen wallpaper adjustment process in FIG. 4c.

A principle of the process shown in FIG. 8c(1) to FIG. 8c(3) is basically the same as that of the process shown in FIG. 6e(1) to FIG. 6e(6). A difference lies in: In FIG. 8c(1) to FIG. 8c(3), a quantity of dynamic UI controls (notification messages are used as an example herein) to be deleted at a time is greater than 1. However, in FIG. 6e(1) to FIG. 6e(6), a quantity of dynamic UI controls to be deleted each time is 1.

Refer to FIG. 8c(1) to FIG. 8c(3). A display interface 407 shown in FIG. 8c(1) is the same as the display interface 407 shown in FIG. 8b(4). Details are not described herein again.

The mobile phone receives a speech input (for example, a batch deletion notification message) of the user, and switches a display interface of the mobile phone from the display interface 407 shown in FIG. 8c(1) to a display interface 407 shown in FIG. 8c(2), to display a delete control 406 on the display interface 407.

Refer to FIG. 7b(1) to FIG. 7b(5). The delete control 406 may be located below a first layer, for example, between the first layer and a second layer. This is not limited herein.

Then, as shown in FIG. 8c(2), the user taps the delete control 406. In response to the user operation, the mobile phone may gradually change the display interface of the mobile phone from the display interface 407 shown in FIG. 8c(2) to a display interface 407 shown in FIG. 8c(3). During the change process, the mobile phone may cancel displaying three displayed notification messages (a notification message 403 to a notification message 405), and gradually change, through motion effect, a lock screen wallpaper 401 from a lock screen wallpaper 401 shown in FIG. 8c(2) to a lock screen wallpaper 401 shown in FIG. 8c(3).

It should be understood that an input operation indicating to batch-delete a plurality of notification messages displayed on the lock screen interface is not limited to the speech input, and may alternatively be a button-based input, a touch input, or the like. This is not limited herein.

In FIG. 8c(1) to FIG. 8c(3), the mobile phone determines that a quantity of notification messages to be canceled from being displayed is 3. The mobile phone may determine, based on the quantity and a control height of the notification message, that a second adjustment parameter for current lock screen wallpaper adjustment specifically includes: scaling down a subject image 301a in the lock screen wallpaper 401 shown in FIG. 8c(2) to 1/4 of an original image (that is, the subject image 301a shown in FIG. 8c(2)), scaling up a background image 301c in the lock screen wallpaper 401 shown in FIG. 8c(2) to four times an original image (that is, the background image 301c shown in FIG. 8c(2)), moving up both the subject image 301a and the background image 301c from respective original locations by a height of nine pixels, and keeping a background image 301d unchanged.

An original location of the subject image 301a described in the application scenario 12 is a display location, in the lock screen wallpaper 401, of the subject image 301a shown in FIG. 8c(1) or FIG. 8c(2). An original location of the background image 301c described in the application scenario 12 is a display location, in the lock screen wallpaper 401, of the background image 301c shown in FIG. 8c(1) or FIG. 8c(2).

Then the mobile phone may dynamically adjust, based on the second adjustment parameter, the lock screen wallpaper 401 shown in FIG. 8c(2), and display the adjustment process through motion effect. In this way, the subject image 301a in the lock screen wallpaper 401 shown in FIG. 8c(2) can be gradually scaled down and moved up to display a subject image 301a shown in FIG. 8c(3) and the background image 301c in the lock screen wallpaper 401 shown in FIG. 8c(2) can be gradually scaled up and moved up to display a background image 301c shown in FIG. 8c(3).

In this way, in a scenario in which notification messages are to be batch-deleted, the lock screen wallpaper can also be dynamically adjusted in this application, to ensure that an adjusted lock screen wallpaper can be restored to a display state that exists before the notification messages are displayed.

### Example 4

In the embodiments of all of the foregoing application scenarios, a subject element in a lock screen wallpaper extends from a region near a center of a screen of a mobile phone to a bottom edge of the screen. For example, a subject element in the subject image 301a shown in FIG. 8c(3) is a person, and the person extends downward from head to foot, to be specific, extends from a center region of the screen to the bottom of the screen. In this case, a part, to which a user pays attention, of the subject element is the head. Therefore, to highlight and prevent a dynamic UI control from blocking a key part (the head of the person herein) of the subject element, a wallpaper adjustment manner used includes moving down (to be specific, toward the bottom of the screen) a wallpaper element, for example, the subject element, to ensure that a notification message extending downward from the top of the screen does not block the subject element when displayed on a lock screen interface.

In this embodiment, the mobile phone may further adjust the wallpaper for a subject element (for example, a balloon, a hot air balloon, or a kite) that extends from a region near the center of the screen to a top edge of the screen, to ensure that a pop-up dynamic UI control does not block the subject element.

Specifically, to ensure that a notification message displayed on the lock screen interface does not block the foregoing type of subject element on the lock screen interface, in this embodiment, the mobile phone may display the notification message in a direction from the bottom edge of the screen to the top (the top of the screen), to be specific, display the notification message in a manner of pop-up from bottom to top; and the mobile phone may perform a wallpaper adjustment operation, for example, move-up (moving to the top of the screen), on the subject element, to ensure that the notification message displayed on the lock screen interface does not block the subject element. Certainly, similarly, the solution in Example 4 may be combined with the implementations and the application scenarios mentioned in Example 1 to Example 3, to ensure that a dynamic UI control displayed on the lock screen interface does not block the subject element. For example, Example 4 may be combined with a wallpaper extension solution.

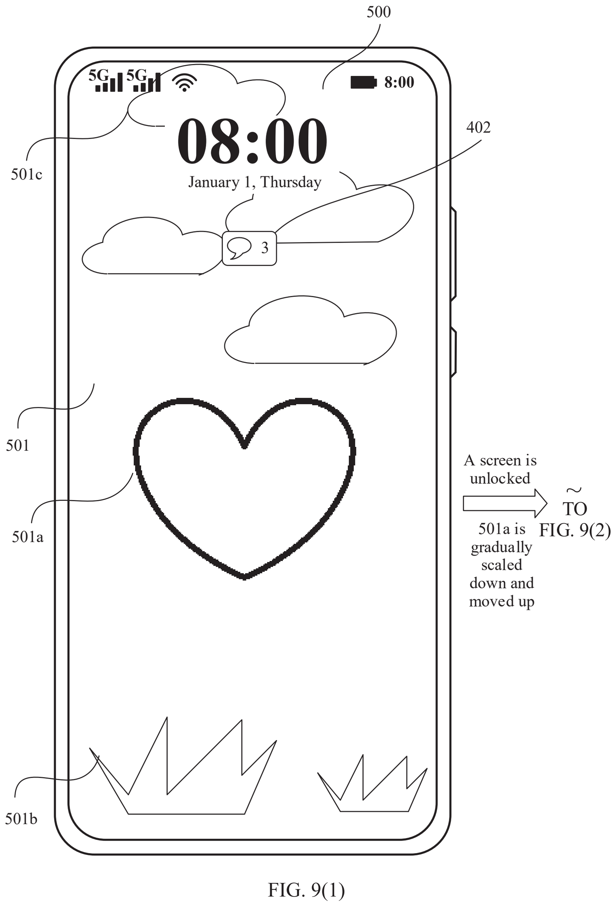

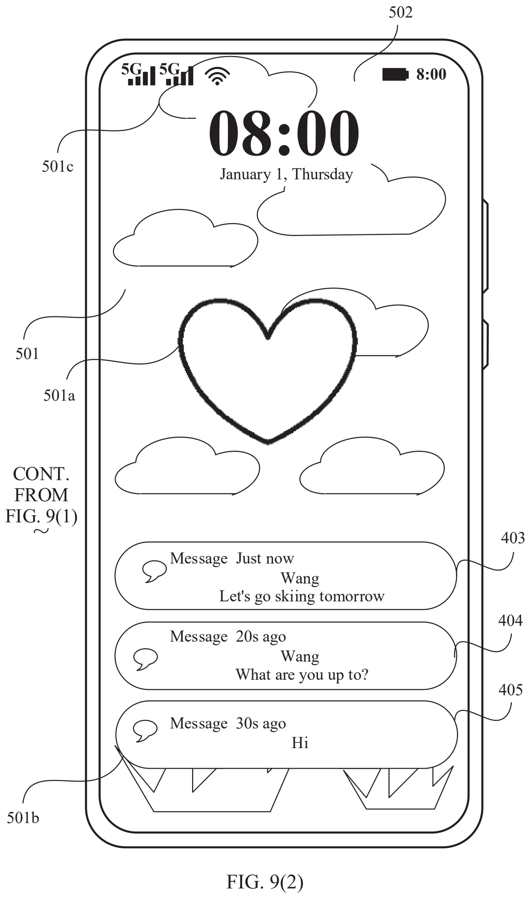

For Example 4, FIG. 9(1) and FIG. 9(2) are a diagram of an example application scenario.

As shown in FIG. 9(1), a lock screen interface 500 of the mobile phone includes a lock screen wallpaper 501, a message control 402, and the like. The lock screen wallpaper 501 may include a subject image 501a, a background image 501b, and a background image 501c. A subject element in the subject image 501a is a heart-shaped balloon, a background element in the background image 501b is grass, and a background element in the background image 501c is a sky (for example, a blue sky and a white cloud).

A principle of a process of setting the lock screen wallpaper 501 by the mobile phone is the same as principles of the embodiments of FIG. 7a(1) to FIG. 7c. Details are not described herein again.

When the mobile phone sets the lock screen wallpaper 501, the background element in the background image 501c is extended inward, and a height of an extended background element is, for example, a height of the screen of the mobile phone.

When the mobile phone displays the lock screen interface 500 shown in FIG. 9(1), the mobile phone receives a face-based unlock input of the user. In response to the input, the mobile phone may unlock the screen, determine that a quantity of to-be-displayed notification messages is 3, and determine that an adjustment parameter for the lock screen wallpaper 501 includes: scaling down and moving up the subject image 501a, where a scale-down multiple and a move-up height of the subject image 501a are positively correlated with the quantity of notification messages and a control height of the notification message. The scale-down multiple is a scale-down multiple relative to the subject image 301a shown in FIG. 9(1), for example, 2/3 herein. The move-up height is moving up from an original location by a height of 10 pixels, where the original location is a display location of the subject image 301a in FIG. 9(1).

Then the mobile phone may gradually scale down and move up the subject image 501a shown in FIG. 9(1) based on the adjustment parameter, and expand the three notification messages from the bottom of the screen to the top at a time, where the three notification messages herein are a notification message 403 to a notification message 405 herein, to gradually change a display interface of the mobile phone from the lock screen interface 500 shown in FIG. 9(1) to a display interface 502 shown in FIG. 9(2).

In this way, the mobile phone can gradually scale down the subject image 501a in the lock screen wallpaper 501 shown in FIG. 9(1) until the subject image 501a is scaled down to 2/3 of an original image, and gradually move up the subject image 501a until the subject image 501a is moved up from a corresponding original location by a height of 10 pixels, to display a lock screen wallpaper 501 shown in FIG. 9(2).

In this way, the mobile phone can further adjust the wallpaper for a subject element (for example, a balloon, a hot air balloon, or a kite) that extends from a region near the center of the screen to the top edge of the screen, to ensure that a pop-up dynamic UI control does not block the subject element.

### Example 5

In Example 1 to Example 4, an example in which a mobile phone is a non-foldable mobile phone is used to describe a process of adjusting a lock screen wallpaper of the mobile phone, to ensure that a dynamic UI control displayed on a lock screen interface does not block a subject element in the lock screen wallpaper. In Example 5, the manner and the process of adjusting the lock screen wallpaper by the mobile phone in Example 1 to Example 4 may be further applied to an application scenario in which a mobile phone screen of a foldable mobile phone is folded or unfolded. In this way, when a display of the foldable mobile phone is adjusted to a folded state or an unfolded state, the mobile phone may adjust a lock screen wallpaper displayed on the display according to the process in any one of the embodiments described in Example 1 to Example 4. In this way, a subject element in an adjusted lock screen wallpaper is not folded by a dynamic UI control displayed on a lock screen interface, and the adjusted lock screen wallpaper can match a status (the folded state or the unfolded state) of the display of the foldable mobile phone, to improve display effect of the lock screen wallpaper.

A difference from the non-foldable mobile phone lies in: After the display of the foldable mobile phone switches from the folded state (which may be described as a folded screen) to the unfolded state (which may be described as an unfolded screen), a display area of the display of the foldable mobile phone is larger. In this case, when adjusting the lock screen wallpaper, the mobile phone may extend a background image in the lock screen wallpaper in a width direction of the screen and/or a height direction of the screen, so that the background image in the lock screen wallpaper displayed on the lock screen interface of the mobile phone includes more abundant background elements when the display is in the unfolded state; and optionally, may scale up a subject image and scale down the background image based on a proportional relationship between the folded screen and the unfolded screen of the mobile phone. Similarly, after the display of the foldable mobile phone switches from the folded state to the folded state, the display area of the display of the foldable mobile phone is reduced. In this case, when adjusting the lock screen wallpaper, the mobile phone may scale up the background image in the lock screen wallpaper and scale down the subject image based on the proportional relationship between the folded screen and the unfolded screen of the mobile phone, so that a dynamic UI control displayed on the lock screen interface of the mobile phone does not block a subject element in the subject image when the display is in the folded state.

Certainly, in some embodiments, when the display of the foldable mobile phone switches between the folded state and the unfolded state and a quantity of dynamic UI controls displayed on the display of the mobile phone remains unchanged, the mobile phone may alternatively control the subject image in the lock screen wallpaper to remain unchanged, and perform, based on the proportional relationship between the folded screen and the unfolded screen of the mobile phone, at least one of the following wallpaper adjustment operations only on the background image: extending, scaling, moving, and the like. In this way, when the display of the foldable mobile phone switches between the folded state and the unfolded state, it can be ensured that a dynamic UI control displayed on the foldable mobile phone does not block the subject element in the lock screen wallpaper, and a background element in the lock screen wallpaper can correspondingly change with an increase or a decrease in a size of the display.

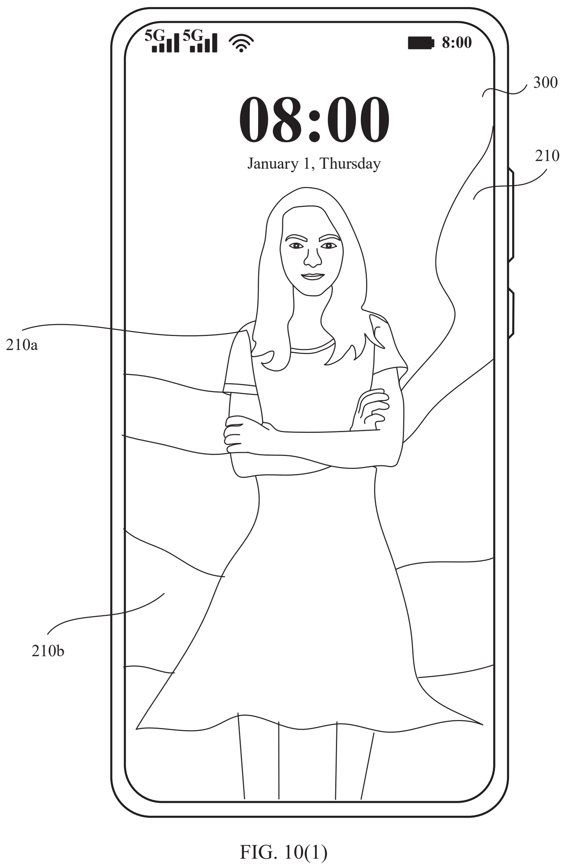

FIG. 10(1) to FIG. 10(3) are a diagram of an example application scenario. A mobile phone shown in FIG. 10(1) to FIG. 10(3) is a foldable mobile phone.

Refer to FIG. 10(1) to FIG. 10(3). A lock screen wallpaper 210 is displayed on a lock screen interface 300 shown in FIG. 10(1). An original image corresponding to the lock screen wallpaper 210 is the photo 202 shown in FIG. 5a(1) to FIG. 5a(6). The photo 202 is processed through the processing processes shown in FIG. 5b to FIG. 5d, to obtain the lock screen wallpaper 210 shown in FIG. 10(1).

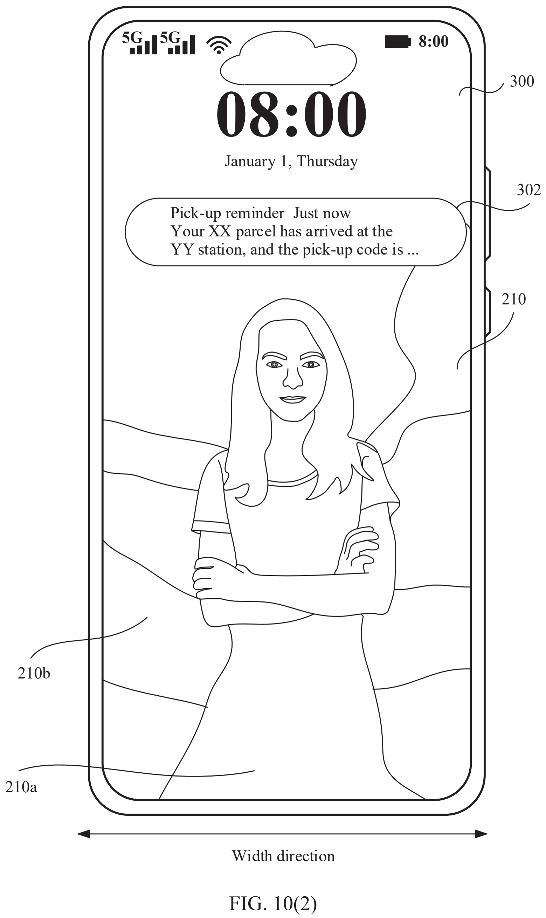

A display of the mobile phone shown in FIG. 10(1) is in a folded state. After the mobile phone receives a notification message, the mobile phone may switch a display interface from the lock screen interface 300 shown in FIG. 10(1) to a lock screen interface 300 shown in FIG. 10(2). A process of the mobile phone changing from FIG. 10(1) to the lock screen interface 300 shown in FIG. 10(2) is the same as the process of the mobile phone changing from FIG. 6c(1) to the lock screen interface 300 shown in FIG. 6c(2) in the embodiment of FIG. 6c(1) to FIG. 6c(4). During the process, a process of adjusting the lock screen wallpaper 210 by the mobile phone is specifically: based on a control height of a notification message 302, scaling up a subject image 210a by a corresponding multiple, scaling down a background image 201b by a corresponding multiple, and moving down both the subject image 210a and the background image 210b by a corresponding same height. For a specific process, refer to related descriptions in the embodiment of FIG. 6c(1) to FIG. 6c(4). Details are not described herein again.

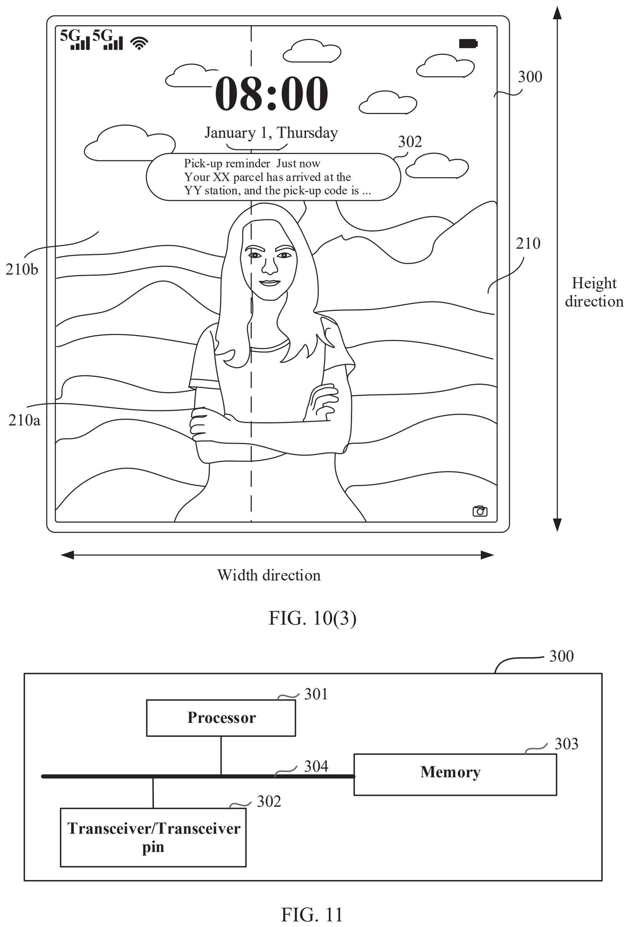

Then, still refer to FIG. 10(1) to FIG. 10(3). After the mobile phone displays the lock screen interface 300 shown in FIG. 10(2), a user performs an unfolding operation on the display of the mobile phone. Therefore, in response to the user operation, the mobile phone may unfold the mobile phone shown in FIG. 10(2) to a mobile phone shown in FIG. 10(3). A display of the mobile phone shown in FIG. 10(3) is in an unfolded state, and a dashed line on the display of the mobile phone is a folding location at which a folding operation is to be performed on the display of the mobile phone, or an unfolding location at which an unfolding operation is to be performed.

In comparison with FIG. 10(2), as shown in FIG. 10(3), in response to the unfolding operation of the user for the mobile phone, based on a proportional relationship between a folded screen and an unfolded screen of the mobile phone, the mobile phone may scale up a subject image 210a in a lock screen wallpaper 210 shown in FIG. 10(2), scale down a background image 210b, and extend the background image 210b in a height direction of a screen that is indicated by double arrows. In comparison with an image picture of the lock screen wallpaper 210 shown in FIG. 5d, in a lock screen wallpaper 210 shown in FIG. 10(3), a sky element in a background image 210b is extended upward in the height direction (optionally, the sky element may be further extended leftward and rightward in a width direction), and a mountain element in the background image 210b is also extended downward in the height direction (optionally, the mountain element may be further extended leftward and rightward in the width direction).

A notification message 302 shown in FIG. 10(3) is still displayed in the middle of the screen. There may be a height difference between the display location and a display location of a notification message 302 shown in FIG. 10(2), or display heights are the same. This is not limited herein.

In this way, when the display of the mobile phone switches from the folded state to the unfolded state, the mobile phone may separately adjust the subject image and the background image in the lock screen wallpaper based on the proportional relationship between the folded screen and the unfolded screen. Herein, the subject image is scaled up, and the background image is extended in the height direction and is scaled down, so that the subject image is still not blocked by a notification message displayed on the display in the unfolded state. In addition, the wallpaper is adjusted by scaling up the subject and scaling down the background, and the adjustment process is presented through motion effect, so that three-dimensional effect of gradually entering a picture shown in the lock screen wallpaper can be presented during unfolding of the screen of the mobile phone.

It should be understood that FIG. 10(1) to FIG. 10(3) are merely a diagram of an example application scenario of adjusting a lock screen wallpaper of a foldable mobile phone. In this application, when the foldable mobile phone switches between the folded state and the unfolded state, a manner of separately adjusting the subject image and the background image in the lock screen wallpaper is not limited to the example in FIG. 10(1) to FIG. 10(3), and may alternatively include another adjustment manner, provided that the subject image in an adjusted lock screen wallpaper is not folded by a dynamic UI control displayed on the lock screen interface, and optionally, a picture of the adjusted lock screen wallpaper better matches a current status (the folded state or the unfolded state) of the display of the mobile phone.

It should be noted that same reference signs in the accompanying drawings of the foregoing embodiments indicate a same object or objects that exist before and after corresponding processing. Therefore, the reference signs in the accompanying drawings are not described one by one. For reference signs that are not mentioned in the foregoing accompanying drawings, refer to the descriptions of the reference signs that are described in corresponding or related embodiments. Details are not described herein again.

It can be understood that, to implement the foregoing functions, an electronic device includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments. However, it should not be considered that the implementation goes beyond the scope of this application.

In an example, FIG. 11 is a block diagram of an apparatus 300 according to an embodiment of this application. The apparatus 300 may include a processor 301, and optionally, include a transceiver/transceiver pin 302, and optionally, further include a memory 303.

Components of the apparatus 300 are coupled together through a bus 304. In addition to a data bus, the bus 304 further includes a power bus, a control bus, and a status signal bus. However, for clarity of description, various buses are referred to as the bus 304 in the figure.

Optionally, the memory 303 may be configured to store instructions in the foregoing method embodiments. The processor 301 may be configured to execute the instructions in the memory 303, control a receive pin to receive a signal, and control a transmit pin to send a signal.

The apparatus 300 may be the electronic device in the foregoing method embodiments or a chip of the electronic device.

All related content of the steps in the foregoing method embodiments may be cited in function descriptions of corresponding functional modules. Details are not described herein again.

An embodiment further provides a computer storage medium. The computer storage medium stores computer instructions. When the computer instructions are run on an electronic device, the electronic device is enabled to perform the foregoing related method steps to implement the wallpaper processing method in the foregoing embodiments.

An embodiment further provides a computer program product. When the computer program product runs on a computer, the computer is enabled to perform the foregoing related steps to implement the wallpaper processing method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the wallpaper processing method in the foregoing method embodiments.

The electronic device, the computer storage medium, the computer program product, or the chip provided in embodiments is configured to perform the corresponding method provided above. Therefore, for beneficial effects that can be achieved, refer to the beneficial effects in the corresponding method provided above. Details are not described herein again.

Based on the descriptions of the foregoing implementations, a person skilled in the art may understand that, for ease and brevity of description, division into the foregoing functional modules is merely used as an example for illustration. During actual application, the foregoing functions may be allocated to different functional modules and implemented according to a requirement. In other words, an inner structure of the apparatus is divided into different functional modules to implement all or some of the functions described above.

In the several embodiments provided in this application, it should be understood that the disclosed apparatuses and methods may be implemented in other manners. For example, the described apparatus embodiments are merely examples. For example, division into the modules or the units is merely logical function division. During actual implementation, another division manner may be used. For example, a plurality of units or components may be combined or integrated into another apparatus, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts shown as units may be one or more physical units, may be located in one place, or may be distributed in different places. Some or all of the units may be selected according to actual requirements to achieve the objectives of the solutions of embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

Any content in embodiments of this application and any content in a same embodiment may be combined in any manner. Any combination of the foregoing content falls within the scope of this application.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes any medium that can store program code, for example, a USB flash drive, a removable hard disk drive, a read-only memory (read-only memory, ROM), a random access memory (random access memory, RAM), a magnetic disk, or a compact disc.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection of this application.

Methods or algorithm steps described with reference to the content disclosed in embodiments of this application may be implemented by hardware, or may be implemented by a processor executing software instructions. The software instructions may include corresponding software modules. The software modules may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk drive, a removable hard disk drive, a compact disc read-only memory (CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a network device. Certainly, the processor and the storage medium may alternatively exist in the network device as discrete components.

A person skilled in the art should be aware that, in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium. The communication medium includes any medium suitable for transmitting a computer program from one place to another. The storage medium may be any available medium accessible to a general-purpose or dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection of this application.

## Claims

1. A wallpaper processing method, applied to an electronic device, wherein the method comprises:
displaying a lock screen interface, wherein a wallpaper image is displayed on the lock screen interface, and the wallpaper image comprises a subject element; and
when a user interface UI control is displayed on the lock screen interface, adjusting a target element in the wallpaper image, and displaying an adjusted wallpaper image on the lock screen interface, wherein the target element comprises the subject element, and the subject element undergoes move-down adjustment in a height direction of the lock screen interface, to prevent the subject element in the adjusted wallpaper image from being blocked by the UI control.

2. The method according to claim 1, wherein the method further comprises:
displaying an adjustment process of the wallpaper image on the lock screen interface.

3. The method according to claim 1 or 2, wherein an adjustment policy for the wallpaper image is related to at least one of the following:
a control type of the UI control, a quantity of UI controls, and a control height of the UI control.

4. The method according to any one of claims 1 to 3, wherein adjusting the target element in the wallpaper image comprises:
scaling the subject element in the wallpaper image.

5. The method according to any one of claims 1 to 4, wherein the wallpaper image further comprises a first background element, the target element comprises the first background element, and adjustment policies for the subject element and the first background element are different.

6. The method according to claim 5, wherein adjusting the target element in the wallpaper image further comprises:
scaling the first background element in the wallpaper image; and/or
performing move-down adjustment on the first background element in the wallpaper image in the height direction of the lock screen interface.

7. The method according to claim 6, wherein a first move-down height for performing move-down adjustment on the subject element is the same as a second move-down height for performing move-down adjustment on the first background element.

8. The method according to claim 6, wherein a first move-down height for performing move-down adjustment on the subject element is different from a second move-down height for performing move-down adjustment on the first background element.

9. The method according to claim 8, wherein a height difference between the first move-down height and the second move-down height is positively correlated with a difference between depth information that is in the wallpaper image and that corresponds to the subject element and depth information that is in the wallpaper image and that corresponds to the first background element.

10. The method according to any one of claims 5 to 9, wherein
the wallpaper image further comprises a second background element of a preset type, and the second background element is pre-extended in the wallpaper image to a background element that is able to fill a size of the lock screen interface; and
the target element is different from the second background element.

11. The method according to any one of claims 5 to 9, wherein the wallpaper image further comprises a second background element of a preset type, and the target element further comprises the second background element; and
adjusting the target element in the wallpaper image further comprises:
performing image extension on the second background element in the wallpaper image, wherein
in the adjusted wallpaper image displayed on the lock screen interface, no blank location exists between the second background element and an adjacent image element.

12. The method according to claim 10 or 11, wherein when the adjustment process of the wallpaper image is displayed on the lock screen interface, the UI control blocks at least a part of the second background element, and the first background element blocks a partial region of the UI control.

13. The method according to any one of claims 1 to 12, wherein a plurality of UI controls in a collapsed state are displayed on the lock screen interface, and displaying the UI control on the lock screen interface comprises:
in response to a received first user operation, displaying the plurality of UI controls on the lock screen interface in an expanded manner, wherein
the first user operation indicates to unlock a screen on which the lock screen interface is displayed, and indicates to display the plurality of UI controls in the expanded manner.

14. The method according to any one of claims 1 to 12, wherein displaying the UI control on the lock screen interface comprises:
in response to a received notification message, displaying, on the lock screen interface, a UI control related to the notification message.

15. The method according to any one of claims 2 to 14, wherein there are a plurality of UI controls, and duration of the adjustment process is the same as duration of completely displaying the plurality of UI controls on the lock screen interface.

16. The method according to any one of claims 1 to 15, wherein after displaying the adjusted wallpaper image on the lock screen interface, the method further comprises:
in response to a received second user operation for the UI control, restoring the wallpaper image displayed on the lock screen interface to an original display state, wherein the second user operation indicates to cancel displaying the UI control on the lock screen interface, wherein
the original display state is a display state of the wallpaper image on the lock screen interface before the UI control is displayed on the lock screen interface.

17. The method according to any one of claims 1 to 16, wherein the control type of the UI control comprises at least one of the following: a message control, a live video window, and a service card.

18. An electronic device, comprising:
a first display module, configured to display a lock screen interface, wherein a wallpaper image is displayed on the lock screen interface, and the wallpaper image comprises a subject element;
a second display module, configured to display a user interface UI control on the lock screen interface;
an adjustment module, configured to adjust a target element in the wallpaper image when the second display module displays the UI control on the lock screen interface; and
a third display module, configured to display an adjusted wallpaper image on the lock screen interface, wherein the target element comprises the subject element, and the subject element undergoes move-down adjustment in a height direction of the lock screen interface, to prevent the subject element in the adjusted wallpaper image from being blocked by the UI control.

19. An electronic device, comprising a memory and a processor, wherein the memory is coupled to the processor, the memory stores program instructions, and when the program instructions are executed by the processor, the electronic device is enabled to perform the wallpaper processing method according to any one of claims 1 to 17.

20. A computer-readable storage medium, comprising a computer program, wherein when the computer program is run on an electronic device, the electronic device is enabled to perform the wallpaper processing method according to any one of claims 1 to 17.

21. A computer program product comprising instructions, wherein when the computer program product runs on a computer, the computer is enabled to perform the wallpaper processing method according to any one of claims 1 to 17.

22. A chip, comprising one or more interface circuits and one or more processors, wherein the interface circuit is configured to receive a signal from a memory of an electronic device, and send the signal to the processor; the signal comprises computer instructions stored in the memory; and when the processor executes the computer instructions, the electronic device is enabled to perform the wallpaper processing method according to any one of claims 1 to 17.
